# EUROPÄISCHE PATENTSCHRIFT

(11) **EP 2 456 840 B1**
(45) Veröffentlichungstag und Bekanntmachung des Hinweises auf die Patenterteilung: **17.07.2013**
(21) Anmeldenummer: 10724762.9
(22) Anmeldetag: 04.06.2010
(51) Int. Cl.: C09J 175/02, C08K 5/12, C09J 181/04, C09J 133/04

(54) **KLEB- UND DICHTSTOFFE ENTHALTEND CYCLOHEXANPOLYCARBONSÄURE-DERIVATE**
ADHESIVES AND SEALANTS WHICH CONTAIN CYCLOHEXANE DICARBOXYLIC ACID ESTERS
ADHÉSIFS ET PRODUITS 'ÉTANCHÉITÉ CONTENANT DES ESTERS D'ACIDES CYCLOHEXANEDICARBOXYLIQUES

(30) Priorität: 23.07.2009 EP 09166195
(43) Veröffentlichungstag der Anmeldung: 30.05.2012
(73) Patentinhaber: BASF SE, 67056 Ludwigshafen (DE)
(72) Erfinder: WAGNER, Jochen, 66957 Ruppertsweiler (DE); BREITSCHEIDEL, Boris, 67117 Limburgerhof (DE); AUSTERMANN, Tobias, 48153 Münster (DE); MACK, Helmut, 83278 Traunstein (DE)
(86) Internationale Anmeldenummer: PCT/EP2010/057812
(87) Internationale Veröffentlichungsnummer: WO 2011/009672

(56) Entgegenhaltungen:
- WO-A1-2009/068515
- WO-A1-2009/086459
- WO-A2-2005/123821
- DE-A1- 19 522 792
- DATABASE WPI Week 200581 Thomson Scientific, London, GB; AN 2005-791043 XP002597009 & JP 2005 320407 A (DAINIPPON INK & CHEM INC) 17. November 2005 (2005-11-17)

## Beschreibung

Die vorliegende Erfindung betrifft Kleb- und Dichtstoffe auf Basis von Polyurethanen, Polyharnstoffen, Polyacrylaten und Polysulfiden enthaltend Cyclohexanpolycarbonsäure-Derivate, ein Verfahren zu deren Herstellung sowie deren Verwendung.

Kleb- und Dichtstoffe auf Basis von Polyurethanen, Polyharnstoffen, Polyacrylaten und Polysulfiden weisen ein sehr breites Anwendungsspektrum auf und werden in an den jeweiligen Einsatzzweck angepassten Formulierungen eingesetzt, beispielsweise im Hoch- und Tiefbau, in der Flugzeug- oder Fahrzeugindustrie und im Schiffbau. Eine wesentliche Komponente dieser Formulierung sind in der Regel Weichmacher, welche einen Anteil von über 40% der Gesamtformulierung ausmachen können. Bei Weichmachern handelt es sich gemäß DIN 55945 um flüssige und feste indifferente organische Substanzen mit geringem Dampfdruck. Aufgrund ihres Löse- und Quellvermögens verringern sie die Härte des Polymeren, kompatibilisieren das Füllstoff/PolymerGemisch und erhöhen die Tieftemperaturelastizität. Insbesondere dienen Weichmacher in Kleb- und Dichtstoffen auch zur Erhöhung der Dehnbarkeit des erzeugten Films.

WO 2005/123821, betreffend Hilfsmittel enthaltend Cyclohexanpolycarbonsäurederivate, schlägt die Verwendung von 1,2-Cyclohexandicarbonsäureestern als Weichmacher in Klebstoffen auf Basis von Polyurethanen vor. Andere Vorschläge dieser Veröffentlichung zur Anwendung von 1,2-Cyclohexandicarbonsäureestern in Kleb- und Dichtstoffen zielen auf Schmelzklebstoffe auf Basis von Ethylen-Vinylacetat-Copolymeren, Polyamid- und Polyester-Schmelzklebstoffe und Lösemittel- oder Dispersionsklebstoffe auf Polychloropren- oder Polyurethan-Basis ab. WO 2005/123821 enthält keine konkreten Beispiele für diese Verwendungen.

DE-A 19522792 betrifft Klebebänder oder Klebefolien, deren Haftkleberbeschichtung aus Copolymerisaten aus Acrylsäureestern mit Alkoholen mit 2 bis 8 Kohlenstoffatomen und Vinylacetat oder Copolymerisaten aus Acrylsäure- und Methacrylsäure-C₂-C₈-estern und Vinylacetat oder einem weiteren Monomer besteht und die als Weichmacher einen Phthalsäureester eines Alkohols mit 2 bis 12 Kohlenstoffatomen enthalten.

Kleb- und Dichtstoffe weisen häufig das Problem einer klebrigen Oberfläche auf. Dies führt besonders bei hohen optischen Anforderungen an die Kleb- und Dichtfuge zu Problemen, da es zu einer Verschmutzung der Oberfläche kommen kann. Verringert man hingegen die Obeflächenklebrigkeit so geht dies oft mit einer hohen Glasübergangstemperatur und damit mit einer Versprödung der Kleb- und Dichtstoffe einher.

Es stellte sich somit die Aufgabe, einen Kleb- oder Dichtstoff auf Basis von Polyhamstoffen, Polyacrylaten und Polysulfiden zur Verfügung zu stellen, der im ausgehärteten Zustand eine geringe Klebrigkeit der Oberfläche und somit eine geringe Anschmutzneigung und gleichzeitig eine möglichst geringe Glasübergangstemperatur bei guter Dehnbarkeit und guter Zugfestigkeit aufweist.

Erfindungsgemäß gelöst wurde die Aufgabe durch Kleb- oder Dichtstoffe enthaltend (A) 10 bis 90 Gew.-% mindestens einer Verbindung ausgewählt aus der Gruppe der nicht-silylierten Polyharnstoffe, Polyacrylate und Polysulfide und (B) 1 bis 50 Gew.-% mindestens eines Cyclohexanpolycarbonsäure-Derivates, wobei der Kleb- oder Dichtstoff kein C₄- bis C₈-Alkylterephthalat enthält.

Überraschend wurde gefunden, dass die Cyclohexanpolycarbonsäure-Derivate in den erfindungsgemäßen Kleb- oder Dichtstoffen eine geringe Glasübergangstemperatur aufweisen, ohne dass die weiteren anwendungstechnischen Eigenschaften negativ beeinflusst werden. Überraschend zeichnen sich die erfindungsgemäßen Formulierungen weiterhin durch eine geringe Klebrigkeit im ausgehärteten Zustand und somit eine geringe Anschmutzneigung aus, sind mit den erfindungsgemäßen Bindemitteln kompatibel und kostengünstig.

Die vorliegende Erfindung betrifft somit einen Kleb- oder Dichtstoff auf Basis von Polyhamstoffen, Polyacrylaten und Polysulfiden enthaltend mindestens ein Cyclohexanpolycarbonsäure-Derivat, ein Verfahren zur Herstellung dieser Kleb- und Dichtstoffe, sowie deren Verwendung.

Bevorzugt enthält der Kleb- oder Dichtstoff als Cyclohexanpolycarbonsäure-Derivate-Ester der Formel (I), 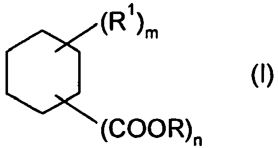 worin
- R¹: ein Substituent am gesättigten Cyclohexanring ist und für eine C₁-C₁₀-Alkyl- oder C₃-C₈-Cycloalkyl-Gruppe steht,
- m: für 0, 1, 2, 3 oder 4 steht,
- n: für 2, 3 oder 4 steht, und
- R: für eine C₁-C₃₀-Alkyl-, C₁-C₃₀-Alkoxy-, C₃-C₈-Cycloalkyl-, C₆-C₃₀-Arylphenyl- oder C₁-C₃₀ Alkyl-Cycloalkyl-Gruppe steht, wobei mindestens ein Rest R für eine C₁₋₃-C₃₀-Alkyl, C₁-C₃₀-Alkoxy- oder C₃C₈-Cycloalkyl-Gruppe, steht.

In der Formel (I) können die Reste R¹ gleich oder verschieden sein, wenn m = 2, 3 oder 4 ist. Die C₁-C₁₀-Alkylgruppen können geradkettig oder verzweigt sein. Wenn R¹ für eine Alkylgruppe steht, handelt es sich bevorzugt um eine C₁-C₈-Alkylgruppe, besonders bevorzugt um eine C₁-C₆-Alkylgruppe. Beispiele für derartige Alkylgruppen sind Methyl, Ethyl, n-Propyl, i-Propyl, n-Butyl, i-Butyl, sek.-Butyl, tert.-Butyl, n-Pentyl, n-Hexyl, n-Octyl und 2-Ethylhexyl. Bevorzugt ist m = 0.

Die Reste R können gleich oder verschieden sein. Die C₁-C₃₀-Alkylgruppen und die Alkylreste der C₁-C₃₀-Alkoxygruppen können geradkettig oder verzweigt sein. R ist bevorzugt C₁-C₃₀-Alkyl, C₁-C₂₀-Alkyl, besonders bevorzugt C₁-C₁₈-Alkyl, ganz besonders bevorzugt C₁-C₁₃-Alkyl. Beispiele für derartige Alkylgruppen sind die bereits für R¹ genannten Alkylgruppen sowie n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, und n-Eicosyl.

Bei den Alkylgruppen kann es sich jeweils um einzelne Isomere der genannten Alkylgruppen oder um Gemische verschiedener Alkylgruppen handeln. Die verschiedenen Alkylgruppen können verschiedene Isomere mit derselben Zahl von Kohlenstoffatomen sein und/oder Alkylgruppen, die eine verschiedene Anzahl von Kohlenstoffatomen aufweisen.

Bei den erfindungsgemäß verwendeten Cyclohexanpolycarbonsäure-Derivaten handelt es sich insbesondere um Mono-, Di-, Tri-, Tetraester und Anhydride der Cyclohexanpolycarbonsäuren. Bevorzugt liegen alle Carbonsäuregruppen in veresterter Form vor. Die eingesetzten Ester sind Alkyl-, Cykloalkyl- sowie Alkoxyalkylester, bevorzugt Alkylester, wobei bevorzugte Alkylgruppen R bereits vorstehend genannt sind.

Bevorzugt ist das mindestens eine Cyclohexanpolycarbonsäurederivat ausgewählt aus der Gruppe bestehend aus kernhydrierten Mono- und Dialkylestern der Phthalsäure, Isophthalsäure und Terephthalsäure, kernhydrierten Mono-, Di- und Trialkylestern der Trimellitsäure, der Trimesinsäure und der Hemimellitsäure oder Mono-, Di-, Tri- und Tetraalkylestem der Pyromellitsäure, wobei die Alkylgruppen R linear oder verzweigt sein können und jeweils 1 bis 30, bevorzugt 1 bis 20, besonders bevorzugt 1 bis 18, ganz besonders bevorzugt 1 bis 13 Kohlenstoffatome aufweisen, und Gemischen aus zwei oder mehr davon. Geeignete Alkylgruppen R sind vorstehend bereits genannt. Besonders bevorzugt sind Cyclohexan-1,2-dicarbonsäure-dialkylester.

Besonders bevorzugt sind Cyclohexan-1,4-dicarbonsäurealkylester, wie z.B. Cyclohexan-1,4-dicarbonsäuremonomethylester, Cyclohexan-1,4-dicarbonsäuredimethylester, Cyclohexan-1,4-dicarbonsäurediethylester, Cyclohexan-1,4-dicarbonsäuredi-n-propylester, Cyclohexan-1,4-dicarbonsäuredi-n-butylester, Cyclohexan-1,4-dicarbonsäuredi-tert-butylester, Cyclohexan-1,4-dicarbonsäurediisobutylester, Cyclohexan-1,4-dicarbonsäuremonoglykolester, Cyclohexan-1,4-dicarbonsäurediglykolester, Cyclohexan-1,4-dicarbonsäuredi-n-octylester, Cyclohexan-1,4-dicarbonsäurediisooctylester, Cyclohexan-1,4-dicarbonsäuremono-2-ethylhexylester, Cyclohexan-1,4-dicarbonsäuredi-2-ethylhexylester, Cyclohexan-1,4-dicarbonsäuredi-n-nonylester, Cyclohexan-1,4-dicarbonsäurediisononylester, Cyclohexan-1,4-dicarbonsäuredi-n-decylester, Cyclohexan-1,4-dicarbonsäuredi-n-undecylester, Cyclohexan-1,4-dicarbonsäurediisodecylester, Cyclohexan-1,4-dicarbonsäurediisododecylester, Cyclohexan-1,4-dicarbonsäuredi-n-octadecylester, Cyclohexan-1,4-dicarbonsäurediisooctadecylester, Cyclohexan-1,4-dicarbonsäuredi-n-eicosylester, Cyclohexan-1,4-dicarbonsäuremonocyclohexylester, Cyclohexan-1,4-dicarbonsäuredicyclohexylester;
Cyclohexan-1,4-dicarbonsäurediisopropylester, Cyclohexan-1,4-dicarbonsäuredi-n-hexylester, Cyclohexan-1,4-dicarbonsäurediisohexylester, Cyclohexan-1,4-dicarbonsäuredi-n-heptylester, Cyclohexan-1,4-dicarbonsäurediisoheptylester, Cyclohexan-1,4-dicarbonsäuredi-2-propylheptylester, Cyclohexan-1,4-dicarbonsäure-diisoundecylester, Cyclohexan-1,4-dicarbonsäuredi-n-dodecylester, Cyclohexan-1,4-dicarbonsäuredi-n-tridecylester, Cyclohexan-1,4-dicarbonsäurediisotridecylester, Cyclohexan-1,4-dicarbonsäuredi-n-pentylester, Cyclohexan-1,4-dicarbonsäurediisopentyl-ester;
Cyclohexan-1,2-dicarbonsäurediisopropylester, Cyclohexan-1,2-dicarbonsäuredi-n-hexylester, Cyclohexan-1,2-dicarbonsäurediisohexylester, Cyclohexan-1,2-dicarbon-säuredi-n-heptylester, Cyclohexan-1,2-dicarbonsäurediisoheptylester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotridecylester, Cyclohexan-1,2-dicarbonsäuredi-n-pentylester, Cyclohexan-1,2-dicarbonsäurediisopentylester,
Cyclohexan-1,2-dicarbonsäurealkylester, wie z.B. Cyclohexan-1,2-dicarbonsäuremonomethylester, Cyclohexan-1,2-dicarbonsäuredimethylester, Cyclohexan-1,2-dicarbonsäurediethylester, Cyclohexan-1,2-dicarbonsäuredi-n-propylester, Cyclohexan-1,2-dicarbonsäuredi-n-butylester, Cyclohexan-1,2-dicarbonsäuredi-tert.-butylester, Cyclohexan-1,2-dicarbonsäurediisobutylester, Cyclohexan-1,2-dicarbon-säuremonoglykolester, Cyclohexan-1,2-dicarbonsäurediglykolester, Cyclohexan-1,2-dicarbonsäuredi-n-octylester, Cyclohexan-1,2-dicarbonsäurediisooctylester, Cyclohexan-1,2-dicarbonsäuredi-2-ethylhexylester, Cyclohexan-1,2-dicarbonsäuredi-n-nonylester, Cyclohexan-1,2-dicarbonsäurediisononylester, Cyclohexan-1,2-dicarbon-säuredi-n-decylester, Cyclohexan-1,2-dicarbonsäurediisodecylester, Cyclohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan-1,2-dicarbonsäure-diisooctadecylester, Cyclohexan-1,2-dicarbonsäuredi-n-eicosylester, Cyclohexan-1,2-dicarbonsäuremonocyclohexylester, Cyclohexan-1,2-dicarbonsäuredicyclohexylester;
gemischte Ester der Cyclohexan-1,2-dicarbonsäure mit C1 bis C13-Alkoholen, wie z.B. Cyclohexan-1,2-dicarbonsäureethylmethylester, Cyclohexan-1,2-dicarbonsäure-n-propylmethylester, Cyclohexan-1,2-dicarbonsäureisopropylmethylester, Cyclohexan-1,2-dicarbonsäure-n-butylmethylester, Cyclohexan-1,2-dicarbonsäure-tert-butylmethylester, Cyclohexan-1,2-dicarbonsäureisobutylmethylester, Cyclohexan-1,2-dicarbonsäureglycolmethylester, Cyclohexan-1,2-dicarbonsäure-n-hexylmethylester, Cyclohexan-1,2-dicarbonsäureisohexylmethylester, Cyclohexan-1,2-dicarbonsäure-n-heptylmethylester, Cyclohexan-1,2-dicarbonsäureisoheptylmethylester, Cyclohexan-1,2-dicarbonsäure-n-octylmethylester, Cyclohexan-1,2-dicarbonsäureisooctylmethylester, Cyclohexan-1,2-dicarbonsäure-(2-ethylhexyl)methylester, Cyclohexan-1,2-dicarbonsäure-n-nonylmethylester, Cyclohexan-1,2-dicarbonsäureisononylmethylester, Cyclohexan-1,2-dicarbonsäure-(2-propylheptyl)methylester, Cyclohexan-1,2-dicarbonsäure-n-decylmethylester, Cyclohexan-1,2-dicarbonsäureisodecylmethylester, Cyclohexan-1,2-dicarbonsäure-n-undecylmethylester, Cyclohexan-1,2-dicarbonsäureisoundecylmethylester, Cyclohexan-1,2-dicarbonsäure-n-docecylmethylester, Cyclohexan-1,2-dicarbonsäureisododecylmethylester, Cyclohexan-1,2-dicarbonsäure-n-tridecylmethylester, Cyclohexan-1,2-dicarbonsäureisotridecylmethylester, Cyclohexan-1,2-dicarbonsäure-n-propylethylester, Cyclohexan-1,2-dicarbonsäureisopropylethylester, Cyclohexan-1,2-dicarbonsäure-n-butylethylester, Cyclohexan-1,2-dicarbonsäure-tert-butylethylester, Cyclohexan-1,2-dicarbonsäureisobutylethylester, Cyclohexan-1,2-dicarbonsäureglycolethylester, Cyclohexan-1,2-dicarbonsäure-n-hexylethylester, Cyclohexan-1,2-dicarbonsäureisohexylethylester, Cyclohexan-1,2-dicarbonsäure-n-heptylethylester, Cyclohexan-1,2-dicarbonsäureisoheptylethylester, Cyclohexan-1,2-dicarbonsäure-n-octylethylester, Cyclohexan-1,2-dicarbonsäureisooctylethylester, Cyclohexan-1,2-dicarbonsäure-(2-ethylhexyl)ethylester, Cyclohexan-1,2-dicarbonsäure-n-nonylethylester, Cyclohexan-1,2-dicarbonsäureisononylethylester, Cyclohexan-1,2-dicarbonsäure-(2-propylheptyl)ethylester, Cyclohexan-1,2-dicarbonsäure-n-decylethylester, Cydohexan-1,2-dicarbonsäureisodecylethylester, Cyclohexan-1,2-dicarbonsäure-n-undecylethylester, Cyclohexan-1,2-dicarbonsäureisoundecylethylester, Cyclohexan-1,2-dicarbonsäure-n-docecylethylester, Cyclohexan-1,2-dicarbonsäureisododecylethylester, Cyclohexan-1,2-dicarbonsäure-n-tridecylethylester, Cyclohexan-1,2-dicarbonsäureisotridecylethylester, Cyclohexan-1,2-dicarbonsäureisopropyl-n-propylester, Cyclohexan-1,2-dicarbonsäure-n-butyl-n-propylester, Cyclohexan-1,2-dicarbonsäure-tert-butyl-n-propylester, Cyclohexan-1,2-dicarbonsäureisobutyl-n-propylester, Cyclohexan-1,2-dicarbonsäureglycol-n-propylester, Cyclohexan-1,2-dicarbonsäure-n-hexyl-n-propylester, Cyclohexan-1,2-dicarbonsäureisohexyl-n-propylester, Cyclohexan-1,2-dicarbonsäure-n-heptyl-n-propylester, Cyclohexan-1,2-dicarbonsäureisoheptyl-n-propylester, Cyclohexan-1,2-dicarbonsäure-n-octyl-n-propylester, Cyclohexan-1,2-dicarbonsäureisooctyl-n-propylester, Cyclohexan-1,2-dicarbonsäure-(2-ethylhexyl)-n-propylester, Cyclohexan-1,2-dicarbonsäure-n-nonyl-n-propylester, Cyclohexan-1,2-dicarbonsäureisononyl-n-propylester, Cyclohexan-1,2-dicarbonsäure-(2-propylheptyl)-n-propylester, Cyclohexan-1,2-dicarbonsäure-n-decyl-n-propylester, Cyclohexan-1,2-dicarbonsäureisodecyl-n-propylester, Cyclohexan-1,2-dicarbonsäure-n-undecyl-n-propylester, Cyclohexan-1,2-dicarbonsäureisoundecyl-n-propylester, Cyclohexan-1,2-dicarbonsäure-n-docecyl-n-propylester, Cyclohexan-1,2-dicarbonsäureisododecyl-n-propylester, Cyclohexan-1,2-dicarbonsäure-n-tridecyl-n-propylester, Cyclohexan-1,2-dicarbonsäureisotridecyl-n-propylester, Cyclohexan-1,2-dicarbonsäure-n-butylisopropylester, Cyclohexan-1,2-dicarbonsäure-tert-butylisopropylester, Cyclohexan-1,2-dicarbonsäureisobutylisopropylester, Cyclohexan-1,2-dicarbonsäureglycolisopropylester, Cyclohexan-1,2-dicarbonsäure-n-hexylisopropylester, Cyclohexan-1,2-dicarbonsäureisohexylisopropylester, Cyclohexan-1,2-dicarbonsäure-n-heptylisopropylester, Cyclohexan-1,2-dicarbonsäureisoheptylisopropylester, Cyclohexan-1,2-dicarbonsäure-n-octylisopropylester, Cyclohexan-1,2-dicarbonsäureisooctylisopropylester, Cyclohexan-1,2-dicarbonsäure-(2-ethylhexyl)isopropylester, Cyclohexan-1,2-dicarbonsäure-n-nonylisopropylester, Cyclohexan-1,2-dicarbonsäureisononylisopropylester, Cyclohexan-1,2-dicarbonsäure-(2-propylheptyl)isopropylester, Cyclohexan-1,2-dicarbonsäuren-decylisopropylester, Cyclohexan-1,2-dicarbonsäureisodecylisopropylester, Cyclohexan-1,2-dicarbonsäure-n-undecylisopropylester, Cyclohexan-1,2-dicarbonsäureisoundecylisopropylester, Cyclohexan-1,2-dicarbonsäure-n-docecylisopropylester, Cyclohexan-1,2-dicarbonsäureisododecylisopropylester, Cyclohexan-1,2-dicarbonsäure-n-tridecylisopropylester, Cyclohexan-1,2-dicarbonsäureisotridecylisopropylester, Cyclohexan-1,2-dicarbonsäure-tert-butyl-n-butylester, Cyclohexan-1,2-dicarbonsäureisobutyl-n-butylester, Cyclohexan-1,2-dicarbonsäureglycol-n-butylester, Cyclohexan-1,2-dicarbonsäure-n-hexyl-n-butylester, Cyclohexan-1,2-dicarbonsäureisohexyl-n-butylester, Cyclohexan-1,2-dicarbonsäure-n-heptyl-n-butylester, Cyclohexan-1,2-dicarbonsäureisoheptyl-n-butylester, Cyclohexan-1,2-dicarbonsäure-n-octyl-n-butylester, Cyclohexan-1,2-dicarbonsäureisooctyl-n-butylester, Cyclohexan-1,2-dicarbonsäure-(2-ethylhexyl)-n-butylester, Cyclohexan-1,2-dicarbonsäure-n-nonyl-n-butylester, Cyclohexan-1,2-dicarbonsäureisononyl-n-butylester, Cyclohexan-1,2-dicarbonsäure-(2-propylheptyl)-n-butylester, Cyclohexan-1,2-dicarbonsäure-n-decyl-n-butylester, Cyclohexan-1,2-dicarbonsäureisodecyl-n-butylester, Cyclohexan-1,2-dicarbonsäure-n-undecyl-n-butylester, Cyclohexan-1,2-dicarbonsäureisoundecyl-n-butylester, Cyclohexan-1,2-dicarbonsäure-n-docecyl-n-butylester, Cyclohexan-1,2-dicarbonsäureisododecyl-n-butylester, Cyclohexan-1,2-dicarbonsäure-n-tridecyl-n-butylester, Cyclohexan-1,2-dicarbonsäureisotridecyl-n-butylester, Cyclohexan-1,2-dicarbonsäureisobutyl-tert-butylester, Cyclohexan-1,2-dicarbonsäureglycol-tert-butylester, Cyclohexan-1,2-dicarbonsäure-n-hexyl-tert-butylester, Cyclohexan-1,2-dicarbonsäureisohexyl-tert-butylester, Cyclohexan-1,2-dicarbonsäure-n-heptyl-tert-butylester, Cyclohexan-1,2-dicarbonsäureisoheptyl-tert-butylester, Cyclohexan-1,2-dicarbonsäure-n-octyl-tert-butylester, Cyclohexan-1,2-dicarbonsäureisooctyl-tert-butylester, Cyclohexan-1,2-dicarbonsäure-(2-ethylhexyl)-tert-butylester, Cyclohexan-1,2-dicarbonsäure-n-nonyl-tert-butylester, Cyclohexan-1,2-dicarbonsäureisononyl-tert-butylester, Cyclohexan-1,2-dicarbonsäure-(2-propylheptyl)-tert-butylester, Cyclohexan-1,2-dicarbonsäure-n-decyl-tert-butylester, Cyclohexan-1,2-dicarbonsäureisodecyl-tert-butylester, Cyclohexan-1,2-dicarbonsäure-n-undecyl-tert-butylester, Cyclohexan-1,2-dicarbonsäureisoundecyl-tert-butylester, Cyclohexan-1,2-dicarbonsäure-n-docecyl-tert-butylester, Cyclohexan-1,2-dicarbonsäureisododecyl-tert-butylester, Cyclohexan-1,2-dicarbonsäure-n-tridecyl-tert-butylester, Cyclohexan-1,2-dicarbonsäureisotridecyl-tert-butylester, Cyclohexan-1,2-dicarbonsäureglycolisobutylester, Cyclohexan-1,2-dicarbonsäure-n-hexylisobutylester, Cyclohexan-1,2-dicarbonsäureisohexylisobutylester, Cyclohexan-1,2-dicarbonsäure-n-heptylisobutylester, Cyclohexan-1,2-dicarbonsäureisoheptylisobutylester, Cyclohexan-1,2-dicarbonsäure-n-octylisobutylester, Cyclohexan-1,2-dicarbonsäureisooctylisobutylester, Cyclohexan-1,2-dicarbonsäure-(2-ethylhexyl)isobutylester, Cyclohexan-1,2-dicarbonsäure-n-nonylisobutylester, Cyclohexan-1,2-dicarbonsäureisononylisobutylester, Cyclohexan-1,2-dicarbonsäure-(2-propylheptyl)isobutylester, Cyclohexan-1,2-dicarbonsäure-n-decylisobutylester, Cyclohexan-1,2-dicarbonsäureisodecylisobutylester, Cyclohexan-1,2-dicarbonsäure-n-undecylisobutylester, Cyclohexan-1,2-dicarbonsäureisoundecylisobutylester, Cyclohexan-1,2-dicarbonsäure-n-docecylisobutylester, Cyclohexan-1,2-dicarbonsäureisododecylisobutylester, Cyclohexan-1,2-dicarbonsäure-n-tridecylisobutylester, Cyclohexan-1,2-dicarbonsäureisotridecylisobutylester, Cyclohexan-1,2-dicarbonsäure-n-hexylglycolester, Cyclohexan-1,2-dicarbonsäureisohexylglycolester, Cyclohexan-1,2-dicarbonsäure-n-heptylglycolester, Cyclohexan-1,2-dicarbonsäureisoheptylglycolester, Cyclohexan-1,2-dicarbonsäure-n-octylglycolester, Cyclohexan-1,2-dicarbonsäureisooctylglycolester, Cyclohexan-1,2-dicarbonsäure-(2-ethylhexyl)glycolester, Cyclohexan-1,2-dicarbonsäure-n-nonylglycolester, Cyclohexan-1,2-dicarbonsäureisononylglycolester, Cyclohexan-1,2-dicarbonsäure-(2-propylheptyl)glycolester, Cyclohexan-1,2-dicarbonsäure-n-decylglycolester, Cyclohexan-1,2-dicarbonsäureisodecylglycolester, Cyclohexan-1,2-dicarbonsäure-n-undecylglycolester, Cyclohexan-1,2-dicarbonsäureisoundecylglycolester, Cyclohexan-1,2-dicarbonsäure-n-docecylglycolester, Cyclohexan-1,2-dicarbonsäureisododecylglycolester, Cyclohexan-1,2-dicarbonsäure-n-tridecylglycolester, Cyclohexan-1,2-dicarbonsäureisotridecylglycolester, Cyclohexan-1,2-dicarbonsäureisohexyl-n-hexylester, Cyclohexan-1,2-dicarbonsäure-n-heptyl-n-hexylester, Cyclohexan-1,2-dicarbonsäureisoheptyl-n-hexylester, Cyclohexan-1,2-dicarbonsäure-n-octyl-n-hexylester, Cyclohexan-1,2-dicarbonsäureisooctyl-n-hexylester, Cyclohexan-1,2-dicarbonsäure-(2-ethylhexyl)-n-hexylester, Cyclohexan-1,2-dicarbonsäure-n-nonyl-n-hexylester, Cyclohexan-1,2-dicarbonsäureisononyl-n-hexylester, Cyclohexan-1,2-dicarbonsäure-(2-propylheptyl)-n-hexylester, Cyclohexan-1,2-dicarbonsäure-n-decyl-n-hexylester, Cyclohexan-1,2-dicarbonsäureisodecyl-n-hexylester, Cyclohexan-1,2-dicarbonsäure-n-undecyl-n-hexylester, Cyclohexan-1,2-dicarbonsäureisoundecyl-n-hexylester, Cyclohexan-1,2-dicarbonsäure-n-docecyl-n-hexylester, Cyclohexan-1,2-dicarbonsäureisododecyl-n-hexylester, Cyclohexan-1,2-dicarbonsäure-n-tridecyl-n-hexylester, Cyclohexan-1,2-dicarbonsäureisotridecyl-n-hexylester, Cyclohexan-1,2-dicarbonsäure-n-heptylisohexylester, Cyclohexan-1,2-dicarbonsäureisoheptylisohexylester, Cyclohexan-1,2-dicarbonsäure-n-octylisohexylester, Cyclohexan-1,2-dicarbonsäureisooctylisohexylester, Cyclohexan-1,2-dicarbonsäure-(2-ethylhexyl)isohexylester, Cyclohexan-1,2-dicarbonsäure-n-nonylisohexylester, Cyclohexan-1,2-dicarbonsäureisononylisohexylester, Cyclohexan-1,2-dicarbonsäure-(2-propylheptyl)isohexylester, Cyclohexan-1,2-dicarbonsäure-n-decylisohexylester, Cyclohexan-1,2-dicarbonsäureisodecylisohexylester, Cyclohexan-1,2-dicarbonsäure-n-undecylisohexylester, Cyclohexan-1,2-dicarbonsäureisoundecylisohexylester, Cyclohexan-1,2-dicarbonsäure-n-docecylisohexylester, Cyclohexan-1,2-dicarbonsäureisododecylisohexylester, Cyclohexan-1,2-dicarbonsäure-n-tridecylisohexylester, Cyclohexan-1,2-dicarbonsäureisotridecylisohexylester, Cyclohexan-1,2-dicarbonsäureisoheptyl-n-heptylester, Cyclohexan-1,2-dicarbonsäure-n-octyl-n-heptylester, Cyclohexan-1,2-dicarbonsäureisooctyl-n-heptylester, Cyclohexan-1,2-dicarbonsäure-(2-ethylhexyl)-n-heptylester, Cyclohexan-1,2-dicarbonsäure-n-nonyl-n-heptylester, Cyclohexan-1,2-dicarbonsäureisononyl-n-heptylester, Cyclohexan-1,2-dicarbonsäure-(2-propylheptyl)-n-heptylester, Cyclohexan-1,2-dicarbonsäure-n-decyl-n-heptylester, Cyclohexan-1,2-dicarbonsäureisodecyl-n-heptylester, Cyclohexan-1,2-dicarbonsäure-n-undecyl-n-heptylester, Cyclohexan-1,2-dicarbonsäureisoundecyl-n-heptylester, Cyclohexan-1,2-dicarbonsäure-n-docecyl-n-heptylester, Cyclohexan-1,2-dicarbonsäureisododecyl-n-heptylester, Cyclohexan-1,2-dicarbonsäure-n-tridecyl-n-heptylester, Cyclohexan-1,2-dicarbonsäureisotridecyl-n-heptylester, Cyclohexan-1,2-dicarbonsäure-n-octylisoheptylester, Cyclohexan-1,2-dicarbonsäureisooctylisoheptylester, Cyclohexan-1,2-dicarbonsäure-(2-ethylhexyl)isoheptylester, Cyclohexan-1,2-dicarbonsäure-n-nonylisoheptylester, Cyclohexan-1,2-dicarbonsäureisononylisoheptylester, Cyclohexan-1,2-dicarbonsäure-(2-propylheptyl)isoheptylester, Cyclohexan-1,2-dicarbonsäuren-decylisoheptylester, Cyclohexan-1,2-dicarbonsäureisodecylisoheptylester, Cyclohexan-1,2-dicarbonsäure-n-undecylisoheptylester, Cyclohexan-1,2-dicarbonsäureisoundecylisoheptylester, Cyclohexan-1,2-dicarbonsäure-n-docecylisoheptylester, Cyclohexan-1,2-dicarbonsäureisododecylisoheptylester, Cyclohexan-1,2-dicarbonsäure-n-tridecylisoheptylester, Cyclohexan-1,2-dicarbonsäureisotridecylisoheptylester, Cyclohexan-1,2-dicarbonsäureisooctyl-n-octylester, Cyclohexan-1,2-dicarbonsäure-(2-ethylhexyl)-n-octylester, Cyclohexan-1,2-dicarbonsäure-n-nonyl-n-octylester, Cyclohexan-1,2-dicarbonsäureisononyl-n-octylester, Cyclohexan-1,2-dicarbonsäure-(2-propylheptyl)-n-octylester, Cyclohexan-1,2-dicarbonsäure-n-decyl-n-octylester, Cyclohexan-1,2-dicarbonsäureisodecyl-n-octylester, Cyclohexan-1,2-dicarbonsäure-n-undecyl-n-octylester, Cyclohexan-1,2-dicarbonsäureisoundecyl-n-octylester, Cyclohexan-1,2-dicarbonsäure-n-docecyl-n-octylester, Cyclohexan-1,2-dicarbonsäureisododecyl-n-octylester, Cyclohexan-1,2-dicarbonsäure-n-tridecyl-n-octylester, Cyclohexan-1,2-dicarbonsäureisotridecyl-n-octylester, Cyclohexan-1,2-dicarbonsäure-(2-ethylhexyl)isooctylester, Cyclohexan-1,2-dicarbonsäure-n-nonylisooctylester, Cyclohexan-1,2-dicarbonsäureisononylisooctylester, Cyclohexan-1,2-dicarbonsäure-(2-propylheptyl)isooctylester, Cyclohexan-1,2-dicarbonsäure-n-decylisooctylester, Cyclohexan-1,2-dicarbonsäureisodecylisooctylester, Cyclohexan-1,2-dicarbonsäure-n-undecylisooctylester, Cyclohexan-1,2-dicarbonsäureisoundecylisooctylester, Cyclohexan-1,2-dicarbonsäure-n-docecylisooctylester, Cyclohexan-1,2-dicarbonsäureisododecylisooctylester, Cyclohexan-1,2-dicarbonsäure-n-tridecylisooctylester, Cyclohexan-1,2-dicarbonsäureisotridecylisooctylester, Cyclohexan-1,2-dicarbonsäure-n-nonyl-(2-ethylhexyl)ester, Cyclohexan-1,2-dicarbonsäureisononyl-(2-ethylhexyl)ester, Cyclohexan-1,2-dicarbonsäure-(2-propylheptyl)-(2-ethylhexyl)ester, Cyclohexan-1,2-dicarbonsäure-n-decyl-(2-ethylhexyl)ester, Cyclohexan-1,2-dicarbonsäureisodecyl-(2-ethylhexyl)ester, Cyclohexan-1,2-dicarbonsäure-n-undecyl-(2-ethylhexyl)ester, Cyclohexan-1,2-dicarbonsäureisoundecyl-(2-ethylhexyl)ester, Cyclohexan-1,2-dicarbonsäure-n-docecyl-(2-ethylhexyl)ester, Cyclohexan-1,2-dicarbonsäureisododecyl-(2-ethylhexyl)ester, Cyclohexan-1,2-dicarbonsäure-n-tridecyl-(2-ethylhexyl)ester, Cyclohexan-1,2-dicarbonsäureisotridecyl-(2-ethylhexyl)ester, Cyclohexan-1,2-dicarbonsäureisononyl-n-nonylester, Cyclohexan-1,2-dicarbonsäure-(2-propylheptyl)-n-nonylester, Cyclohexan-1,2-dicarbonsäure-n-decyl-n-nonylester, Cyclohexan-1,2-dicarbonsäureisodecyl-n-nonylester, Cyclohexan-1,2-dicarbonsäure-n-undecyl-n-nonylester, Cyclohexan-1,2-dicarbonsäureisoundecyl-n-nonylester, Cyclohexan-1,2-dicarbonsäure-n-docecyl-n-nonylester, Cyclohexan-1,2-dicarbonsäureisododecyl-n-nonylester, Cyclohexan-1,2-dicarbonsäure-n-tridecyl-n-nonylester, Cyclohexan-1,2-dicarbonsäureisotridecyl-n-nonylester, Cyclohexan-1,2-dicarbonsäure-(2-propylheptyl)isononylester, Cyclohexan-1,2-dicarbonsäure-n-decylisononylester, Cyclohexan-1,2-dicarbonsäureisodecylisononylester, Cyclohexan-1,2-dicarbonsäure-n-undecylisononylester, Cyclohexan-1,2-dicarbonsäureisoundecylisononylester, Cyclohexan-1,2-dicarbonsäure-n-docecylisononylester, Cyclohexan-1,2-dicarbonsäureisododecylisononylester, Cyclohexan-1,2-dicarbonsäure-n-tridecylisononytester, Cyclohexan-1,2-dicarbonsäureisotridecylisononylester, Cyclohexan-1,2-dicarbonsäure-n-decyl-(2-propylheptyl)ester, Cyclohexan-1,2-dicarbonsäureisodecyl-(2-propylheptyl)ester, Cyclohexan-1,2-dicarbonsäure-n-undecyl-(2-propylheptyl)ester, Cyclohexan-1,2-dicarbonsäureisoundecyl-(2-propylheptyl)ester, Cyclohexan-1,2-dicarbonsäure-n-docecyl-(2-propylheptyl)ester, Cyclohexan-1,2-dicarbonsäureisododecyl-(2-propylheptyl)ester, Cyclohexan-1,2-dicarbonsäure-n-tridecyl-(2-propylheptyl)ester, Cyclohexan-1,2-dicarbonsäureisotridecyl-(2-propylheptyl)ester, Cyclohexan-1,2-dicarbonsäureisodecyl-n-decylester, Cyclohexan-1,2-dicarbonsäure-n-undecyl-n-decylester, Cyclohexan-1,2-dicarbonsäureisoundecyl-n-decylester, Cyclohexan-1,2-dicarbonsäure-n-docecyl-n-decylester, Cyclohexan-1,2-dicarbonsäureisododecyl-n-decylester, Cyclohexan-1,2-dicarbonsäure-n-tridecyl-n-decylester, Cyclohexan-1,2-dicarbonsäureisotridecyl-n-decylester, Cyclohexan-1,2-dicarbonsäure-n-undecylisodecylester, Cyclohexan-1,2-dicarbonsäureisoundecylisodecylester, Cyclohexan-1,2-dicarbonsäure-n-docecylisodecylester, Cyclohexan-1,2-dicarbonsäureisododecylisodecylester, Cyclohexan-1,2-dicarbonsäure-n-tridecylisodecylester, Cyclohexan-1,2-dicarbonsäureisotridecylisodecylester, Cyclohexan-1,2-dicarbonsäureisoundecyl-n-undecylester, Cyclohexan-1,2-dicarbonsäure-n-docecyl-n-undecylester, Cyclohexan-1,2-dicarbonsäureisododecyl-n-undecylester, Cyclohexan-1,2-dicarbonsäure-n-tridecyl-n-undecylester, Cyclohexan-1,2-dicarbonsäureisotridecyl-n-undecylester, Cyclohexan-1,2-dicarbonsäure-n-docecylisoundecylester, Cyclohexan-1,2-dicarbonsäureisododecylisoundecylester, Cyclohexan-1,2-dicarbonsäure-n-tridecylisoundecylester, Cyclohexan-1,2-dicarbonsäureisotridecylisoundecylester, Cyclohexan-1,2-dicarbonsäureisododecyl-n-dodecylester, Cyclohexan-1,2-dicarbonsäuren-tridecyl-n-dodecylester, Cyclohexan-1,2-dicarbonsäureisotridecyl-n-dodecylester, Cyclohexan-1,2-dicarbonsäure-n-tridecylisododecylester, Cyclohexan-1,2-dicarbonsäureisotridecylisododecylester, Cyclohexan-1,2-dicarbonsäureisotridecyl-n-tridecylester, Cyclohexan-1,2-dicarbonsäuremethylcyclohexylester, Cyclohexan-1,2-dicarbonsäureethylcyclohexylester, Cyclohexan-1,2-dicarbonsäure-n-propylcyclohexylester, Cyclohexan-1,2-dicarbonsäureisopropylcyclohexylester, Cyclohexan-1,2-dicarbonsäure-n-butylcyclohexylester, Cyclohexan-1,2-dicarbonsäure-tert-butylcyclohexylester, Cyclohexan-1,2-dicarbonsäureisobutylcyclohexylester, Cyclohexan-1,2-dicarbonsäureglycolcyclohexytester, Cyclohexan-1,2-dicarbonsäure-n-hexylcyclohexylester, Cyclohexan-1,2-dicarbonsäureisohexylcyclohexylester, Cyclohexan-1,2-dicarbonsäure-n-heptylcyclohexylester, Cyclohexan-1,2-dicarbonsäureisoheptylcyclohexylester, Cyclohexan-1,2-dicarbonsäure-n-octylcyclohexylester, Cyclohexan-1,2-dicarbonsäureisooctylcyclohexylester, Cyclohexan-1,2-dicarbonsäure-(2-ethylhexyl)cyclohexylester, Cyclohexan-1,2-dicarbonsäure-n-nonylcyclohexylester, Cyclohexan-1,2-dicarbonsäureisononylcyclohexylester, Cyclohexan-1,2-dicarbonsäure-(2-propylheptyl)cyclohexylester, Cyclohexan-1,2-dicarbonsäuren-decylcyclohexylester, Cyclohexan-1,2-dicarbonsäureisodecylcyclohexylester, Cyclohexan-1,2-dicarbonsäure-n-undecylcyclohexylester, Cyclohexan-1,2-dicarbonsäureisoundecylcyclohexylester, Cyclohexan-1,2-dicarbonsäure-n-docecylcyclohexylester, Cyclohexan-1,2-dicarbonsäureisododecylcyclohexylester, Cyclohexan-1,2-dicarbonsäure-n-tridecylcyclohexylester, Cyclohexan-1,2-dicarbonsäureisotridecylcyclohexylester, Cyclohexan-1,2-dicarbonsäuremethylisopentylester, Cyclohexan-1,2-dicarbonsäureethylisopentylester, Cyclohexan-1,2-dicarbonsäure-n-propylisopentylester, Cyclohexan-1,2-dicarbonsäureisopropylisopentylester, Cyclohexan-1,2-dicarbonsäure-n-butylisopentylester, Cyclohexan-1,2-dicarbonsäure-tert-butylisopentylester, Cyclohexan-1,2-dicarbonsäureisobutylisopentylester, Cyclohexan-1,2-dicarbonsäureglycolisopentylester, Cyclohexan-1,2-dicarbonsäure-n-hexylisopentylester, Cyclohexan-1,2-dicarbonsäureisohexylisopentylester, Cyclohexan-1,2-dicarbonsäure-n-heptylisopentylester, Cyclohexan-1,2-dicarbonsäureisoheptylisopentylester, Cyclohexan-1,2-dicarbonsäure-n-octylisopentylester, Cyclohexan-1,2-dicarbonsäureisooctylisopentylester, Cyclohexan-1,2-dicarbonsäure-(2-ethylhexyl)isopentylester, Cyclohexan-1,2-dicarbonsäure-n-nonylisopentylester, Cyclohexan-1,2-dicarbonsäureisononylisopentylester, Cyclohexan-1,2-dicarbonsäure-(2-propylheptyl)isopentylester, Cyclohexan-1,2-dicarbonsäuren-decylisopentylester, Cyclohexan-1,2-dicarbonsäureisodecylisopentylester, Cyclohexan-1,2-dicarbonsäure-n-undecylisopentylester, Cyclohexan-1,2-dicarbonsäureisoundecylisopentylester, Cyclohexan-1,2-dicarbonsäure-n-docecylisopentylester, Cyclohexan-1,2-dicarbonsäureisododecylisopentylester, Cyclohexan-1,2-dicarbonsäure-n-tridecylisopentylester, Cyclohexan-1,2-dicarbonsäureisotridecylisopentylester, Cyclohexan-1,2-dicarbonsäuremethyl-n-pentylester, Cyclohexan-1,2-dicarbonsäureethyl-n-pentylester, Cyclohexan-1,2-dicarbonsäure-n-propyl-n-pentylester, Cyclohexan-1,2-dicarbonsäureisopropyl-n-pentylester, Cyclohexan-1,2-dicarbonsäure-n-butyl-n-pentylester, Cyclohexan-1,2-dicarbonsäure-tert-butyl-n-pentylester, Cyclohexan-1,2-dicarbonsäureisobutyl-n-pentylester, Cyclohexan-1,2-dicarbonsäureglycol-n-pentylester, Cyclohexan-1,2-dicarbonsäure-n-hexyl-n-pentylester, Cyclohexan-1,2-dicarbonsäureisohexyl-n-pentylester, Cyclohexan-1,2-dicarbonsäure-n-heptyl-n-pentylester, Cyclohexan-1,2-dicarbonsäureisoheptyl-n-pentylester, Cyclohexan-1,2-dicarbonsäure-n-octyl-n-pentylester, Cyclohexan-1,2-dicarbonsäureisooctyl-n-pentylester, Cyclohexan-1,2-dicarbonsäure-(2-ethylhexyl)-n-pentylester, Cyclohexan-1,2-dicarbonsäure-n-nonyl-n-pentylester, Cyclohexan-1,2-dicarbonsäureisononyl-n-pentylester, Cyclohexan-1,2-dicarbonsäure-(2-propylheptyl)-n-pentylester, Cyclohexan-1,2-dicarbonsäure-n-decyl-n-pentylester, Cyclohexan-1,2-dicarbonsäureisodecyl-n-pentylester, Cyclohexan-1,2-dicarbonsäure-n-undecyl-n-pentylester, Cyclohexan-1,2-dicarbonsäureisoundecyl-n-pentylester, Cyclohexan-1,2-dicarbonsäure-n-docecyl-n-pentylester, Cyclohexan-1,2-dicarbonsäureisododecyl-n-pentylester, Cyclohexan-1,2-dicarbonsäure-n-tridecyl-n-pentylester, Cyclohexan-1,2-dicarbonsäureisotridecyl-n-pentylester;
gemischte Ester der Cyclohexan-1,3-dicarbonsäure mit C1 bis C13-Alkoholen, wie z.B. Cyclohexan-1,3-dicarbonsäureethylmethylester, Cyclohexan-1,3-dicarbonsäure-n-propylmethylester, Cyclohexan-1,3-dicarbonsäureisopropylmethylester, Cyclohexan-1,3-dicarbonsäure-n-butytmethylester, Cyclohexan-1,3-dicarbonsäure-tert-butylmethylester, Cyclohexan-1,3-dicarbonsäureisobutylmethylester, Cyclohexan-1,3-dicarbonsäureglycolmethylester, Cyclohexan-1,3-dicarbonsäure-n-hexylmethylester, Cyclohexan-1,3-dicarbonsäureisohexylmethylester, Cyclohexan-1,3-dicarbonsäure-n-heptylmethylester, Cyclohexan-1,3-dicarbonsäureisoheptylmethylester, Cyclohexan-1,3-dicarbonsäure-n-octylmethylester, Cyclohexan-1,3-dicarbonsäureisooctylmethylester, Cyclohexan-1,3-dicarbonsäure-(2-ethylhexyl)methylester, Cyclohexan-1,3-dicarbonsäure-n-nonylmethylester, Cyclohexan-1,3-dicarbonsäureisononylmethylester, Cyclohexan-1,3-dicarbonsäure-(2-propylheptyl)methylester, Cyclohexan-1,3-dicarbonsäure-n-decylmethylester, Cyclohexan-1,3-dicarbonsäureisodecylmethylester, Cyclohexan-1,3-dicarbonsäure-n-undecylmethylester, Cyclohexan-1,3-dicarbonsäureisoundecylmethylester, Cyclohexan-1,3-dicarbonsäure-n-docecylmethylester, Cyclohexan-1,3-dicarbonsäureisododecylmethylester, Cyclohexan-1,3-dicarbonsäure-n-tridecyfmethylester, Cyclohexan-1,3-dicarbonsäureisotridecylmethylester, Cyclohexan-1,3-dicarbonsäure-n-propylethylester, Cyclohexan-1,3-dicarbonsäureisopropylethylester, Cyclohexan-1,3-dicarbonsäure-n-butylethylester, Cyclohexan-1,3-dicarbonsäure-tert-butylethylester, Cyclohexan-1,3-dicarbonsäureisobutylethylester, Cyclohexan-1,3-dicarbonsäureglycolethylester, Cyclohexan-1,3-dicarbonsäure-n-hexylethylester, Cyclohexan-1,3-dicarbonsäureisohexylethylester, Cyclohexan-1,3-dicarbonsäure-n-heptylethylester, Cyclohexan-1,3-dicarbonsäureisoheptylethylester, Cyclohexan-1,3-dicarbonsäure-n-octylethylester, Cyclohexan-1,3-dicarbonsäureisooctylethylester, Cyclohexan-1,3-dicarbonsäure-(2-ethylhexyl)ethylester, Cyclohexan-1,3-dicarbonsäure-n-nonylethylester, Cyclohexan-1,3-dicarbonsäureisononylethylester, Cyclohexan-1,3-dicarbonsäure-(2-propylheptyl)ethylester, Cyclohexan-1,3-dicarbonsäure-n-decylethylester, Cyclohexan-1,3-dicarbonsäureisodecylethylester, Cyclohexan-1,3-dicarbonsäure-n-undecylethylester, Cyclohexan-1,3-dicarbonsäureisoundecylethylester, Cyclohexan-1,3-dicarbonsäure-n-docecylethylester, Cyclohexan-1,3-dicarbonsäureisododecylethylester, Cyclohexan-1,3-dicarbonsäure-n-tridecylethylester, Cyclohexan-1,3-dicarbonsäureisotridecylethylester, Cyclohexan-1,3-dicarbonsäureisopropyl-n-propylester, Cyclohexan-1,3-dicarbonsäure-n-butyl-n-propylester, Cyclohexan-1,3-dicarbonsäure-tert-butyl-n-propylester, Cyclohexan-1,3-dicarbonsäureisobutyl-n-propylester, Cyclohexan-1,3-dicarbonsäureglycol-n-propylester, Cyclohexan-1,3-dicarbonsäure-n-hexyl-n-propylester, Cyclohexan-1,3-dicarbonsäureisohexyl-n-propylester, Cyclohexan-1,3-dicarbonsäure-n-heptyl-n-propylester, Cyclohexan-1,3-dicarbonsäureisoheptyl-n-propylester, Cyclohexan-1,3-dicarbonsäure-n-octyl-n-propylester, Cyclohexan-1,3-dicarbonsäureisooctyl-n-propylester, Cyclohexan-1,3-dicarbonsäure-(2-ethylhexyl)-n-propylester, Cyclohexan-1,3-dicarbonsäure-n-nonyl-n-propylester, Cyclohexan-1,3-dicarbonsäureisononyl-n-propylester, Cyclohexan-1,3-dicarbonsäure-(2-propylheptyl)-n-propylester, Cyclohexan-1,3-dicarbonsäure-n-decyl-n-propylester, Cyclohexan-1,3-dicarbonsäureisodecyl-n-propylester, Cyclohexan-1,3-dicarbonsäure-n-undecyl-n-propylester, Cyclohexan-1,3-dicarbonsäureisoundecyl-n-propylester, Cyclohexan-1,3-dicarbonsäure-n-docecyl-n-propylester, Cyclohexan-1,3-dicarbonsäureisododecyl-n-propylester, Cyclohexan-1,3-dicarbonsäure-n-tridecyl-n-propylester, Cyclohexan-1,3-dicarbonsäureisotridecyl-n-propylester, Cyclohexan-1,3-dicarbonsäure-n-butylisopropylester, Cyclohexan-1,3-dicarbonsäure-tert-butylisopropylester, Cyclohexan-1,3-dicarbonsäureisobutylisopropylester, Cyclohexan-1,3-dicarbonsäureglycolisopropylester, Cyclohexan-1,3-dicarbonsäure-n-hexylisopropylester, Cyclohexan-1,3-dicarbonsäureisohexylisopropylester, Cyclohexan-1,3-dicarbonsäure-n-heptylisopropylester, Cyclohexan-1,3-dicarbonsäureisoheptylisopropylester, Cyclohexan-1,3-dicarbonsäure-n-octylisopropylester, Cyclohexan-1,3-dicarbonsäureisooctytisopropylester, Cyclohexan-1,3-dicarbonsäure-(2-ethylhexyl)isopropylester, Cyclohexan-1,3-dicarbonsäure-n-nonylisopropylester, Cyclohexan-1,3-dicarbonsäureisononylisopropylester, Cyclohexan-1,3-dicarbonsäure-(2-propylheptyl)isopropylester, Cyclohexan-1,3-dicarbonsäuren-decylisopropylester, Cyclohexan-1,3-dicarbonsäureisodecylisopropylester, Cyclohexan-1,3-dicarbonsäure-n-undecylisopropylester, Cyclohexan-1,3-dicarbonsäureisoundecylisopropylester, Cyclohexan-1,3-dicarbonsäure-n-docecylisopropylester, Cyclohexan-1,3-dicarbonsäureisododecylisopropylester, Cyclohexan-1,3-dicarbonsäure-n-tridecylisopropylester, Cyclohexan-1,3-dicarbonsäureisotridecylisopropylester, Cyclohexan-1,3-dicarbonsäure-tert-butyl-n-butylester, Cyclohexan-1,3-dicarbonsäureisobutyl-n-butylester, Cyclohexan-1,3-dicarbonsäureglycol-n-butylester, Cyclohexan-1,3-dicarbonsäure-n-hexyl-n-butylester, Cyclohexan-1,3-dicarbonsäureisohexyl-n-butylester, Cyclohexan-1,3-dicarbonsäure-n-heptyl-n-butylester, Cyclohexän-1,3-dicarbonsäureisoheptyl-n-butylester, Cyclohexan-1,3-dicarbonsäure-n-octyl-n-butylester, Cyclohexan-1,3-dicarbonsäureisooctyl-n-butylester, Cyclohexan-1,3-dicarbonsäure-(2-ethylhexyl)-n-butylester, Cyclohexan-1,3-dicarbonsäure-n-nonyl-n-butylester, Cyclohexan-1,3-dicarbonsäureisononyl-n-butylester, Cyclohexan-1,3-dicarbonsäure-(2-propylheptyl)-n-butylester, Cyclohexan-1,3-dicarbonsäure-n-decyl-n-butylester, Cyclohexan-1,3-dicarbonsäureisodecyl-n-butylester, Cyclohexan-1,3-dicarbonsäure-n-undecyl-n-butylester, Cyclohexan-1,3-dicarbonsäureisoundecyl-n-butylester, Cyclohexan-1,3-dicarbonsäure-n-docecyl-n-butylester, Cyclohexan-1,3-dicarbonsäureisododecyl-n-butylester, Cyclohexan-1,3-dicarbonsäure-n-tridecyl-n-butylester, Cyclohexan-1,3-dicarbonsäureisotridecyl-n-butylester, Cyclohexan-1,3-dicarbonsäureisobutyl-tert-butylester, Cyclohexan-1,3-dicarbonsäureglycol-tert-butylester, Cyclohexan-1,3-dicarbonsäure-n-hexyl-tert-butylester, Cyclohexan-1,3-dicarbonsäureisohexyl-tert-butylester, Cyclohexan-1,3-dicarbonsäure-n-heptyl-tert-butylester, Cyclohexan-1,3-dicarbonsäureisoheptyl-tert-butylester, Cyclohexan-1,3-dicarbonsäure-n-octyl-tert-butylester, Cyclohexan-1,3-dicarbonsäureisooctyl-tert-butylester, Cyclohexan-1,3-dicarbonsäure-(2-ethylhexyl)-tert-butylester, Cyclohexan-1,3-dicarbonsäure-n-nonyl-tert-butylester, Cyclohexan-1,3-dicarbonsäureisononyl-tert-butylester, Cyclohexan-1,3-dicarbonsäure-(2-propylheptyl)-tert-butylester, Cyclohexan-1,3-dicarbonsäure-n-decyl-tert-butylester, Cyclohexan-1,3-dicarbonsäureisodecyl-tert-butylester, Cyclohexan-1,3-dicarbonsäure-n-undecyl-tert-butylester, Cyclohexan-1,3-dicarbonsäureisoundecyl-tert-butylester, Cyclohexan-1,3-dicarbonsäure-n-docecyl-tert-butylester, Cyclohexan-1,3-dicarbonsäureisododecyl-tert-butylester, Cyclohexan-1,3-dicarbonsäure-n-tridecyl-tert-butylester, Cyclohexan-1,3-dicarbonsäureisofidecyl-tert-butylester, Cyclohexan-1,3-dicarbonsäureglycolisobutylester, Cyclohexan-1,3-dicarbonsäure-n-hexylisobutylester, Cyclohexan-1,3-dicarbonsäureisohexylisobutylester, Cyclohexan-1,3-dicarbonsäure-n-heptylisobutylester, Cyclohexan-1,3-dicarbonsäureisoheptylisobutylester, Cyclohexan-1,3-dicarbonsäure-n-octylisobutylester, Cyclohexan-1,3-dicarbonsäureisooctylisobutylester, Cyclohexan-1,3-dicarbonsäure-(2-ethylhexyl)isobutylester, Cyclohexan-1,3-dicarbonsäure-n-nonylisobutylester, Cyclohexan-1,3-dicarbonsäureisononylisobutylester, Cyclohexan-1,3-dicarbonsäure-(2-propylheptyl)isobutylester, Cyclohexan-1,3-dicarbonsäure-n-decylisobutylester, Cyclohexan-1,3-dicarbonsäureisodecylisobutylester, Cyclohexan-1,3-dicarbonsäure-n-undecylisobutylester, Cyclohexan-1,3-dicarbonsäureisoundecylisobutylester, Cyclohexan-1,3-dicarbonsäure-n-docecylisobutylester, Cyclohexan-1,3-dicarbonsäureisododecylisobutylester, Cyclohexan-1,3-dicarbonsäure-n-tridecylisobutylester, Cyclohexan-1,3-dicarbonsäureisotridecylisobutylester, Cyclohexan-1,3-dicarbonsäure-n-hexylglycolester, Cyclohexan-1,3-dicarbonsäureisohexylglycolester, Cyclohexan-1,3-dicarbonsäure-n-heptylglycolester, Cyclohexan-1,3-dicarbonsäureisoheptylglycolester, Cyclohexan-1,3-dicarbonsäure-n-octylglycolester, Cyclohexan-1,3-dicarbonsäureisooctylglycolester, Cyclohexan-1,3-dicarbonsäure-(2-ethylhexyl)glycolester, Cyclohexan-1,3-dicarbonsäure-n-nonylglycolester, Cyclohexan-1,3-dicarbonsäureisononylglycolester, Cyclohexan-1,3-dicarbonsäure-(2-propylheptyl)glycolester, Cyclohexan-1,3-dicarbonsäure-n-decylglycolester, Cyclohexan-1,3-dicarbonsäureisodecylglycolester, Cyclohexan-1,3-dicarbonsäure-n-undecylglycolester, Cyclohexan-1,3-dicarbonsäureisoundecylglycolester, Cyclohexan-1,3-dicarbonsäure-n-docecylglycolester, Cyclohexan-1,3-dicarbonsäureisododecylglycolester, Cyclohexan-1,3-dicarbonsäure-n-tridecylglycolester, Cyclohexan-1,3-dicarbonsäureisotridecylglycolester, Cyclohexan-1,3-dicarbonsäureisohexyl-n-hexylester, Cyclohexan-1,3-dicarbonsäure-n-heptyl-n-hexylester, Cyclohexan-1,3-dicarbonsäureisoheptyl-n-hexylester, Cyclohexan-1,3-dicarbonsäure-n-octyl-n-hexylester, Cyclohexan-1,3-dicarbonsäureisooctyl-n-hexylester, Cyclohexan-1,3-dicarbonsäure-(2-ethylhexyl)-n-hexylester, Cyclohexan-1,3-dicarbonsäure-n-nonyl-n-hexylester, Cyclohexan-1,3-dicarbonsäureisononyl-n-hexylester, Cyclohexan-1,3-dicarbonsäure-(2-propylheptyl)-n-hexylester, Cyclohexan-1,3-dicarbonsäure-n-decyl-n-hexylester, Cyclohexan-1,3-dicarbonsäureisodecyl-n-hexylester, Cyclohexan-1,3-dicarbonsäure-n-undecyl-n-hexylester, Cyclohexan-1,3-dicarbonsäureisoundecyl-n-hexylester, Cyclohexan-1,3-dicarbonsäure-n-docecyl-n-hexylester, Cyclohexan-1,3-dicarbonsäureisododecyl-n-hexylester, Cyclohexan-1,3-dicarbonsäure-n-tridecyl-n-hexylester, Cyclohexan-1,3-dicarbonsäureisotridecyl-n-hexylester, Cyclohexan-1,3-dicarbonsäure-n-heptylisohexylester, Cyclohexan-1,3-dicarbonsäureisoheptylisohexylester, Cyclohexan-1,3-dicarbonsäure-n-octylisohexylester, Cyclohexan-1,3-dicarbonsäureisooctylisohexylester, Cyclohexan-1,3-dicarbonsäure-(2-ethylhexyl)isohexylester, Cyclohexan-1,3-dicarbonsäure-n-nonylisohexylester, Cyclohexan-1,3-dicarbonsäureisononylisohexylester, Cyclohexan-1,3-dicarbonsäure-(2-propylheptyl)isohexylester, Cyclohexan-1,3-dicarbonsäure-n-decylisohexylester, Cyclohexan-1,3-dicarbonsäureisodecylisohexylester, Cyclohexan-1,3-dicarbonsäure-n-undecylisohexylester, Cyclohexan-1,3-dicarbonsäureisoundecylisohexylester, Cyclohexan-1,3-dicarbonsäure-n-docecylisohexylester, Cyclohexan-1,3-dicarbonsäureisododecylisohexylester, Cyclohexan-1,3-dicarbonsäure-n-tridecylisohexylester, Cyclohexan-1,3-dicarbonsäureisotridecylisohexylester, Cyclohexan-1,3-dicarbonsäureisoheptyl-n-heptylester, Cyclohexan-1,3-dicarbonsäure-n-octyl-n-heptylester, Cyclohexan-1,3-dicarbonsäureisooctyl-n-heptylester, Cyclohexan-1,3-dicarbonsäure-(2-ethylhexyl)-n-heptylester, Cyclohexan-1,3-dicarbonsäure-n-nonyl-n-heptylester, Cyclohexan-1,3-dicarbonsäureisononyl-n-heptylester, Cyclohexan-1,3-dicarbonsäure-(2-propylheptyl)-n-heptylester, Cyclohexan-1,3-dicarbonsäure-n-decyl-n-heptylester, Cyclohexan-1,3-dicarbonsäureisodecyl-n-heptylester, Cyclohexan-1,3-dicarbonsäure-n-undecyl-n-heptylester, Cyclohexan-1,3-dicarbonsäureisoundecyl-n-heptylester, Cyclohexan-1,3-dicarbonsäure-n-docecyl-n-heptylester, Cyclohexan-1,3-dicarbonsäureisododecyl-n-heptylester, Cyclohexan-1,3-dicarbonsäure-n-tridecyl-n-heptylester, Cyclohexan-1,3-dicarbonsäureisotridecyl-n-heptylester, Cyclohexan-1,3-dicarbonsäure-n-octylisoheptylester, Cyclohexan-1,3-dicarbonsäureisooctylisoheptylester, Cyclohexan-1,3-dicarbonsäure-(2-ethylhexyl)isoheptylester, Cyclohexan-1,3-dicarbonsäure-n-nonylisoheptylester, Cyclohexan-1,3-dicarbonsäureisononylisoheptylester, Cyclohexan-1,3-dicarbonsäure-(2-propylheptyl)isoheptylester, Cyclohexan-1,3-dicarbonsäuren-decylisoheptylester, Cyclohexan-1,3-dicarbonsäureisodecylisoheptylester, Cyclohexan-1,3-dicarbonsäure-n-undecylisoheptylester, Cyclohexan-1,3-dicarbonsäureisoundecylisoheptylester, Cyclohexan-1,3-dicarbonsäure-n-docecylisoheptylester, Cyclohexan-1,3-dicarbonsäureisododecylisoheptylester, Cyclohexan-1,3-dicarbonsäure-n-tridecylisoheptylester, Cyclohexan-1,3-dicarbonsäureisotridecylisoheptylester, Cyclohexan-1,3-dicarbonsäureisooctyl-n-octylester, Cyclohexan-1,3-dicarbonsäure-(2-ethylhexyl)-n-octylester, Cyclohexan-1,3-dicarbonsäure-n-nonyl-n-octylester, Cyclohexan-1,3-dicarbonsäureisononyl-n-octylester, Cyclohexan-1,3-dicarbonsäure-(2-propylheptyl)-n-octylester, Cyclohexan-1,3-dicarbonsäure-n-decyl-n-octylester, Cyclohexan-1,3-dicarbonsäureisodecyl-n-octylester, Cyclohexan-1,3-dicarbonsäure-n-undecyl-n-octylester, Cyclohexan-1,3-dicarbonsäureisoundecyl-n-ctylester, Cyctohexan-1,3-dicarbonsäure-n-docecyl-n-octylester, Cyclohexan-1,3-dicarbonsäureisododecyl-n-octylester, Cyclohexan-1,3-dicarbonsäure-n-tridecyl-n-octylester, Cyclohexan-1,3-dicarbonsäureisotridecyl-n-octylester, Cyclohexan-1,3-dicarbonsäure-(2-ethylhexyl)isooctylester, Cyclohexan-1,3-dicarbonsäure-n-nonylisooctylester, Cyclohexan-1,3-dicarbonsäureisononylisooctylester, Cyclohexan-1,3-dicarbonsäure-(2-propylheptyl)isooctylester, Cyclohexan-1,3-dicarbonsäure-n-decylisooctylester, Cyclohexan-1,3-dicarbonsäureisodecylisooctylester, Cyclohexan-1,3-dicarbonsäure-n-undecylisooctylester, Cyclohexan-1,3-dicarbonsäureisoundecylisooctylester, Cyclohexan-1,3-dicarbonsäure-n-docecylisooctylester, Cyclohexan-1,3-dicarbonsäureisododecylisooctylester, Cyclohexan-1,3-dicarbonsäure-n-tridecylisooctylester, Cyclohexan-1,3-dicarbonsäureisotridecylisooctylester, Cyclohexan-1,3-dicarbonsäure-n-nonyl-(2-ethylhexyl)ester, Cyclohexan-1,3-dicarbonsäureisononyl-(2-ethylhexyl)ester, Cyclohexan-1,3-dicarbonsäure-(2-propylheptyl)-(2-ethylhexyl)ester, Cyclohexan-1,3-dicarbonsäure-n-decyl-(2-ethylhexyl)ester, Cyclohexan-1,3-dicarbonsäureisodecyl-(2-ethylhexyl)ester, Cyclohexan-1,3-dicarbonsäure-n-undecyl-(2-ethylhexyl)ester, Cyclohexan-1,3-dicarbonsäureisoundecyl-(2-ethylhexyl)ester, Cyclohexan-1,3-dicarbonsäure-n-docecyl-(2-ethylhexyl)ester, Cyclohexan-1,3-dicarbonsäureisododecyl-(2-ethylhexyl)ester, Cyclohexan-1,3-dicarbonsäure-n-tridecyl-(2-ethylhexyl)ester, Cyclohexan-1,3-dicarbonsäureisotridecyl-(2-ethylhexyl)ester, Cyclohexan-1,3-dicarbonsäureisononyl-n-nonylester, Cyclohexan-1,3-dicarbonsäure-(2-propylheptyl)-n-nonylester, Cyclohexan-1,3-dicarbonsäure-n-decyl-n-nonylester, Cyclohexan-1,3-dicarbonsäureisodecyl-n-nonylester, Cydohexan-1,3-dicarbonsäure-n-undecyl-n-nonylester, Cyclohexan-1,3-dicarbonsäureisoundecyl-n-nonylester, Cyclohexan-1,3-dicarbonsäure-n-docecyl-n-nonylester, Cyclohexan-1,3-dicarbonsäureisododecyl-n-nonylester, Cyclohexan-1,3-dicarbonsäure-n-thdecyl-n-nonylester, Cyclohexan-1,3-dicarbonsäureisotridecyl-n-nonylester, Cyclohexan-1,3-dicarbonsäure-(2-propylheptyl)isononylester, Cyclohexan-1,3-dicarbonsäure-n-decylisononylester, Cyclohexan-1,3-dicarbonsäureisodecylisononylester, Cyclohexan-1,3-dicarbonsäure-n-undecylisononylester, Cyclohexan-1,3-dicarbonsäureisoundecylisononylester, Cyclohexan-1,3-dicarbonsäure-n-docecylisononylester, Cyclohexan-1,3-dicarbonsäureisododecylisononylester, Cyclohexan-1,3-dicarbonsäure-n-tridecylisononylester, Cyclohexan-1,3-dicarbonsäureisotridecylisononylester, Cyclohexan-1,3-dicarbonsäure-n-decyl-(2-propylheptyl)ester, Cyclohexan-1,3-dicarbonsäureisodecyl-(2-propylheptyl)ester, Cyclohexan-1,3-dicarbonsäure-n-undecyl-(2-propylheptyl)ester, Cyclohexan-1,3-dicarbonsäureisoundecyl-(2-propylheptyl)ester, Cyclohexan-1,3-dicarbonsäure-n-docecyl-(2-propylheptyl)ester, Cyclohexan-1,3-dicarbonsäureisododecyl-(2-propylheptyl)ester, Cyclohexan-1,3-dicarbonsäure-n-tridecyl-(2-propylheptyl)ester, Cyclohexan-1,3-dicarbonsäureisotridecyl-(2-propylheptyl)ester, Cyclohexan-1,3-dicarbonsäureisodecyl-n-decylester, Cyclohexan-1,3-dicarbonsäure-n-undecyl-n-decylester, Cyclohexan-1,3-dicarbonsäureisoundecyl-n-decylester, Cyclohexan-1,3-dicarbonsäure-n-docecyl-n-decylester, Cyclohexan-1,3-dicarbonsäureisododecyl-n-decylester, Cyclohexan-1,3-dicarbonsäure-n-tridecyl-n-decylester, Cyclohexan-1,3-dicarbonsäureisotridecyl-n-decylester, Cyclohexan-1,3-dicarbonsäure-n-undecylisodecylester, Cyclohexan-1,3-dicarbonsäureisoundecylisodecylester, Cyclohexan-1,3-dicarbonsäure-n-docecylisodecylester, Cyclohexan-1,3-dicarbonsäureisododecylisodecylester, Cyclohexan-1,3-dicarbonsäure-n-tridecylisodecylester, Cyclohexan-1,3-dicarbonsäureisotridecylisodecylester, Cyclohexan-1,3-dicarbonsäureisoundecyl-n-undecylester, Cyclohexan-1,3-dicarbonsäure-n-docecyl-n-undecylester, Cyclohexan-1,3-dicarbonsäureisododecyl-n-undecylester, Cyclohexan-1,3-dicarbonsäure-n-tridecyl-n-undecylester, Cyclohexan-1,3-dicarbonsäureisotridecyl-n-undecylester, Cyclohexan-1,3-dicarbonsäure-n-docecylisoundecylester, Cyclohexan--1,3-dicarbonsäureisododecylisoundecylester, Cyclohexan-1,3-dicarbonsäure-n-tridecylisoundecylester, Cyclohexan-1,3-dicarbonsäureisotridecylisoundecylester, Cyclohexan-1,3-dicarbonsäureisododecyl-n-dodecylester, Cyclohexan-1,3-dicarbonsäuren-tridecyl-n-dodecylester, Cyclohexan-1,3-dicarbonsäureisotridecyl-n-dodecylester, Cyclohexan-1,3-dicarbonsäure-n-tridecylisododecylester, Cyclohexan-1,3-dicarbonsäureisotridecylisododecylester, Cyclohexan-1,3-dicarbonsäureisotridecyl-n-tridecylester, Cyclohexan-1,3-dicarbonsäuremethylcyclohexylester, Cyclohexan-1,3-dicarbonsäureethylcyclohexylester, Cyclohexan-1,3-dicarbonsäure-n-propylcyclohexylester, Cyclohexan-1,3-dicarbonsäureisopropylcyclohexylester, Cyclohexan-1,3-dicarbonsäure-n-butylcyclohexylester, Cyclohexan-1,3-dicarbonsäure-tert-butylcyclohexylester, Cyclohexan-1,3-dicarbonsäureisobutylcyclohexylester, Cyclohexan-1,3-dicarbonsäureglycolcyclohexylester, Cyclohexan-1,3-dicarbonsäure-n-hexylcyclohexylester, Cyclohexan-1,3-dicarbonsäureisohexylcyclohexylester, Cyclohexan-1,3-dicarbonsäure-n-heptytcyclohexylester, Cyclohexan-1,3-dicarbonsäureisoheptylcyclohexylester, Cyclohexan-1,3-dicarbonsäure-n-octylcyclohexylester, Cyclohexan-1,3-dicarbonsäureisooctylcyclohexylester, Cyclohexan-1,3-dicarbonsäure-(2-ethylhexyl)cyclohexylester, Cyclohexan-1,3-dicarbonsäure-n-nonylcyclohexylester, Cyclohexan-1,3-dicarbonsäureisononylcyclohexylester, Cyclohexan-1,3-dicarbonsäure-(2-propylheptyl)cyclohexylester, Cyclohexan-1,3-dicarbonsäuren-decylcyclohexylester, Cyclohexan-1,3-dicarbonsäureisodecylcyclohexylester, Cyclohexan-1,3-dicarbonsäure-n-undecylcyctohexylester, Cyclohexan-1,3-dicarbonsäureisoundecylcyclohexylester, Cyclohexan-1,3-dicarbonsäure-n-docecylcyclohexylester, Cyclohexan-1,3-dicarbonsäureisododecylcyclohexylester, Cyclohexan-1,3-dicarbonsäure-n-tridecylcyclohexylester, Cyclohexan-1,3-dicarbonsäureisotridecylcyclohexylester, Cyclohexan-1,3-dicarbonsäuremethylisopentylester, Cyclohexan-1,3-dicarbonsäureethylisopentylester, Cyclohexan-1,3-dicarbonsäure-n-propylisopentylester, Cyclohexan-1,3-dicarbonsäureisopropylisopentylester, Cyclohexan-1,3-dicarbonsäure-n-butylisopentylester, Cyclohexan-1,3-dicarbonsäure-tert-butylisopentylester, Cyclohexan-1,3-dicarbonsäureisobutylisopentylester, Cyclohexan-1,3-dicarbonsäureglycolisopentylester, Cyclohexan-1,3-dicarbonsäure-n-hexylisopentylester, Cyclohexan-1,3-dicarbonsäureisohexylisopentylester, Cyclohexan-1,3-dicarbonsäure-n-heptylisopentylester, Cyclohexan-1,3-dicarbonsäureisoheptylisopentylester, Cyclohexan-1,3-dicarbonsäure-n-octylisopentylester, Cyclohexan-1,3-dicarbonsäureisooctylisopentylester, Cyclohexan-1,3-dicarbonsäure-(2-ethylhexyl)isopentylester, Cyclohexan-1,3-dicarbonsäure-n-nonylisopentylester, Cyclohexan-1,3-dicarbonsäureisononylisopentylester, Cyclohexan-1,3-dicarbonsäure-(2-propylheptyl)isopentylester, Cyclohexan-1,3-dicarbonsäuren-decylisopentylester, Cyclohexan-1,3-dicarbonsäureisodecylisopentylester, Cyclohexan-1,3-dicarbonsäure-n-undecylisopentylester, Cyclohexan-1,3-dicarbonsäureisoundecylisopentylester, Cyclohexan-1,3-dicarbonsäure-n-docecylisopentylester, Cyclohexan-1,3-dicarbonsäureisododecylisopentylester, Cyclohexan-1,3-dicarbonsäure-n-tridecylisopentylester, Cyclohexan-1,3-dicarbonsäureisotridecylisopentylester, Cyclohexan-1,3-dicarbonsäuremethyl-n-pentylester, Cyclohexan-1,3-dicarbonsäureethyl-n-pentylester, Cyclohexan-1,3-dicarbonsäure-n-propyl-n-pentylester, Cyclohexan-1,3-dicarbonsäureisopropyl-n-pentylester, Cyclohexan-1,3-dicarbonsäure-n-butyl-n-pentylester, Cyclohexan-1,3-dicarbonsäure-tert-butyl-n-pentylester, Cyclohexan-1,3-dicarbonsäureisobutyl-n-pentylester, Cyclohexan-1,3-dicarbonsäureglycol-n-pentylester, Cyclohexan-1,3-dicarbonsäure-n-hexyl-n-pentylester, Cyclohexan-1,3-dicarbonsäureisohexyl-n-pentylester, Cyclohexan-1,3-dicarbonsäure-n-heptyl-n-pentylester, Cyclohexan-1,3-dicarbonsäureisoheptyl-n-pentylester, Cyclohexan-1,3-dicarbonsäure-n-octyl-n-pentylester, Cyclohexan-1,3-dicarbonsäureisooctyl-n-pentylester, Cyclohexan-1,3-dicarbonsäure-(2-ethylhexyl)-n-pentylester, Cyclohexan-1,3-dicarbonsäure-n-nonyl-n-pentylester, Cyclohexan-1,3-dicarbonsäureisononyl-n-pentylester, Cyclohexan-1,3-dicarbonsäure-(2-propylheptyl)-n-pentylester, Cyclohexan-1,3-dicarbonsäure-n-decyl-n-pentylester, Cyclohexan-1,3-dicarbonsäureisodecyl-n-pentylester, Cyclohexan-1,3-dicarbonsäure-n-undecyl-n-pentylester, Cyclohexan-1,3-dicarbonsäureisoundecyl-n-pentylester, Cyclohexan-1,3-dicarbonsäure-n-docecyl-n-pentylester, Cyclohexan-1,3-dicarbonsäureisododecyl-n-pentylester, Cyclohexan-1,3-dicarbonsäure-n-tridecyl-n-pentylester, Cyclohexan-1,3-dicarbonsäureisotridecyl-n-pentylester;
gemischte Ester der Cyclohexan-1,4-dicarbonsäure mit C1 bis C13-Alkoholen, wie z.B. Cyclohexan-1,4-dicarbonsäureethylmethylester, Cyclohexan-1,4-dicarbonsäure-n-propylmethylester, Cyclohexan-1,4-dicarbonsäureisopropylmethylester, Cyclohexan-1,4-dicarbonsäure-n-butylmethylester, Cyclohexan-1,4-dicarbonsäure-tert-butylmethylester, Cyclohexan-1,4-dicarbonsäureisobutylmethylester, Cyclohexan-1,4-dicarbonsäureglycolmethylester, Cyclohexan-1,4-dicarbonsäure-n-hexylmethylester, Cyclohexan-1,4-dicarbonsäureisohexylmethylester, Cyclohexan-1,4-dicarbonsäure-n-heptylmethylester, Cyclohexan-1,4-dicarbonsäureisoheptylmethylester, Cyclohexan-1,4-dicarbonsäure-n-octylmethylester, Cyclohexan-1,4-dicarbonsäureisooctylmethylester, Cyclohexan-1,4-dicarbonsäure-(2-ethylhexyl)methylester, Cyclohexan-1,4-dicarbonsäure-n-nonylmethylester, Cyclohexan-1,4-dicarbonsäureisononylmethylester, Cyclohexan-1,4-dicarbonsäure-(2-propylheptyl)methylester, Cyclohexan-1,4-dicarbonsäure-n-decylmethylester, Cyclohexan-1,4-dicarbonsäureisodecylmethylester, Cyclohexan-1,4-dicarbonsäure-n-undecylmethylester, Cyclohexan-1,4-dicarbonsäureisoundecylmethylester, Cyclohexan-1,4-dicarbonsäure-n-docecylmethylester, Cyclohexan-1,4-dicarbonsäureisododecylmethylester, Cyclohexan-1,4-dicarbonsäure-n-tridecylmethylester, Cyclohexan-1,4-dicarbonsäureisotridecylmethylester, Cyclohexan-1,4-dicarbonsäure-n-propylethylester, Cyclohexan-1,4-dicarbonsäureisopropylethylester, Cyclohexan-1,4-dicarbonsäure-n-butylethylester, Cyclohexan-1,4-dicarbonsäure-tert-butylethylester, Cyclohexan-1,4-dicarbonsäureisobutylethylester, Cyclohexan-1,4-dicarbonsäureglycolethylester, Cyclohexan-1,4-dicarbonsäure-n-hexylethylester, Cyclohexan-1,4-dicarbonsäureisohexylethylester, Cyclohexan-1,4-dicarbonsäure-n-heptylethylester, Cyclohexan-1,4-dicarbonsäureisoheptylethylester, Cyclohexan-1,4-dicarbonsäure-n-octylethylester, Cyclohexan-1,4-dicarbonsäureisooctylethylester, Cyclohexan-1,4-dicarbonsäure-(2-ethylhexyl)ethylester, Cyclohexan-1,4-dicarbonsäure-n-nonylethylester, Cyclohexan-1,4-dicarbonsäureisononylethylester, Cyclohexan-1,4-dicarbonsäure-(2-propylheptyl)ethylester, Cyclohexan-1,4-dicarbonsäure-n-decylethylester, Cyclohexan-1,4-dicarbonsäureisodecylethylester, Cyclohexan-1,4-dicarbonsäure-n-undecylethylester, Cyclohexan-1,4-dicarbonsäureisoundecylethylester, Cyclohexan-1,4-dicarbonsäure-n-docecylethylester, Cyclohexan-1,4-dicarbonsäureisododecylethylester, Cyclohexan-1,4-dicarbonsäure-n-tridecylethylester, Cyclohexan-1,4-dicarbonsäureisotridecylethylester, Cyclohexan-1,4-dicarbonsäureisopropyl-n-propylester, Cyclohexan-1,4-dicarbonsäure-n-butyl-n-propylester, Cyclohexan-1,4-dicarbonsäure-tert-butyl-n-propylester, Cyclohexan-1,4-dicarbonsäureisobutyl-n-propylester, Cyclohexan-1,4-dicarbonsäureglycol-n-propylester, Cyclohexan-1,4-dicarbonsäure-n-hexyl-n-propylester, Cyclohexan-1,4-dicarbonsäureisohexyl-n-propylester, Cyclohexan-1,4-dicarbonsäure-n-heptyl-n-propylester, Cyclohexan-1,4-dicarbonsäureisoheptyl-n-propylester, Cyclohexan-1,4-dicarbonsäure-n-octyl-n-propylester, Cyclohexan-1,4-dicarbonsäureisooctyl-n-propylester, Cyclohexan-1,4-dicarbonsäure-(2-ethylhexyl)-n-propylester, Cyclohexan-1,4-dicarbonsäure-n-nonyl-n-propylester, Cyclohexan-1,4-dicarbonsäureisononyl-n-propylester, Cyclohexan-1,4-dicarbonsäure-(2-propylheptyl)-n-propylester, Cyclohexan-1,4-dicarbonsäure-n-decyl-n-propylester, Cyclohexan-1,4-dicarbonsäureisodecyl-n-propylester, Cyclohexan-1,4-dicarbonsäure-n-undecyl-n-propylester, Cyclohexan-1,4-dicarbonsäureisoundecyl-n-propylester, Cyclohexan-1,4-dicarbonsäure-n-docecyl-n-propylester, Cyclohexan-1,4-dicarbonsäureisododecyl-n-propylester, Cyclohexan-1,4-dicarbonsäure-n-tridecyl-n-propylester, Cyclohexan-1,4-dicarbonsäureisotridecyl-n-propylester, Cyclohexan-1,4-dicarbonsäure-n-butylisopropylester, Cyclohexan-1,4-dicarbonsäure-tert-butylisopropylester, Cyclohexan-1,4-dicarbonsäureisobutylisopropylester, Cyclohexan-1,4-dicarbonsäureglycolisopropylester, Cyclohexan-1,4-dicarbonsäure-n-hexylisopropylester, Cyclohexan-1,4-dicarbonsäureisohexylisopropylester, Cyclohexan-1,4-dicarbonsäure-n-heptylisopropylester, Cyclohexan-1,4-dicarbonsäureisoheptylisopropylester, Cyclohexan-1,4-dicarbonsäure-n-octylisopropylester, Cyclohexan-1,4-dicarbonsäureisooctylisopropylester, Cyclohexan-1,4-dicarbonsäure-(2-ethylhexyl)isopropylester, Cyclohexan-1,4-dicarbonsäure-n-nonylisopropylester, Cyclohexan-1,4-dicarbonsäureisononylisopropylester, Cyclohexan-1,4-dicarbonsäure-(2-propylheptyl)isopropylester, Cyclohexan-1,4-dicarbonsäuren-decylisopropylester, Cyclohexan-1,4-dicarbonsäureisodecylisopropylester, Cyclohexan-1,4-dicarbonsäure-n-undecylisopropylester, Cyclohexan-1,4-dicarbonsäureisoundecylisopropylester, Cyclohexan-1,4-dicarbonsäure-n-docecylisopropylester, Cyclohexan-1,4-dicarbonsäureisododecylisopropylester, Cyclohexan-1,4-dicarbonsäure-n-tridecylisopropylester, Cyclohexan-1,4-dicarbonsäureisotridecylisopropylester, Cyclohexan-1,4-dicarbonsäure-tert-butyl-n-butylester, Cyclohexan-1,4-dicarbonsäureisobutyl-n-butylester, Cyclohexan-1,4-dicarbonsäureglycol-n-butylester, Cyclohexan-1,4-dicarbonsäure-n-hexyl-n-butylester, Cyclohexan-1,4-dicarbonsäureisohexyl-n-butylester, Cyclohexan-1,4-dicarbonsäure-n-heptyl-n-butylester, Cyclohexan-1,4-dicarbonsäureisoheptyl-n-butylester, Cyclohexan-1,4-dicarbonsäure-n-octyl-n-butylester, Cyclohexan-1,4-dicarbonsäureisooctyl-n-butylester, Cyclohexan-1,4-dicarbonsäure-(2-ethylhexyl)-n-butylester, Cyclohexan-1,4-dicarbonsäure-n-nonyl-n-butylester, Cyclohexan-1,4-dicarbonsäureisononyl-n-butylester, Cyclohexan-1,4-dicarbonsäure-(2-propylheptyl)-n-butylester, Cyclohexan-1,4-dicarbonsäure-n-decyl-n-butylester, Cyclohexan-1,4-dicarbonsäureisodecyl-n-butylester, Cyclohexan-1,4-dicarbonsäure-n-undecyl-n-butylester, Cyclohexan-1,4-dicarbonsäureisoundecyl-n-butylester, Cyclohexan-1,4-dicarbonsäure-n-docecyl-n-butylester, Cyclohexan-1,4-dicarbonsäureisododecyl-n-butylester, Cyclohexan-1,4-dicarbonsäure-n-tridecyl-n-butylester, Cyclohexan-1,4-dicarbonsäureisotridecyl-n-butylester, Cyclohexan-1,4-dicarbonsäureisobutyl-tert-butylester, Cyclohexan-1,4-dicarbonsäureglycol-tert-butylester, Cyclohexan-1,4-dicarbonsäure-n-hexyl-tert-butylester, Cyclohexan-1,4-dicarbonsäureisohexyl-tert-butylester, Cyclohexan-1,4-dicarbonsäure-n-heptyl-tert-butylester, Cyclohexan-1,4-dicarbonsäureisoheptyl-tert-butylester, Cyclohexan-1,4-dicarbonsäure-n-octyl-tert-butylester, Cyclohexan-1,4-dicarbonsäureisooctyl-tert-butylester, Cyclohexan-1,4-dicarbonsäure-(2-ethylhexyl)-tert-butylester, Cyclohexan-1,4-dicarbonsäure-n-nonyl-tert-butylester, Cyclohexan-1,4-dicarbonsäureisononyl-tert-butylester, Cyclohexan-1,4-dicarbonsäure-(2-propylheptyl)-tert-butylester, Cyclohexan-1,4-dicarbonsäure-n-decyl-tert-butylester, Cyclohexan-1,4-dicarbonsäureisodecyl-tert-butylester, Cyclohexan-1,4-dicarbonsäure-n-undecyl-tert-butylester, Cyclohexan-1,4-dicarbonsäureisoundecyl-tert-butylester, Cyclohexan-1,4-dicarbonsäure-n-docecyl-tert-butylester, Cyclohexan-1,4-dicarbonsäureisododecyl-tert-butylester, Cyclohexan-1,4-dicarbonsäure-n-tridecyl-tert-butylester, Cyclohexan-1,4-dicarbonsäüreisotridecyl-tert-butylester, Cyclohexan-1,4-dicarbonsäureglycolisobutylester, Cyclohexan-1,4-dicarbonsäure-n-hexylisobutylester, Cyclohexan-1,4-dicarbonsäureisohexylisobutylester, Cyclohexan-1,4-dicarbonsäure-n-heptylisobutylester, Cyclohexan-1,4-dicarbonsäureisoheptylisobutylester, Cyclohexan-1,4-dicarbonsäure-n-octylisobutylester, Cyclohexan-1,4-dicarbonsäureisooctylisobutylester, Cyclohexan-1,4-dicarbonsäure-(2-ethylhexyl)isobutylester, Cyclohexan-1,4-dicarbonsäure-n-nonylisobutylester, Cyclohexan-1,4-dicarbonsäureisononylisobutylester, Cyclohexan-1,4-dicarbonsäure-(2-propylheptyl)isobutylester, Cyclohexan-1,4-dicarbonsäure-n-decylisobutylester, Cyclohexan-1,4-dicarbonsäureisodecylisobutylester, Cyclohexan-1,4-dicarbonsäure-n-undecylisobutylester, Cyclohexan-1,4-dicarbonsäureisoundecylisobutylester, Cyclohexan-1,4-dicarbonsäure-n-docecylisobutylester, Cyclohexan-1,4-dicarbonsäureisododecylisobutylester, Cyclohexan-1,4-dicarbonsäure-n-tridecylisobutylester, Cyctohexan-1,4-dicarbonsäureisotridecylisobutylester, Cyclohexan-1,4-dicarbonsäure-n-hexylglycolester, Cyclohexan-1,4-dicarbonsäureisohexylglycolester, Cyclohexan-1,4-dicarbonsäure-n-heptylglycolester, Cyclohexan-1,4-dicarbonsäureisoheptylglycolester, Cyclohexan-1,4-dicarbonsäure-n-octylglycolester, Cyclohexan-1,4-dicarbonsäureisooctylglycolester, Cyclohexan-1,4-dicarbonsäure-(2-ethylhexyl)glycolester, Cyclohexan-1,4-dicarbonsäure-n-nonylglycolester, Cyclohexan-1,4-dicarbonsäureisononylglycolester, Cyclohexan-1,4-dicarbonsäure-(2-propylheptyl)glycolester, Cyclohexan-1,4-dicarbonsäure-n-decylglycolester, Cyclohexan-1,4-dicarbonsäureisodecylglycolester, Cyclohexan-1,4-dicarbonsäure-n-undecylglycolester, Cyclohexan-1,4-dicarbonsäureisoundecylglycolester, Cyclohexan-1,4-dicarbonsäure-n-docecylglycolester, Cyclohexan-1,4-dicarbonsäureisododecylglycolester, Cyclohexan-1,4-dicarbonsäure-n-tridecylglycolester, Cyclohexan-1,4-dicarbonsäureisotridecylglycolester, Cyclohexan-1,4-dicarbonsäureisohexyl-n-hexylester, Cyclohexan-1,4-dicarbonsäure-n-heptyl-n-hexylester, Cyclohexan-1,4-dicarbonsäureisoheptyl-n-hexylester, Cyclohexan-1,4-dicarbonsäure-n-octyl-n-hexylester, Cyclohexan-1,4-dicarbonsäureisooctyl-n-hexylester, Cyclohexan-1,4-dicarbonsäure-(2-ethylhexyl)-n-hexylester, Cyclohexan-1,4-dicarbonsäure-n-nonyl-n-hexylester, Cyclohexan-1,4-dicarbonsäureisononyl-n-hexylester, Cyclohexan-1,4-dicarbonsäure-(2-propylheptyl)-n-hexylester, Cyclohexan-1,4-dicarbonsäure-n-decyl-n-hexylester, Cyclohexan-1,4-dicarbonsäureisodecyl-n-hexylester, Cyclohexan-1,4-dicarbonsäure-n-undecyl-n-hexylester, Cyclohexan-1,4-dicarbonsäureisoundecyl-n-hexylester, Cyclohexan-1,4-dicarbonsäure-n-docecyl-n-hexylester, Cyclohexan-1,4-dicarbonsäureisododecyl-n-hexylester, Cyclohexan-1,4-dicarbonsäure-n-tridecyl-n-hexylester, Cyclohexan-1,4-dicarbonsäureisotridecyl-n-hexylester, Cyclohexan-1,4-dicarbonsäure-n-heptylisohexylester, Cyclohexan-1,4-dicarbonsäureisoheptylisohexylester, Cyclohexan-1,4-dicarbonsäure-n-octylisohexylester, Cyclohexan-1,4-dicarbonsäureisooctylisohexylester, Cyclohexan-1,4-dicarbonsäure-(2-ethylhexyl)isohexylester, Cyclohexan-1,4-dicarbonsäure-n-nonylisohexylester, Cyclohexan-1,4-dicarbonsäureisononylisohexylester, Cyclohexan-1,4-dicarbonsäure-(2-propylheptyl)isohexylester, Cyclohexan-1,4-dicarbonsäure-n-decylisohexylester, Cyclohexan-1,4-dicarbonsäureisodecylisohexylester, Cyclohexan-1,4-dicarbonsäure-n-undecylisohexylester, Cyclohexan-1,4-dicarbonsäureisoundecylisohexylester, Cyclohexan-1,4-dicarbonsäure-n-docecylisohexylester, Cyclohexan-1,4-dicarbonsäureisododecylisohexylester, Cyclohexan-1,4-dicarbonsäure-n-tridecylisohexylester, Cyclohexan-1,4-dicarbonsäureisotridecylisohexylester, Cyclohexan-1,4-dicarbonsäureisoheptyl-n-heptylester, Cyclohexan-1,4-dicarbonsäure-n-octyl-n-heptylester, Cyclohexan-1,4-dicarbonsäureisooctyl-n-heptylester, Cyclohexan-1,4-dicarbonsäure-(2-ethylhexyl)-n-heptylester, Cyclohexan-1,4-dicarbonsäure-n-nonyl-n-heptylester, Cyclohexan-1,4-dicarbonsäureisononyl-n-heptylester, Cyclohexan-1,4-dicarbonsäure-(2-propylheptyl)-n-heptylester, Cyclohexan-1,4-dicarbonsäure-n-decyl-n-heptylester, Cyclohexan-1,4-dicarbonsäureisodecyl-n-heptylester, Cyclohexan-1,4-dicarbonsäure-n-undecyl-n-heptylester, Cyclohexan-1,4-dicarbonsäureisoundecyl-n-heptylester, Cyclohexan-1,4-dicarbonsäure-n-docecyl-n-heptylester, Cyclohexan-1,4-dicarbonsäureisododecyl-n-heptylester, Cyclohexan-1,4-dicarbonsäure-n-tridecyl-n-heptylester, Cyclohexan-1,4-dicarbonsäureisotridecyl-n-heptylester, Cyclohexan-1,4-dicarbonsäure-n-octylisoheptylester, Cyclohexan-1,4-dicarbonsäureisooctylisoheptylester, Cyclohexan-1,4-dicarbonsäure-(2-ethylhexyl)isoheptylester, Cyclohexan-1,4-dicarbonsäure-n-nonylisoheptylester, Cyclohexan-1,4-dicarbonsäureisononylisoheptylester, Cyclohexan-1,4-dicarbonsäure-(2-propylheptyl)isoheptylester, Cyclohexan-1,4-dicarbonsäuren-decylisoheptylester, Cyclohexan-1,4-dicarbonsäureisodecylisoheptylester, Cyclohexan-1,4-dicarbonsäure-n-undecylisoheptylester, Cyclohexan-1,4-dicarbonsäureisoundecylisoheptylester, Cyclohexan-1,4-dicarbonsäure-n-docecylisoheptylester, Cyclohexan-1,4-dicarbonsäureisododecylisoheptylester, Cyclohexan-1,4-dicarbonsäure-n-tridecylisoheptylester, Cyclohexan-1,4-dicarbonsäureisotridecylisoheptylester, Cyclohexan-1,4-dicarbonsäureisooctyl-n-octylester, Cyclohexan-1,4-dicarbonsäure-(2-ethylhexyl)-n-octylester, Cyclohexan-1,4-dicarbonsäure-n-nonyl-n-octylester, Cyclohexan-1,4-dicarbonsäureisononyl-n-octylester, Cyclohexan-1,4-dicarbonsäure-(2-propylheptyl)-n-octylester, Cyclohexan-1,4-dicarbonsäure-n-decyl-n-octylester, Cyclohexan-1,4-dicarbonsäureisodecyl-n-octylester, Cyclohexan-1,4-dicarbonsäure-n-undecyl-n-octylester, Cyclohexan-1,4-dicarbonsäureisoundecyl-n-octylester, Cyclohexan-1,4-dicarbonsäure-n-docecyl-n-octylester, Cyclohexan-1,4-dicarbonsäureisododecyl-n-octylester, Cyclohexan-1,4-dicarbonsäure-n-tädecyl-n-octylester, Cyclohexan-1,4-dicarbonsäureisotridecyl-n-octylester, Cyclohexan-1,4-dicarbonsäure-(2-ethylhexyl)isooctylester, Cyclohexan-1,4-dicarbonsäure-n-nonylisooctylester, Cyclohexan-1,4-dicarbonsäureisononylisooctylester, Cyclohexan-1,4-dicarbonsäure-(2-propylheptyl)isooctylester, Cyclohexan-1,4-dicarbonsäure-n-decylisooctylester, Cyclohexan-1,4-dicarbonsäureisodecylisooctylester, Cyclohexan-1,4-dicarbbnsäure-n-undecylisooctylester, Cyclohexan-1,4-dicarbonsäureisoundecylisooctylester, Cyclohexan-1,4-dicarbonsäure-n-docecylisooctylester, Cyclohexan-1,4-dicarbonsäureisododecylisooctylester, Cyclohexan-1,4-dicarbonsäure-n-tridecylisooctylester, Cyclohexan-1,4-dicarbonsäureisotridecylisooctylester, Cyclohexan-1,4-dicarbonsäure-n-nonyl-(2-ethylhexyl)ester, Cyclohexan-1,4-dicarbonsäureisononyl-(2-ethylhexyl)ester, Cyclohexan-1,4-dicarbonsäure-(2-propylheptyl)-(2-ethylhexyl)ester, Cyclohexan-1,4-dicarbonsäure-n-decyl-(2-ethylhexyl)ester, Cyclohexan-1,4-dicarbonsäureisodecyl-(2-ethylhexyl)ester, Cyclohexan-1,4-dicarbonsäure-n-undecyl-(2-ethylhexyl)ester, Cyclohexan-1,4-dicarbonsäureisoundecyl-(2-ethylhexyl)ester, Cyclohexan-1,4-dicarbonsäure-n-docecyl-(2-ethylhexyl)ester, Cyclohexan-1,4-dicarbonsäureisododecyl-(2-ethylhexyl)ester, Cyclohexan-1,4-dicarbonsäure-n-tridecyl-(2-ethylhexyl)ester, Cyclohexan-1,4-dicarbonsäureisotridecyl-(2-ethylhexyl)ester, Cyclohexan-1,4-dicarbonsäureisononyl-n-nonylester, Cyclohexan-1,4-dicarbonsäure-(2-propylheptyl)-n-nonylester, Cyclohexan-1,4-dicarbonsäure-n-decyl-n-nonylester, Cyclohexan-1,4-dicarbonsäureisodecyl-n-nonylester, Cyclohexan-1,4-dicarbonsäure-n-undecyl-n-nonylester, Cyclohexan-1,4-dicarbonsäureisoundecyl-n-nonylester, Cyclohexan-1,4-dicarbonsäure-n-docecyl-n-nonylester, Cyclohexan-1,4-dicarbonsäureisododecyl-n-nonylester, Cyclohexan-1,4-dicarbonsäure-n-tridecyl-n-nonylester, Cyclohexan-1,4-dicarbonsäureisotridecyl-n-nonylester, Cyclohexan-1,4-dicarbonsäure-(2-propylheptyl)isononylester, Cyclohexan-1,4-dicarbonsäure-n-decylisononylester, Cyclohexan-1,4-dicarbonsäureisodecylisononylester, Cyclohexan-1,4-dicarbonsäure-n-undecylisononylester, Cyclohexan-1,4-dicarbonsäureisoundecylisononylester, Cyclohexan-1,4-dicarbonsäure-n-docecylisononylester, Cyclohexan-1,4-dicarbonsäureisododecylisononylester, Cyclohexan-1,4-dicarbonsäure-n-tridecylisononylester, Cyclohexan-1,4-dicarbonsäureisotridecylisononylester, Cyclohexan-1,4-dicarbonsäure-n-decyl-(2-propylheptyl)ester, Cyclohexan-1,4-dicarbonsäureisodecyl-(2-propylheptyl)ester, Cyclohexan-1,4-dicarbonsäure-n-undecyl-(2-propylheptyl)ester, Cyclohexan-1,4-dicarbonsäureisoundecyl-(2-propylheptyl)ester, Cyclohexan-1,4-dicarbonsäure-n-docecyl-(2-propylheptyl)ester, Cyclohexan-1,4-dicarbonsäureisododecyl-(2-propylheptyl)ester, Cyclohexan-1,4-dicarbonsäüre-n-tridecyl-(2-propylheptyl)ester, Cyclohexan-1,4-dicarbonsäureisotridecyl-(2-propylheptyl)ester, Cyclohexan-1,4-dicarbonsäureisodecyl-n-decylester, Cyclohexan-1,4-dicarbonsäure-n-undecyl-n-decylester, Cyclohexan-1,4-dicarbonsäureisoundecyl-n-decylester, Cyclohexan-1,4-dicarbonsäure-n-docecyl-n-decylester, Cyclohexan-1,4-dicarbonsäureisododecyl-n-decylester, Cyclohexan-1,4-dicarbonsäure-n-tridecyl-n-decylester, Cyclohexan-1,4-dicarbonsäureisotridecyl-n-decylester, Cyclohexan-1,4-dicarbonsäure-n-undecylisodecylester, Cyclohexan-1,4-dicarbonsäureisoundecylisodecylester, Cyclohexan-1,4-dicarbonsäure-n-docecylisodecylester, Cyclohexan-1,4-dicarbonsäureisododecylisodecylester, Cyclohexan-1,4-dicarbonsäure-n-tridecylisodecylester, Cyclohexan-1,4-dicarbonsäureisotridecylisodecylester, Cyclohexan-1,4-dicarbonsäureisoundecyl-n-undecylester, Cyclohexan-1,4-dicarbonsäure-n-docecyl-n-undecylester, Cyclohexan-1,4-dicarbonsäureisododecyl-n-undecylester, Cyclohexan-1,4-dicarbonsäure-n-tridecyl-n-undecylester, Cyclohexan-1,4-dicarbonsäureisotridecyl-n-undecylester, Cyclohexan-1,4-dicarbonsäure-n-docecylisoundecylester, Cyclohexan-1,4-dicarbonsäureisododecylisoundecylester, Cyclohexan-1,4-dicarbonsäure-n-tridecylisoundecylester, Cyclohexan-1,4-dicarbonsäureisotridecylisoundecylester, Cyclohexan-1,4-dicarbonsäureisododecyl-n-dodecylester, Cyclohexan-1,4-dicarbonsäuren-tridecyl-n-dodecylester, Cyclohexan-1,4-dicarbonsäureisotridecyl-n-dodecylester, Cyclohexan-1,4-dicarbonsäure-n-tridecylisododecylester, Cyclohexan-1,4-dicarbonsäureisotridecylisododecylester, Cyclohexan-1,4-dicarbonsäureisotridecyl-n-tridecylester, Cyclohexan-1,4-dicarbonsäuremethylcyclohexylester, Cyclohexan-1,4-dicarbonsäureethylcyclohexylester, Cyclohexan-1,4-dicarbonsäure-n-propylcyclohexylester, Cyclohexan-1,4-dicarbonsäureisopropylcyclohexytester, Cyclohexan-1,4-dicarbonsäure-n-butylcyclohexylester, Cyclohexan-1,4-dicarbonsäure-tert-butylcyclohexylester, Cyclohexan-1,4-dicarbonsäureisobutylcyclohexylester, Cyclohexan-1,4-dicarbonsäureglycolcyclohexylester, Cyclohexan-1,4-dicarbonsäure-n-hexylcyclohexylester, Cyclohexan-1,4-dicarbonsäureisohexylcyclohexylester, Cyclohexan-1,4-dicarbonsäure-n-heptylcyclohexylester, Cyclohexan-1,4-dicarbonsäureisoheptylcyclohexylester, Cyclohexan-1,4-dicarbonsäure-n-octylcyclohexylester, Cyclohexan-1,4-dicarbonsäureisooctylcyclohexylester, Cyclohexan-1,4-dicarbonsäure-(2-ethylhexyl)cyclohexylester, Cyclohexan-1,4-dicarbonsäure-n-nonylcyclohexylester, Cyclohexan-1,4-dicarbonsäureisononylcyclohexylester, Cyclohexan-1,4-dicarbonsäure-(2-propylheptyl)cyclohexylester, Cyclohexan-1,4-dicarbonsäuren-decylcyclohexylester, Cyclohexan-1,4-dicarbonsäureisodecylcyclohexylester, Cyclohexan-1,4-dicarbonsäure-n-undecylcyclohexylester, Cyclohexan-1,4-dicarbonsäureisoundecylcyclohexylester, Cyclohexan-1,4-dicarbonsäure-n-docecylcyclohexylester, Cyclohexan-1,4-dicarbonsäureisododecylcyclohexylester, Cyclohexan-1,4-dicarbonsäure-n-tridecylcyclohexylester, Cyclohexan-1,4-dicarbonsäureisotridecylcyclohexylester, Cyclohexan-1,4-dicarbonsäuremethylisopentylester, Cyclohexan-1,4-dicarbonsäureethylisopentylester, Cyclohexan-1,4-dicarbonsäure-n-propylisopentylester, Cyclohexan-1,4-dicarbonsäureisopropylisopentylester, Cyclohexan-1,4-dicarbonsäure-n-butylisopentylester, Cyclohexan-1,4-dicarbonsäure-tert-butylisopentylester, Cyclohexan-1,4-dicarbonsäureisobutylisopentylester, Cyclohexan-1,4-dicarbonsäureglycolisopentylester, Cyclohexan-1,4-dicarbonsäure-n-hexylisopentylester, Cyclohexan-1,4-dicarbonsäureisohexylisopentylester, Cyclohexan-1,4-dicarbonsäure-n-heptylisopentylester, Cyclohexan-1,4-dicarbonsäureisoheptylisopentylester, Cyclohexan-1,4-dicarbonsäure-n-octylisopentylester, Cyclohexan-1,4-dicarbonsäureisooctylisopentylester, Cyclohexan-1,4-dicarbonsäure-(2-ethylhexyl)isopentylester, Cyclohexan-1,4-dicarbonsäure-n-nonylisopentylester, Cyclohexan-1,4-dicarbonsäureisononylisopentylester, Cyclohexan-1,4-dicarbonsäure-(2-propylheptyl)isopentylester, Cyclohexan-1,4-dicarbonsäuren-decylisopentylester, Cyclohexan-1,4-dicarbonsäureisodecylisopentylester, Cyclohexan-1,4-dicarbonsäure-n-undecylisopentylester, Cyclohexan-1,4-dicarbonsäureisoundecylisopentylester, Cyclohexan-1,4-dicarbonsäure-n-docecylisopentylester, Cyclohexan-1,4-dicarbonsäureisododecylisopentylester, Cyclohexan-1,4-dicarbonsäure-n-tridecylisopentylester, Cyclohexan-1,4-dicarbonsäureisotridecylisopentylester, Cyclohexan-1,4-dicarbonsäuremethyl-n-pentylester, Cyclohexan-1,4-dicarbonsäureethyl-n-pentylester, Cyclohexan-1,4-dicarbonsäure-n-propyl-n-pentylester, Cyclohexan-1,4-dicarbonsäureisopropyl-n-pentylester, Cyclohexan-1,4-dicarbonsäure-n-butyl-n-pentylester, Cyclohexan-1,4-dicarbonsäure-tert-butyl-n-pentylester, Cyclohexan-1,4-dicarbonsäureisobutyl-n-pentylester, Cyclohexan-1,4-dicarbonsäureglycol-n-pentylester, Cyclohexan-1,4-dicarbonsäure-n-hexyl-n-pentylester, Cyclohexan-1,4-dicarbonsäureisohexyl-n-pentylester, Cyclohexan-1,4-dicarbonsäure-n-heptyl-n-pentylester, Cyclohexan-1,4-dicarbonsäureisoheptyl-n-pentylester, Cyclohexan-1,4-dicarbonsäure-n-octyl-n-pentylester, Cyclohexan-1,4-dicarbonsäureisooctyl-n-pentylester, Cyclohexan-1,4-dicarbonsäure-(2-ethylhexyl)-n-pentylester, Cyclohexan-1,4-dicarbonsäure-n-nonyl-n-pentylester, Cyclohexan-1,4-dicarbonsäureisononyl-n-pentylester, Cyclohexan-1,4-dicarbonsäure-(2-propylheptyl)-n-pentylester, Cyclohexan-1,4-dicarbonsäure-n-decyl-n-pentylester, Cyclohexan-1,4-dicarbonsäureisodecyl-n-pentylester, Cyclohexan-1,4-dicarbonsäure-n-undecyl-n-pentylester, Cyclohexan-1,4-dicarbonsäureisoundecyl-n-pentylester, Cyclohexan-1,4-dicarbonsäure-n-docecyl-n-pentylester, Cyclohexan-1,4-dicarbonsäureisododecyl-n-pentylester, Cyclohexan-1,4-dicarbonsäure-n-tridecyl-n-pentylester, Cyclohexan-1,4-dicarbonsäureisotridecyl-n-pentylester;
Cyclohexan-1,3-dicarbonsäurealkylester, wie z.B. Cyclohexan-1,3-dicarbonsäuremonomethylester, Cyclohexan-1,3-dicarbonsäuredimethylester, Cyclohexan-1,3-dicarbonsäurediethylester, Cyclohexan-1,3-dicarbonsäuredi-n-propylester, Cyclohexan-1,3-dicarbonsäuredi-n-butylester, Cyclohexan-1,3-dicarbonsäuredi-tert.-butylester, Cyclohexan-1,3-dicarbonsäurediisobutylester, Cyclohexan-1,3-dicarbonsäuremonoglykolester, Cyclohexan-1,3-dicarbonsäurediglykolester, Cyclohexan-1,3-dicarbonsäuredi-n-octylester, Cyclohexan-1,3-dicarbonsäuredüsooctylester, Cyclohexan-1,3-dicarbonsäuredi-2-ethylhexylester, Cyclohexan-1,3-dicarbonsäuredi-n-nonylester, Cyclohexan-1,3-dicarbonsäuredüsononylester, Cyclohexan-1,3-dicarbonsäuredi-n-decylester, Cyclohexan-1,3-dicarbonsäuredüsodecylester, Cyclohexan-1,3-dicarbonsäuredi-n-undecylester, Cyclohexan-1,3-dicarbonsäuredüsododecylester, Cyclohexan-1,3-dicarbonsäuredi-n-octadecylester, Cyclohexan-1,3-dicarbonsäurediisooctadecylester, Cyclohexan-1,3-dicarbonsäuredi-n-eicosylester, Cyclohexan-1,3-dicarbonsäuremonocyclohexylester, Cyclohexan-1,3-dicarbonsäuredicyclohexylester.
Cyclohexan-1,3-dicarbonsäurediisopropylester, Cyclohexan-1,3-dicarbonsäuredi-n-hexylester, Cyclohexan-1,3-dicarbonsäurediisohexylester, Cyclohexan-1,3-dicarbonsäuredi-n-heptylester, Cyclohexan-1,3-dicarbonsäurediisoheptylester, Cyclohexan-1,3-dicarbonsäuredi-2-propylheptylester, Cyclohexan-1,3-dicarbonsäurediisoundecylester, Cyclohexan-1,3-dicarbonsäuredi-n-dodecylester, Cyclohexan-1,2-dicarbonsäuredi-n-tridecylester, Cyclohexan-1,3-dicarbonsäurediisotridecylester, Cyclohexan-1,3-dicarbonsäuredi-n-pentylester, Cyclohexan-1,3-dicarbonsäurediisopentylester;
Cyclohexan-1,2,4-tricarbonsäurealkylester, wie z.B. Cyclohexan-1,2,4-tricarbonsäuremonomethylester, Cyclohexan-1,2,4-tricarbonsäuredimethylester, Cyclohexan-1,2,4-tricarbonsäurediethylester, Cyclohexan-1,2,4-tricarbonsäuredi-n-propylester, Cyclohexan-1,2,4-tricarbonsäurediisopropylester, Cyclohexan-1,2,4-tricarbonsäuredi-n-butylester, Cyclohexan-1,2,4-tricarbonsäuredi-tert-butylester, Cyclohexan-1,2,4-tricarbonsäurediisobutylester, Cyclohexan-1,2,4-tricarbonsäuremonoglykolester, Cyclohexan-1,2,4-tricarbonsäurediglykolester, Cyclohexan-1,2,4-tricarbonsäuredi-n-octylester, Cyclohexan-1,2,4-tricarbonsäurediisooctylester, Cyclohexan-1,2,4-tricarbonsäuredi-2-ethylhexylester, Cyclohexan-1,2,4-tricarbonsäuredi-n-nonylester, Cyclohexan-1,2,4-tricarbonsäurediisononylester, Cyclohexan-1,2,4-tricarbonsäuredi-n-decylester, Cyclohexan-1,2,4-tricarbonsäurediisodecylester, Cyclohexan-1,2,4-tricarbonsäuredi-n-undecylester, Cyclohexan-1,2,4-tricarbonsäurediisododecylester, Cyclohexan-1,2,4-tricarbonsäuredi-n-octadecyl-ester, Cyclohexan-1,2,4-tricarbonsäurediisooctadecylester, Cyclohexan-1,2,4-tricarbonsäuredi-n-eicosylester, Cyclohexan-1,2,4-tricarbonsäuremonocyclohexylester, Cyclohexan-1,2,4-tricarbonsäuredicyclohexylester sowie Cyclohexan-1,2,4-tricarbonsäuretrimethylester, Cyclohexan-1,2,4-tricarbonsäuretriethylester, Cyclohexan-1,2,4-tricarbonsäuretri-n-propylester, Cyclohexan-1,2,4-tricarbonsäuretri-n-butylester, Cyclohexan-1,2,4-tricarbonsäuretri-tert-butylester, Cyclohexan-1,2,4-tricarbonsäuretriisobutylester, Cyclohexan-1,2,4-tricarbonsäuretriglykolester, Cyclohexan-1,2,4-tricarbonsäuretri-n-octylester, Cyclohexan-1,2,4-tricarbonsäuretriisooctylester, Cyclohexan-1,2,4-tricarbonsäuretri-2-ethylhexylester, Cyclohexan-1,2,4-tricarbonsäuretri-n-nonylester, Cyclohexan-1,2,4-tricarbonsäuretriisononylester, Cyclohexan-1,2,4-tricarbonsäuretri-n-decylester, Cyclohexan-1,2,4-tricarbonsäuretrisododecylester, Cyclohexan-1,2,4-tricarbonsäuretri-n-undecylester, Cyclohexan-1,2,4-tricarbonsäuretriisododecylester, Cyclohexan-1,2,4-tricarbonsäuretri-n-octadecylester, Cyclohexan-1,2,4-tricarbonsäuretriisooctadecylester, Cyclohexan-1,2,4-tricarbonsäuretri-n-eicosylester, Cyclohexan-1,2,4-tricarbonsäuretricyclohexylester, Cyclohexan-1,2,4-tricarbonsäuredi-n-hexylester, Cyclohexan-1,2,4-tricarbonsäurediisohexylester, Cyclohexan-1,2,4-tricarbonsäuretri-n-hexylester, Cyclohexan-1,2,4-tricarbonsäuretrisohexylester, Cyclohexan-1,2,4-tricarbonsäuredi-n-heptylester, Cyclohexan-1,2,4-tricarbonsäurediisoheptylester, Cyclohexan-1,2,4-tricarbonsäuretri-n-heptylester, Cyclohexan-1,2,4-tricarbonsäuretriisoheptylester, Cyclohexan-1,2,4-tricarbonsäuredi-n-pentylester, Cyclohexan-1,2,4-tricarbonsäurediisopentylester, Cyclohexan-1,2,4-tricarbonsäuretri-n-pentylester, Cyclohexan-1,2,4-tricarbonsäuretriisopentylester, Cyclohexan-1,2,4-tricarbonsäuredi-n-tridecylester, Cyclohexan-1,2,4-tricarbonsäurediisotridecylester, Cyclohexan-1,2,4-tricarbonsäuretri-n-tridecylester, Cyclohexan-1,2,4-tricarbonsäuretriisotridecylester, Cyclohexan-1,2,4-tricarbonsäuredi-n-dodecylester, Cyclohexan-1,2,4-tricarbonsäurediisoundecylester, Cyclohexan-1,2,4-tricarbonsäuretri-n-dodecylester, Cyclohexan-1,2,4-tricarbonsäuretriisoundecylester, Cyclohexan-1,2,4-tricarbonsäuretriisopropylester.
Cyclohexan-1,3,5-tricarbonsäurealkylester, wie z.B. Cyclohexan-1,3,5-tricarbonsäuremonomethylester, Cyclohexan-1,3,5-tricarbonsäuredimethylester, Cyclohexan-1,3,5-tricarbonsäurediethylester, Cyclohexan-1,3,5-tricarbonsäuredi-n-propylester, Cyclohexan-1,3,5-tricarbonsäuredi-n-butylester, Cyclohexan-1,3,5-tricarbonsäuredi-tert-butylester, Cyclohexan-1,3,5-tricarbonsäurediisobutylester, Cyclohexan-1,3,5-tricarbonsäuremonoglykolester, Cyclohexan-1,3,5-tricarbonsäurediglykolester, Cyclohexan-1,3,5-tricarbonsäuredi-n-octylester, Cyclohexan-1,3,5-tricarbonsäurediisooctylester, Cyclohexan-1,3,5-tricarbonsäuredi-2-ethylhexylester, Cyclohexan-1,3,5-tricarbonsäuredi-n-nonylester, Cyclohexan-1,3,5-tricarbonsäurediisononylester, Cyclohexan-1,3,5-tricarbonsäuredi-n-decylester, Cyclohexan-1,3,5-tricarbonsäurediisodecylester, Cyclohexan-1,3,5-tricarbonsäuredi-n-undecylester, Cyclohexan-1,3,5-tricarbonsäurediisododecylester, Cyclohexan-1,3,5-tricarbonsäuredi-n-octadecylester, Cyclohexan-1,3,5-tricarbonsäurediisooctadecylester, Cyclohexan-1,3,5-tricarbonsäuredi-n-eicosylester, Cyclohexan-1,3,5-tricarbonsäuremonocyclohexylester, Cyclohexan-1,3,5-tricarbonsäuredicyclohexylester, sowie Cyclohexan-1,3,5-tricarbonsäuretrimethylester, Cyclohexan-1,3,5-tricarbonsäuretriethylester, Cyclohexan-1,3,5-tricarbonsäuretri-n-propylester, Cyclohexan-1,3,5-tricarbonsäuretri-n-butylester, Cyclohexan-1,3,5-tricarbonsäuretri-tert-butylester, Cyclohexan-1,3,5-tricarbonsäuretriisobutylester, Cyclohexan-1,3,5-tricarbonsäuretriglykolester, Cyclohexan-1,3,5-tricarbonsäuretri-n-octylester, Cyclohexan-1,3,5-tricarbonsäuretriisooctylester, Cyclohexan-1,3,5-tricarbonsäuretri-2-ethylhexylester, Cyclohexan-1,3,5-tricarbonsäuretri-n-nonylester, Cyclohexan-1,3,5-tricarbonsäuretriisononylester, Cyclohexan-1,3,5-tricarbonsäuretri-n-decylester, Cyclohexan-1,3,5-tricarbonsäuretriisododecylester, Cyclohexan-1,3,5-tricarbonsäuretri-n-undecylester, Cyclohexan-1,3,5-tricarbonsäuretriisododecylester, Cyclohexan-1,3,5-tricarbonsäuretri-n-octadecylester, Cyclohexan-1,3,5-tricarbonsäuretriisooctadecylester, Cyclohexan-1,3,5-tricarbonsäuretri-n-eicosylester, Cyclohexan-1,3,5-tricarbonsäuretricyclohexylester, Cyclohexan-1,3,5-tricarbonsäuredi-n-hexylester, Cyclohexan-1,3,5-tricarbonsäurediisohexylester, Cyclohexan-1,3,5-tricarbonsäuretri-n-hexylester, Cyclohexan-1,3,5-tricarbonsäuretriisohexylester, Cyclohexan-1,3,5-tricarbonsäuredi-n-heptylester, Cyclohexan-1,3,5-tricarbonsäurediisoheptylester, Cyclohexan-1,3,5-tricarbonsäuretri-n-heptylester, Cyclohexan-1,3,5-tricarbonsäuretriisoheptylester, Cyclohexan-1,3,5-tricarbonsäuredi-n-pentylester, Cyclohexan-1,3,5-tricarbonsäurediisopentylester, Cyclohexan-1,3,5-tricarbonsäuretri-n-pentylester, Cyclohexan-1,3,5-tricarbonsäuretriisopentylester, Cyclohexan-1,3,5-tricarbonsäuredi-n-tridecylester, Cyclohexan-1,3,5-tricarbonsäurediisotridecylester, Cyclohexan-1,3,5-tricarbonsäuretri-n-tridecylester, Cyclohexan-1,3,5-tricarbonsäuretriisotridecylester, Cyclohexan-1,3,5-tricarbonsäuredi-n-dodecylester, Cyclohexan-1,3,5-tricarbonsäurediisoundecylester, Cyclohexan-1,3,5-tricarbonsäuretri-n-dodecylester, Cyclohexan-1,3,5-tricarbonsäuretriisoundecylester, Cyclohexan-1,3,5-tricarbonsäuretriisopropylester.
Cyclohexan-1,2,3-tricarbonsäurealkylester, wie z.B. Cyclohexan-1,2,3-tricarbonsäuremonomethylester, Cyclohexan-1,2,3-tricarbonsäuredimethylester, Cyclohexan-1,2,3-tricarbonsäurediethylester, Cyclohexan-1,2,3-tricarbonsäuredi-n-propylester, Cyclohexan-1,2,3-tricarbonsäuredi-n-butylester, Cyclohexan-1,2,3-tricarbonsäuredi-tert-butylester, Cyclohexan-1,2,3-tricarbonsäurediisobutylester, Cyclohexan-1,2,3-tricarbonsäuremonoglykolester, Cyclohexan-1,2,3-tricarbonsäurediglykolester, Cyclohexan-1,2,3-tricarbonsäuredi-n-octylester, Cyclohexan-1,2,3-tricarbonsäurediisooctylester, Cyclohexan-1,2,3-tricarbonsäuredi-2-ethylhexylester, Cydohexan-1,2,3-tricarbonsäuredi-n-nonylester, Cyclohexan-1,2,3-tricarbonsäurediisononylester, Cyclohexan-1,2,3-tricarbonsäuredi-n-decylester, Cyclohexan-1,2,3-tricarbonsäurediisodecylester, Cyclohexan-1,2,3-tricarbonsäuredi-n-undecylester, Cyclohexan-1,2,3-tricarbonsäurediisododecylester, Cyclohexan-1,2,3-tricarbonsäuredi-n-octadecylester, Cyclohexan-1,2,3-tricarbonsäurediisooctadecylester, Cyclohexan-1,2,3-tricarbonsäuredi-n-eicosylester, Cyclohexan-1,2,3-tricarbonsäuremonocyclohexylester, Cyclohexan-1,2,3-tricarbonsäuredicyclohexylester, sowie Cyclohexan-1,2,3-tricarbonsäuretrimethylester, Cyclohexan-1,2,3-tricarbonsäuretriethylester, Cyclohexan-1,2,3-tricarbonsäuretri-n-propylester, Cyclohexan-1,2,3-tricarbonsäuretri-n-butylester, Cyclohexan-1,2,3-tricarbonsäuretri-tert-butylester, Cyclohexan-1,2,3-tricarbonsäuretriisobutylester, Cyclohexan-1,2,3-tricarbonsäuretriglykolester, Cyclohexan-1,2,3-tricarbonsäuretri-n-octylester, Cyclohexan-1,2,3-tricarbonsäuretriisooctylester, Cyclohexan-1,2,3-tricarbonsäuretri-2-ethylhexylester, Cyclohexan-1,2,3-tricarbonsäuretri-n-nonylester, Cyclohexan-1,2,3-tricarbonsäuretriisononylester, Cyclohexan-1,2,3-tricarbonsäuretri-n-decylester, Cyclohexan-1,2,3-tricarbonsäuretriisododecylester, Cyclohexan-1,2,3-tricarbonsäuretri-n-undecylester, Cyclohexan-1,2,3-tricarbonsäuretriisododecylester, Cyclohexan-1,2,3-tricarbonsäuretri-n-octadecylester, Cyclohexan-1,2,3-tricarbonsäuretriisooctadecylester, Cyclohexan-1,2,3-tricarbonsäuretri-n-eicosylester, Cyclohexan-1,2,3-tricarbonsäuretricyclohexylester, Cyclohexan-1,2,3-tricarbonsäuredi-n-hexylester, Cyclohexan-1,2,3-tricarbonsäurediisohexylester, Cyclohexan-1,2,3-tricarbonsäuretri-n-hexylester, Cyclohexan-1,2,3-tricarbonsäuretriisohexylester, Cyclohexan-1,2,3-tricarbonsäuredi-n-heptylester, Cyclohexan-1,2,3-tricarbonsäurediisoheptylester, Cyclohexan-1,2,3-tricarbonsäuretri-n-heptylester, Cyclohexan-1,2,3-tricarbonsäuretriisoheptylester, Cyclohexan-1,2,3-tricarbonsäuredi-n-pentylester, Cyclohexan-1,2,3-tricarbonsäurediisopentylester, Cyclohexan-1,2,3-tricarbonsäuretri-n-pentylester, Cyclohexan-1,2,3-tricarbonsäuretrisopentylester, Cyclohexan-1,2,3-tricarbonsäuredi-n-tridecylester, Cyclohexan-1,2,3-tricarbonsäurediisotridecylester, Cyclohexan-1,2,3-tricarbonsäuretri-n-tridecylester, Cyclohexan-1,2,3-tricarbonsäuretrisotridecylester, Cyclohexan-1,2,3-tricarbonsäuredi-n-dodecylester, Cyclohexan-1,2,3-tricarbonsäurediisoundecylester, Cyclohexan-1,2,3-tricarbonsäuretri-n-dodecylester, Cyclohexan-1,2,3-tricarbonsäuretriisoundecylester, Cyclohexan-1,2,3-tricarbonsäuretriisopropylester.
Cyclohexan-1,2,4,5-tetracarbonsäurealkylester, wie z.B. Cyclohexan-1,2,4,5-tetracarbonsäuremonomethylester, Cyclohexan-1,2,4,5-tetracarbonsäuredimethylester, Cyclohexan-1,2,4,5-tetracarbonsäurediethylester, Cyclohexan-1,2,4,5-tetracarbonsäuredi-n-propylester, Cyclohexan-1,2,4,5-tetracarbonsäuredi-n-butylester, Cyclohexan-1,2,4,5-tetracarbonsäuredi-tert.-butylester, Cyclohexan-1,2,4,5-tetracarbonsäurediisobutylester, Cyclohexan-1,2,4,5-tetracarbonsäuremonoglykolester, Cyclohexan-1,2,4,5-tetracarbonsäurediglykolester, Cyclohexan-1,2,4,5-tetracarbonsäuredi-n-octylester, Cyclohexan-1,2,4,5-tetracarbonsäurediisooctylester, Cyclohexan-1,2,4,5-tetracarbonsäuredi-2-ethylhexylester, Cyclohexan-1,2,4,5-tetracarbonsäuredi-n-nonylester, Cyclohexan-1,2,4,5-tetracarbonsäurediisononylester, Cyclohexan-1,2,4,5-tetracarbonsäuredi-n-decylester, Cyclohexan-1,2,4,5-tetracarbonsäurediisodecylester, Cyclohexan-1,2,4,5-tetracarbonsäuredi-n-undecylester, Cyclohexan-1,2,4,5-tetracarbonsäurediisododecylester, Cyclohexan-1,2,4,5-tetracarbonsäuredi-n-octadecylester, Cyclohexan-1,2,4,5-tetracarbonsäurediisooctadecylester, Cyclohexan-1,2,4,5-tetracarbonsäuredi-n-eicosylester, Cyclohexan-1,2,4,5-tetracarbonsäuremonocyclohexylester, Cyclohexan-1,2,4,5-tetracarbonsäuretrimethylester, Cyclohexan-1,2,4,5-tetracarbonsäuretriethylester, Cyclohexan-1,2,4,5-tetracarbonsäuretri-n-propylester, Cyclohexan-1,2,4,5-tetracarbonsäuretri-n-butylester, Cyclohexan-1,2,4,5-tetracarbonsäuretri-tert-butylester, Cyclohexan-1,2,4,5-tetracarbonsäuretriisobutylester, Cyclohexan-1,2,4,5-tetracarbonsäuretriglykolester, Cyclohexan-1,2,4,5-tetracarbonsäuretri-n-octylester, Cyclohexan-1,2,4,5-tetracarbonsäuretriisooctylester, Cyclohexan-1,2,4,5-tetracarbonsäuretri-2-ethylhexylester, Cyclohexan-1,2,4,5-tetracarbonsäuretri-n-nonylester, Cyclohexan-1,2,4,5-tetracarbonsäuretriisononylester, Cyclohexan-1,2,4,5-tetracarbonsäuretri-n-decylester Cyclohexan-1,2,4,5-tetracarbonsäuretriisododecylester, Cyclohexan-1,2,4,5-tetracarbonsäuretri-n-undecylester, Cyclohexan-1,2,4,5-tetracarbonsäuretriisododecylester, Cyclohexan-1,2,4,5-tetracarbonsäuretri-n-octadecylester, Cyclohexan-1,2,4,5-tetracarbonsäuretriisooctadecylester, Cyclohexan-1,2,4,5-tetracarbonsäuretri-n-eicosylester, Cyclohexan-1,2,4,5-tetracarbonsäuretricyclohexylester, sowie Cyclohexan-1,2,4,5-tetracarbonsäuretetramethylester, Cyclohexan-1,2,4,5-tetracarbonsäuretetraethylester, Cyclohexan-1,2,4,5-tetracarbonsäuretetra-n-propylester, Cyclohexan-1,2,4,5-tetracarbonsäuretetra-n-butylester, Cyclohexan-1,2,4,5-tetracarbonsäuretetra-tert-butylester, Cyclohexan-1,2,4,5-tetracarbonsäuretetraisobutylester, Cyclohexan-1,2,4,5-tetracarbonsäuretetraglykolester, Cyclohexan-1,2,4,5-tetracarbonsäuretetra-n-octylester, Cyclohexan-1,2,4,5-tetracarbonsäuretetraisooctylester, Cyclohexan-1,2,4,5-tetracarbonsäuretetra-2-ethylhexylester, Cyclohexan-1,2,4,5-tetracarbonsäuretetra-n-nonylester, Cyclohexan-1,2,4,5-tetracarbonsäuretetraisononylester, Cyclohexan-1,2,4,5-tetracarbonsäuretetra-n-decylester, Cyclohexan-1,2,4,5-tetracarbonsäuretetra-isodecylester, Cyclohexan-1,2,4,5-tetracarbonsäuretetraisododecylester, Cyclohexan-1,2,4,5-tetracarbonsäuretetra-n-undecylester, Cyclohexan-1,2,4,5-tetracarbonsäuretetra-n-octadecylester, Cyclohexan-1,2,4,5-tetracarbonsäuretetraisooctadecylester, Cyclohexan-1,2,4,5-tetracarbonsäuretetra-n-eicosylester, Cyclohexan-1,2,4,5-tetracarbonsäuretetracyclohexylester, Cyclohexan-1,2,4,5-tetracarbonsäuredi-n-hexylester, Cyclohexan-1,2,4,5-tetracarbonsäurediisohexylester, Cyclohexan-1,2,4,5-tetracarbonsäuretri-n-hexylester, Cyclohexan-1,2,4,5-tetracarbonsäuretriisohexylester, Cyclohexan-1,2,4,5-tetracarbonsäuredi-n-heptylester, Cyclohexan-1,2,4,5-tetracarbonsäurediisoheptylester, Cyclohexan-1,2,4,5-tetracarbonsäuretri-n-heptylester, Cyclohexan-1,2,4,5-tetracarbonsäuretriisoheptylester, Cyclohexan-1,2,4,5-tetracarbonsäuredi-n-pentylester, Cyclohexan-1,2,4,5-tetracarbonsäurediisopentylester, Cyclohexan-1,2,4,5-tetracarbonsäuretri-n-pentylester, Cyclohexan-1,2,4,5-tetracarbonsäuretriisopentylester, Cyclohexan-1,2,4,5-tetracarbonsäuredi-n-tridecylester, Cyclohexan-1,2,4,5-tetracarbonsäurediisotridecylester, Cyclohexan-1,2,4,5-tetracarbonsäuretri-n-tridecylester, Cyclohexan-1,2,4,5-tetracarbonsäuretriisotridecylester, Cyclohexan-1,2,4,5-tetracarbonsäuredi-n-dodecylester, Cyclohexan-1,2,4,5-tetracarbonsäurediisoundecylester, Cyclohexan-1,2,4,5-tetracarbonsäuretri-n-dodecylester, Cyclohexan-1,2,4,5-tetracarbonsäuretriisoundecylester, Cyclohexan-1,2,4,5-tetracarbonsäuretriisopropylester, Cyclohexan-1,2,4,5-tetracarbonsäuretetra-n-hexylester, Cyclohexan-1,2,4,5-tetracarbonsäuretetraisohexylester, Cyclohexan-1,2,4,5-tetracarbonsäuretetra-n-heptylester, Cyclohexan-1,2,4,5-tetracarbonsäuretetraisoheptylester, Cyclohexan-1,2,4,5-tetracarbonsäuretetra-n-pentylester, Cyclohexan-1,2,4,5-tetracarbonsäuretetraisopentylester, Cyclohexan-1,2,4,5-tetracarbonsäuretetra-n-tridecylester, Cyclohexan-1,2,4,5-tetracarbonsäuretetraisotridecylester, Cyclohexan-1,2,4,5-tetracarbonsäuretetra-n-dodecylester, Cyclohexan-1,2,4,5-tetracarbonsäuretetraisoundecylester, Cyclohexan-1,2,4,5-tetracarbonsäuretetraisopropylester.

Zur Lösung der der Erfindung zugrundeliegenden Aufgabe besonders gut geeignet sind darüber hinaus auch die in der WO 99/32427 offenbarten, im Folgenden nochmals aufgelisteten Cyclohexan-1,2-dicarbonsäureester:
Gemischte Ester der Cyclohexan-1,2-dicarbonsäure mit C1- bis C13-Alkoholen; Cyclohexan-1,2-dicarbonsäuredi(isopentyl)ester, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf lsobuten;
ein 1,2-Di-C9-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C7-11-Ester der Cyclohexandicarbonsäure, erhältlich durch Hydrierung des entsprechenden Phthalsäureesters mit der CAS Nr. 68515-42-4;
ein 1,2-Di-C7-11-Ester der Cyclohexandicarbonsäure, erhältlich durch Hydrierung der Di-C7-11-Phthalate mit folgenden CAS Nr.
   111 381-89-6,
   111 381 90-9,
   111 381 91-0,
   68515-44-6,
   68515-45-7 und
   3648-20-2;
ein 1,2-Di-C9-11-Ester der Cyclohexandicarbonsäure, erhältlich durch Hydrierung eines Di-C9-11-Phthalats mit der CAS Nr. 98515-43-6;
ein 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
ein 1,2-Di-C7-9-Cyclohexandicarbonsäureester, erhältlich durch Hydrierung des entsprechenden Phthalsäureesters der verzweigtkettige oder lineare C7-9-Alkylestergruppen aufweist; entsprechende beispielsweise als Ausgangsprodukte verwendbare Phthalate haben die folgende CAS Nr.:
   Di-C7,9-Alkylphthalat mit der CAS Nr. 111 381-89-6;
   Di-C7-Alkylphthalat mit der CAS Nr. 68515-44-6; und
   Di-C9-Alkylphthalat mit der CAS Nr. 68515-45-7.

Der Inhalt der WO 99/32427, der sich u.a. auf diese vorstehend aufgelisteten Verbindungen und die Herstellung von Cyclohexanpolycarbonsäuren unter Verwendung spezieller Makroporen aufweisender Katalysatoren bezieht, wird durch Bezugnahme vollständig in die vorliegende Anmeldung einbezogen.

Erfindungsgemäß sind auch Hydrierprodukte von Phthalsäure-Mischestem mit C10 - und C13-Alkoholen verwendbar wie sie in der DE-A 100 32 580 beschrieben sind.

Des weiteren sind auch die Hydrierungsprodukte der kommerziell erhältlichen Benzolpolycarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911 P (CAS Nr. 68515-43-5), Jayflex L11 P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0), vorteilhaft in den erfindungsgemäßen Kleb- oder Dichtstoffen zu verwenden.

Besonders bevorzugte erfindungsgemäße Kleb- und Dichtstoffe umfassen Dialkylester der 1,2-Cyclohexandicarbonsäure. Als Estergruppe R bevorzugt sind geradkettige oder verzweigte Alkylgruppen mit 1 bis 13 C-Atomen oder Gemische der genannten Alkylgruppen. Als Estergruppe R besonders bevorzugt sind geradkettige oder verzweigte Alkylgruppen mit 8 bis 10 C-Atomen oder Gemische der genannten Alkylgruppen. Als Estergruppe R ganz besonders bevorzugt sind Alkylgruppen mit 9 C-Atomen.

Die Herstellung der Cyclohexanpolycarbonsäurederivate erfolgt bevorzugt gemäß dem in WO 99/32427 offenbarten Verfahren. Dieses Verfahren umfasst die Hydrierung eines Benzolpolycarbonsäureesters oder eines Gemisches aus zwei oder mehr dieser Ester durch Inkontaktbringen des Benzolpolycarbonsäureesters oder eines Gemischs aus zwei oder mehr dieser Ester mit einem Wasserstoff enthaltenden Gas in Gegenwart eines Katalysators der als Aktivmetall mindestens ein Metall der VIII. Nebengruppe des Periodensystems allein oder zusammen mit mindestens einem Metall der I. oder VII. Nebengruppe des Periodensystems, aufgebracht auf einem Träger, vorzugsweise Aluminiumoxid, umfasst, wobei der Träger Makroporen aufweist.

In einer bevorzugten Ausführungsform weist der Träger vorzugsweise Aluminiumoxid, einen mittleren Porendurchmesser von mindestens 50 nm und eine BET-Oberfläche von höchstens 30 m²/g auf und die Menge des Aktivmetalls beträgt 0,01 bis 30 Gew.-%, bezogen auf das Gesamtgewicht des Katalysators, vorzugsweise 0,1 bis 10 Gew.-%.

In einer weiteren Ausführungsform wird ein Katalysator mit einer bimodalen Porenverteilung eingesetzt, worin die Menge des Aktivmetalls 0,01 bis 30 Gew.-%, vorzugsweise 0,1 bis 10 Gew.%, bezogen auf das Gesamtgewicht des Katalysators, beträgt und 10 bis 50% des Porenvolumens des Trägers, vorzugsweise Aluminiumoxid, von Makroporen mit einem Porendurchmesser im Bereich von 50 nm bis 10.000 nm und 50 bis 90% des Porenvolumens des Trägers von Mesoporen mit einem Porendurchmesser im Bereich von 2 bis 50 nm gebildet werden, wobei sich die Summe der Anteile der Porenvolumina zu 100% addiert.

In einer weiteren Ausführungsform weist der Katalysator 0,01 bis 30 Gew.-%, vorzugsweise 0,1 bis 10 Gew.-%, bezogen auf das Gesamtgewicht des Katalysators, eines Aktivmetalls auf, aufgebracht auf einem Träger, wobei der Träger einen mittleren Porendurchmesser von mindestens 0,1 µm und eine BET-Oberfläche von höchstens 15 m²/g aufweist. Als Träger können prinzipiell alle Träger eingesetzt werden, die Makroporen aufweisen, d.h. Träger, die ausschließlich Makroporen aufweisen, sowie solche, die neben Makroporen auch Meso- und/oder Mikroporen enthalten.

Als Aktivmetall können prinzipiell alle Metalle der VIII. Nebengruppe des Periodensystems eingesetzt werden. Bevorzugt werden als Aktivmetalle Platin, Rhodium, Palladium, Cobalt, Nickel oder Ruthenium oder ein Gemisch aus zwei oder mehr davon eingesetzt, wobei insbesondere Ruthenium als Aktivmetall verwendet wird. Unter den ebenfalls verwendbaren Metallen der I. oder VII. oder aber der I. und der VII. Nebengruppe des Periodensystems, die ebenfalls allesamt prinzipiell verwendbar sind, werden vorzugsweise Kupfer und/oder Rhenium eingesetzt.

Die Begriffe "Makroporen" und "Mesoporen" werden im Rahmen der vorliegenden Anmeldung so verwendet, wie sie in Pure Appl. Chem., 45 S. 79 (1976) definiert sind, nämlich als Poren, deren Durchmesser oberhalb von 50 nm (Makroporen) oder deren Durchmesser zwischen 2 nm und 50 nm liegt (Mesoporen).

Der Gehalt des Aktivmetalls beträgt im allgemeinen 0,01 bis 30 Gew.-%, bevorzugt 0,01 bis 5 Gew.-%, besonders bevorzugt 0,1 bis 5 Gew.%, jeweils bezogen auf das Gesamtgewicht des verwendeten Katalysators.

Der verwendete Begriff "Benzolpolycarbonsäure oder eines Derivats davon" umfasst alle Benzolpolycarbonsäuren an sich, zum Beispiel Phthalsäure, Isophthalsäure, Terephthalsäure, Trimellitsäure, Trimesinsäure, Hemimellitsäure und Pyromellitsäure und Derivate davon, wobei insbesondere Mono-, Di-, Tri- und Tetraester, insbesondere Alkylester, und Anhydride zu nennen sind. Bevorzugt sind die Alkylester der genannten Säuren, wobei die Alkylgruppe bevorzugt ein Rest R ist, der vorstehend definiert wurde.

Die bevorzugt eingesetzten Benzolpolycarbonsäurealkylester werden im Allgemeinen durch Umsetzung von Benzolpolycarbonsäuren und/oder Benzolpolycarbonsäureanhydriden mit den Alkylgruppen der Ester entsprechenden Alkoholen hergestellt. Geeignete Reaktionsbedingungen zur Umsetzung der Benzolpolycarbonsäuren mit den entsprechenden Alkoholen sind dem Fachmann bekannt.

Ein weiterer Gegenstand der vorliegenden Anmeldung sind Kleb- oder Dichtstoff enthaltend (A) 10 bis 90 Gew.-% mindestens einer Verbindung ausgewählt aus der Gruppe der Polyurethane, Polyharnstoffe, Polyacrylate und Polysulfide und (B) 1 bis 50 Gew.-% mindestens eines Cyclohexanpolycarbonsäure-Derivates, wobei der Kleb - oder Dichtstoff kein C₄- bis C₈-Alkylterephthalat enthält und wobei die Komponente (B) nach dem folgenden Verfahren herstellbar ist
a) Veresterung einer Benzolpolycarbonsäure der Formel II 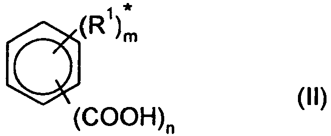 worin
   - R^{1*}: Wasserstoff oder eine C₁-C₁₀-Alkyl- oder C₃-C₈-Cycloalkyl-Gruppe bedeutet,
   - m: 2, 3 oder 4 bedeutet, und
   - n: 2, 3 oder 4 bedeutet,
   mit einem oder mehreren Alkoholen der Formel

   R-OH

   worin
   - R: C₁-C₃₀-Alkyl, bevorzugt C₁-C₂₀-Alkyl, besonders bevorzugt C₁-C₁₈-Alkyl, ganz besonders bevorzugt C₁-C₁₃-Alkyl bedeutet,
   wobei ein Benzolpolycarbonsäureester der Formel III erhalten wird 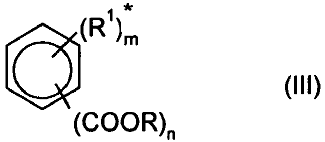
b) Hydrierung des Benzolpolycarbonsäureesters der Formel III zu einem entsprechenden Cyclohexanpolycarbonsäureester der allgemeinen Formel I.

Bevorzugte Ausführungsformen von R^{1*}, m, n und R sind vorstehend bezüglich der Cyclohexanpolycarbonsäureester gemäß Formel I erwähnt.

Eine bevorzugte Ausführungsform der Hydrierung des Benzolpolycarbonsäureesters der Formel III (Schritt b)) ist vorstehend erwähnt.

Bevorzugt eingesetzte Benzolpolycarbonsäuren sind Phthalsäure, Isophthalsäure, Terephthalsäure, Trimellitsäure, Trimesinsäure, Hemimellitsäure und Pyromellitsäure. Ganz besonders bevorzugt wird Phthalsäure eingesetzt. Die vorstehend genannten Säuren sind kommerziell erhältlich.

Als Alkohole werden bevorzugt die den Resten R der Cyclohexanpolycarbonsäurederivate der Formel I entsprechenden Alkohole eingesetzt. Bevorzugt werden somit lineare oder verzweigte Alkohole mit C₁-C₁₃-Alkylresten eingesetzt. Bei den zur Veresterung mit den Benzolpolycarbonsäuren eingesetzten Alkoholen kann es sich jeweils um die den vorstehend genannten Resten R entsprechenden einzelnen Isomere der Alkohole oder um Gemische verschiedener Alkohole mit isomeren Alkylresten mit derselben Zahl von Kohlenstoffatomen handeln und/oder um Gemische verschiedener Alkohole mit unterschiedlicher Zahl der Kohlenstoffatome.

Die zur Umsetzung mit den Benzolpolycarbonsäuren geeigneten Alkohole oder Alkoholgemische können nach allen dem Fachmann bekannten Verfahren hergestellt werden. Geeignete Verfahren zur Herstellung von Alkoholen oder Verfahrensschritte, die bei der Herstellung von Alkoholen angewendet werden, sind zum Beispiel:
- Hydroformylierung mit anschließender Hydrierung der gebildeten Aldehyde, zum Beispiel wie in WO 92/13818, DE-A 2 009 505, DE-A 199 24 339, EP-A 1 113 034, WO 00/63151, WO 99/25668, JP-A 1 160 928, JP-A 03 083 935, JP-A 2000/053803, EP-A 0 278 407, EP-A 1 178 029, FR-A 1 304 144, JP-A 30 44 340, JP-A 30 44 341, JP-A 30 44 342, JP-A 0 40 36 251, GB-A 721,540, DE-A 195 304 14, JP-A 2001/049029, US 2,781,396, US 3,094,564, FR-A 1 324 873, JP-A 0 816 9854, US 3,153,673, US 3,127,451, US 1,828,344, WO 2003/66642, WO 2003/18912, EP-A 0 424 767, WO 2002/68369, EP-A 0 366 089, JP-A 2001/002829, DE-A 100 35 617, DE-A 199 55 593, WO 2002/00580, EP-A 0 643 031, US 2,876,264, JP-A 2000/319444 und DE-A 100 32 580 offenbart;
- Hydrierung von Aldolprodukten, zum Beispiel wie in DE-A 102 51 311, JP-A 05 194 761, US 3,272, 873, DE-A 3 151 086, JP-A 2001/322959, WO 98/03462 und EP-A 0 603 630 offenbart;
- Hydratisierung von Alkenen, zum Beispiel wie in US 5,136,108, EP-A 0 325 144, EP-A 0 325 143, DE-A 100 50 627, US 4,982,022, GB-A 2,187,741, DE-A 36 28 008, US 3,277,191, JP-A 2000/191 566, DE-A 854 377, DE-A 38 01 275, DE-A 39 25 217, JP-A 06 321 828, JP-A 02 088 536, JP-A 06 287 156, JP-A 06 287 155, JP-A 54 141 712, JP-A 08 283 186, JP-A 09 263 558 und US 4,684,751 offenbart.
- Hydrierung von Carbonsäuren und Carbonsäureestem, insbesondere Fettsäuren und Fettsäureestern, zum Beispiel wie in US 5,463,143, US 5,475,159, WO 94/10112, CA 2,314,690, WO 94/06738, JP-A 06 065 125 und US 3,361,832 offenbart.
- Hydrierung von ungesättigten Alkoholen oder von Carbonylverbindungen, zum Beispiel wie in EP-A 0 394 842, DE-A 1 269 605, WO 88/05767, FR-A 1,595,013, EP-A 0 326 674, BE-A 756 877, BE-A 757 561, DE-A 1 277 232, FR-A 1,499,041 und DE-A 1 276 620 offenbart;
- Hydrierung von Epoxiden, zum Beispiel wie in FR-A 1,508,939, GB-A 879 803 und DE-A 1 078 106 offenbart;
- Verfahren umfassend einen Telomerisationsschritt, zum Beispiel wie in EP-A 0 330 999, DE-A 1 138 751, US 5,908,807, NE-6,603,884 und US 3,091,628 offenbart,
- Verfahren umfassend einen Isomerisierungsschritt, zum Beispiel wie in DE-A 42 28 887 offenbart;
- Hydrolyse von Sulfaten, zum Beispiel wie in GB-A 1,165,309 offenbart;
- Umsetzung von Dienen mit Aminen, zum Beispiel wie in DE-A 44 31 528 offenbart;
- Enzymatische Herstellung von Alkoholen, zum Beispiel wie in WO 93/24644 offenbart;
- Selektive Hydrierung von Dienen, zum Beispiel wie in US 3,203,998, DE-A 21 41 186, GB-A 2,093,025, JP-A 02 129 24, JP-A 1 122 8468, DE-A 195 44 133, WO 94/00410, GB-A 2,260,136, DE-A 44 10 746 und JP-A 08 176 036 offenbart;
- Herstellung von Alkoholen aus Nitrilen, zum Beispiel wie in EP-A 0 271 092 offenbart;
- Herstellung von Alkoholen durch Umsetzung von Alkinen, zum Beispiel wie in RU 205 9597-C1 offenbart; und
- Hydrogenolyse von substituierten Tetrahydropyranen, zum Beispiel wie in GB 1,320,188 offenbart.

Dem Fachmann sind weitere Verfahren zur Herstellung von Alkoholen bekannt, die ebenfalls zur Herstellung von zur Veresterung mit Benzolpolycarbonsäuren geeigneten Alkoholen oder Alkoholgemischen eingesetzt werden können. Bevorzugt eingesetzte Alkohole sind - wie vorstehend erwähnt - Alkohole, die C₁-C₁₃-Alkylreste aufweisen. Insbesondere die längerkettigen C₅-C₁₃-Alkohole bzw. Alkoholgemische, die diese Alkohole enthalten, werden besonders bevorzugt durch katalytische Hydroformylierung (auch als Oxoreaktion bezeichnet) von Olefinen und anschließende Hydrierung der gebildeten Aldehyde hergestellt. Geeignete Hydroformylierungsverfahren sind dem Fachmann bekannt und sind in den vorstehend genannten Dokumenten offenbart. Die in den genannten Dokumenten offenbarten Alkohole und Alkoholgemische können mit den vorstehend genannten Benzolpolycarbonsäuren zu den gewünschten Benzolpolycarbonsäurealkylestem bzw. -estergemischen umgesetzt werden.

C₅-Alkohole bzw. Gemische, die C₅-Alkohole, besonders bevorzugt n-Pentanol enthalten, können zum Beispiel durch Hydroformylierung von Butadien in Anwesenheit einer wässrigen Lösung einer Rhodiumverbindung und eines Phosphins als Katalysator hergestellt werden. Ein solches Verfahren ist zum Beispiel in EP-A 0 643 031 offenbart.

Geeignete C₇-Alkoholmischungen, die zur Veresterung mit den Benzolpolycarbonsäuren eingesetzt werden können, sind zum Beispiel in JP-A 2000/319 444 offenbart. Die Herstellung der C₇-Alkoholmischung erfolgt durch Hydroformylierung mit anschließender Hydrierung der gebildeten Aldehyde.

Mischungen enthaltend C₈-Alkohole und deren Herstellungsverfahren sind zum Beispiel in GB-A 721 540 offenbart, worin ein Verfahren zur Herstellung von Isooctylalkoholen ausgehend von Heptenen mittels Hydroformylierung und anschließender Hydrierung beschrieben wird. Weitere Dokumente, die die Herstellung von C₇-Alkoholen bzw. diese Alkohole enthaltenden Mischungen offenbaren, sind DE-A 195 30 414, JP-A 2001/49029, US 2,781,396, US 3,094,564, FR-A 1,324,873, JP-A 08 169 854, US 3,153,673, US 3,127,451 und US 1,828,344.

C₉-Alkohole bzw. Mischungen enthaltend C₉-Alkohole werden bevorzugt durch Dimerisierung von Butenen, Hydroformylierung der erhaltenen Octene und anschließende Hydrierung des erhaltenen C₉-Aldehyds hergestellt.

Geeignete Verfahren und C₉-Alkohole enthaltende Mischungen sind zum Beispiel in WO 92/13818, DE-A 20 09 505, DE-A 199 24 339, EP-A 1 113 034, WO 2000/63151, WO 99/25668, JP-A 1 160 928, JP-A 03 083 935, JP-A 2000/053803, EP-A 0 278 407 und EP-A 1 178 029 offenbart.

C₁₀-Alkohole und Mischungen enthaltend diese Alkohole sind zum Beispiel in WO 2003/66642, WO 2003/18912, EP-A 0 424 767, WO 2002/68369, EP-A 0 366 089 und JP-A 2001/002829 offenbart.

C₁₂-Alkohole bzw. Mischungen enthaltend C₁₂-Alkohole, insbesondere Trimethylnonanol, und ein Verfahren zu dessen Herstellung sind zum Beispiel in WO 98/03462 offenbart.

C₁₃-Alkohole sowie Mischungen enthaltend diese Alkohole sind zum Beispiel in DE-A 100 32 580, DE-A 199 55 593 und WO 2002/00580 offenbart.

Besonders bevorzugt werden in den Hilfsmitteln oder als Hilfsmittel gemäß der vorliegenden Anmeldung Dialkylester der vorstehend genannten Cyclohexandicarbonsäuren, insbesondere 1,2-, 1,3- oder 1,4-Dialkylester und ganz besonders bevorzugt 1,2-Dialkylester eingesetzt. Dabei können Dialkylester eingesetzt werden, worin beide Estergruppen der Dialkylester dieselben Alkylreste tragen, sowie Estergruppen, worin die beiden Estergruppen der Dialkylester unterschiedliche Alkylgruppen tragen. Beispiele für gemischte und nicht gemischte Dialkylester der Cyclohexandicarbonsäuren sind bereits vorstehend genannt. Weiterhin ist es möglich, dass die Alkylgruppen der Cyclohexandicarbonsäurealkylester zwar die gleiche Kohlenstoffatomanzahl aufweisen, jedoch geradkettig sind oder unterschiedliche Verzweigungen aufweisen und somit Isomerengemische bilden. Solche Isomerengemische können auch eingesetzt werden, wenn die Kohlenstoffanzahl der Alkylgruppen der Dialkylester unterschiedlich ist. Der Anteil der verschiedenen Isomeren der Alkylgruppen ergibt sich im Allgemeinen aus der Zusammensetzung der Alkohole, die zur Veresterung der Benzoldicarbonsäuren eingesetzt werden, die nach Veresterung zu den Cyclohexandicarbonsärueestern hydriert werden. Geeignete Alkoholmischungen sind vorstehend bereits genannt. Im Sinne der vorliegenden Anmeldung sind somit unter geradkettigen oder verzweigten Alkylresten mit einer bestimmten Anzahl von Kohlenstoffatomen neben den jeweils einzelnen Isomeren Isomerengemische zu verstehen, deren Zusammensetzung sich - wie vorstehend erwähnt - aus der Zusammensetzung der zur Veresterung der Benzoldicarbonsäuren eingesetzten Alkohole ergibt. Unter geradkettigen Alkylresten sind im Sinne der vorliegenden Anmeldung ausschließlich geradkettige Alkylreste zu verstehen, jedoch auch Mischungen von Alkylresten, die überwiegend geradkettig sind.

Handelt es sich bei den Alkylresten R der Cyclohexanpolycarbonsäureester um C₁- bis C₄-Alkylreste, so werden diese durch Umsetzung der Benzolpolycarbonsäuren der Formel II mit Methanol, Ethanol, n-Propanol, iso-Propanol, n-Butanol, iso-Butanol, sek.-Butanol oder tert.-Butanol erhalten. Dabei können zur Herstellung von Benzolpolycarbonsäureestem, worin R 3 oder 4 ist, jeweils Gemische der genannten Propanole oder Butanole eingesetzt werden oder einzelne Isomere. Bevorzugt werden einzelne Isomere des Propanols oder Butanols eingesetzt. Die Herstellung der vorstehend genannten C₁- bis C₄-Alkohole ist dem Fachmann bekannt.

Handelt es sich bei den Alkylresten R der Cyclohexanpolycarbonsäureester um C₅- bis C₁₃-Alkylreste, werden bevorzugt C₅- bis C₁₃-Alkohole eingesetzt, die Verzweigungsgrade (ISO-Index) von im Allgemeinen 0,10 bis 4, bevorzugt 0,5 bis 3, besonders bevorzugt 0,8 bis 2 und insbesondere bei 1 bis 1,5, d.h. im Allgemeinen handelt es sich bei den jeweiligen Alkoholen um Gemische verschiedener Isomere. Ganz besonders bevorzugt werden C9-Alkoholgemische mit einem ISO-Index vom 1 bis 1,5, insbesondere Nonanolgemische mit einem ISO-Index von 1,25 bzw. 1,6 eingesetzt.
Der ISO-Index ist eine dimensionslose Größe, die mittels Gaschromatographie ("GC") bestimmt werden kann. Beispielsweise können folgende GC-Bedingungen angewandt werden:

| | | |
|---|---|---|
| Methode: | Kapillar GC | |
| Apparatur: | Kapillar Gaschromatograph mit Autosampler, Split/Splitless-Injektionssystem und Flammenionisationsdetektor (FID) | |
| Chemikalien: | - MSTFA (N-Methyl-N-trimethylsilyltrifluoracetamid) | |
| | - Eichalkohole zur Bestimmung der Retentionszeiten | |
| Probenvorbereitung: | 3 Tropfen der Probe werden in 1 ml MSTFA und für 60 Minuten bei 80 °C gehalten | |
| GC Bedingungen: | Kapillarsäule: | Ultra-1 (Bezug über Carl Roth GmbH; 76185 Karlsruhe, DE) |
| | Stationäre Phase: | Polydimethylsiloxan |
| | - Länge: | 50 m |
| | - Innendurchmesser: | 0,25 mm |
| | - Filmdicke: | 0,1 Mikrometer |
| | Trägergas: | Helium |
| | Säulenvordruck: | 200 psi constant |
| | Split: | 80 ml/min |
| | Septumspülung: | 3 ml/min |
| | Ofentemperatur: | 120 °C, 25 min isotherm |
| | Injektortemperatur: | 250 °C |
| | Detektortemperatur: | 250 °C (FID) |
| | Injektionsvolumen: | 0,5 Mikroliter |

### Berechnung

Die Vorgehensweise bei der Berechnung des Isoindex wird in der folgenden Tabelle ersichtlich:

| Komponente | Name | Verzweigung | Anteil in FI.% | Index |
|---|---|---|---|---|
| 1 | 2-Ethyl-2-methylhexanol-1 | 2 | 1,00 | 0,0200 |
| 2 | 2-Ethyl-4-methylhexanol-1 | 2 | 1,00 | 0,0200 |
| 3 | 2-Ethyl-4-methylhexanol-1 | 2 | 1,00 | 0,0200 |
| 4 | 2-Propyl-3-methylpentanol-1 | 2 | 1,00 | 0,0200 |
| 5 | 2-Propyl-hexanol-1 | 1 | 1,00 | 0,0100 |
| 6 | 2,5-Dimethylheptanol-1 | 2 | 1,00 | 0,0200 |
| 7 | 2,3-Dimethylheptanol-1 | 2 | 1,00 | 0,0200 |
| 8 | 2,3,4-Trimethylhexanol-1 | 3 | 1,00 | 0,0300 |
| 9 | 2-Ethylheptanol-1 | 1 | 1,00 | 0,0100 |
| 10 | 3-Ethyl-4-methylhexanol-1 | 2 | 82,00 | 1,6400 |
| 11 | 3-Ethylheptanol-1 | 1 | 1,00 | 0,0100 |
| 12 | 2-Methyloktanol-1 | 1 | 1,00 | 0,0100 |
| 13 | 4,5-Dimethylheptanol-1 | 2 | 1,00 | 0,0200 |
| 14 | 4,5-Dimethylheptanol-1 | 2 | 1,00 | 0,0200 |
| 15 | 4-Methyloktanol-1 | 1 | 1,00 | 0,0100 |
| 15a | 7-Methyloktanol-1 | 1 | 1,00 | 0,0000 |
| 16 | 6-Methyloktanol-1 | 1 | 1,00 | 0,0100 |
| 17 | Nonanol-1 | 0 | 1,00 | 0,0000 |
| | | Summe: | 99,00 | 1,9000 |
| | Unbekannte Komponente | 2 | 1,00 | 0,0200 |
| | | | Isoindex: | 1,9200 |

Die C₅- bis C₁₃-Alkohole werden gemäß den vorstehend genannten Verfahren hergestellt. Zur Herstellung von Cyclohexanpolycarbonsäureestern, worin R 9 ist, wird besonders bevorzugt ein Nonanol-Gemisch eingesetzt, worin 0 bis 20 Gew.-%, bevorzugt 0,5 bis 18 Gew.-%, besonders bevorzugt 6 bis 16 Gew.-% des Nonanol-Gemisches keine Verzweigung aufweisen, 5 bis 90 Gew.-%, bevorzugt 10 bis 80 Gew.-%, besonders bevorzugt 45 bis 75 Gew.-%, eine Verzweigung, 5 bis 70 Gew.-%, bevorzugt 10 bis 60 Gew.-%, besonders bevorzugt 15 bis 35 Gew.-% zwei Verzweigungen, 0 bis 10 Gew.-%, bevorzugt 0 bis 8 Gew.-%, besonders bevorzugt 0 bis 4 Gew.-% drei Verzweigungen aufweisen und 0 bis 40 Gew.-%, bevorzugt 0,1 bis 30 Gew.-%, besonders bevorzugt 0,5 bis 6,5 Gew.-%. sonstige Komponenten sind. Unter sonstigen Komponenten sind im Allgemeinen Nonanole mit mehr als drei Verzweigungen, Decanole oder Octanole zu verstehen, wobei die Summe der genannten Komponenten 100 Gew.-% ergibt.

Eine besonders bevorzugte Ausführungsform eines Nonanol-Gemisches, das zur Herstellung von bevorzugt verwendeten Cyclohexanpolycarbonsäurederivaten eingesetzt wird, weist die folgende Zusammensetzung auf:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6 Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; wobei die Gesamtsumme der genannten Komponenten 100 Gew.-% ergibt.

Eine weitere besonders bevorzugte Ausführungsform eines Nonanol-Gemisches, das zur Herstellung von bevorzugt verwendeten Cyclohexanpolycarbonsäurederivaten eingesetzt wird, weist die folgende Zusammensetzung auf:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
wobei die Gesamtsumme der genannten Komponenten 100 Gew.-% ergibt.

In der vorliegenden Anmeldung wird unter dem Begriff Kleb- oder Dichtstoffe jede Zusammensetzung verstanden, durch welche eine stoffschlüssige Verbindung zwischen zwei oder mehreren Gegenständen oder Körpern hergestellt werden kann oder welche sich zum Verfüllen von Öffnungen, Nahtstellen oder Räumen in, an oder zwischen einem oder mehreren Gegenständen oder Körpern eignen (bspw. Rillen, Löcher, Risse, Fugen, Räume zwischen benachbarten oder überlappenden Gegenständen, Poren und Nähten). So werden Dichtstoffe bspw. für das Verfüllen von Räumen verwendet, welche durch benachbarte oder überlappende Strukturen vorgegeben sind, wie etwa Fenster- und Sanitärfugen oder Fugen im Fahrzeug-, Flugzeug- oder Schiffbau, sowie Hoch-, Tiefbau- und Fußbodenfugen. In speziellen Ausführungsformen können die Dichtstoffe auch dazu verwendet werden, Oberflächen zu glätten oder als Abdichtmasse das Ein- oder Austreten von Feuchtigkeit, Chemikalien oder Gasen durch die genannten Öffnungen, Fugen oder Hohlräume zu verhindern, wobei die vorgenannten Eigenschaften keine notwendigen Merkmale der genannten Kleb- und Dichtstoffe darstellen. Kleb- und Dichtstoffe härten bei oder nach der Anwendung durch chemische oder physikalische Vorgänge einer oder mehrerer Komponenten der Zusammensetzung aus.

In speziellen Ausführungsformen der vorliegenden Erfindung handelt es sich um selbsthärtende Kleb- oder Dichtstoffe. Hierunter wird verstanden, dass die Zusammensetzungen nach Applikation härten, ohne dass dabei für den Aushärtungsprozess ein Einwirken von außen notwendig wäre, wie etwa Erwärmen oder Bestrahlen. In weiteren Ausführungsformen kann es sich um Emulsionen eines oder mehrerer Polymere in Wasser oder anderen Lösungsmitteln handeln (bspw. Polyacrylate), welche beim Trocknen auf physikalische Weise aushärten. Weiterhin ist es aber auch möglich, dass die eingesetzten Prepolymere durch die Umgebungsfeuchtigkeit polymerisieren, was bspw. bei den isocyanat-terminierten Polyharnstoff-Prepolymeren der Fall ist. Bei den erfindungsgemäßen Kleb- oder Dichtstoffen kann es sich auch um Zwei- oder Mehrkomponenten-Systeme handeln, welche kurz vor oder während der Applikation miteinander in Kontakt gebracht und/oder miteinander vermischt werden, wobei die so ausgelöste Reaktion zu einer Härtung des Systems führt (bspw. Zweikomponenten-Polyharnstoff-Systeme).

Bei denen als Komponente A) eingesetzten Polymeren handelt es sich allgemein um Produkte, welche durch die Polymerisation mindestens eines Monomertyps erhalten wurden. Enthalten die Polymere zwei oder mehr Monomertypen, können diese Monomere in jeder Form im Polymer angeordnet sein, d. h. sie können entweder statistisch verteilt oder in Blöcken vorliegen. Es ist efindungswesentlich, dass als Komponente (A) mindestens ein Polymer aus der Gruppe der Polyharnstoffe, Polyacrylate und Polysulfide eingesetzt wird.

Die Polyharnstoffe sind aus mindestens einer Polyamin-Komponente sowie einer Polyisocyanatkomponente aufgebaut und können optional Kettenverlängerer enthalten.

Die Herstellungsweise der Polyharnstoff-Prepolymere ist für die vorliegende Erfindung nicht kritisch. Es kann sich somit um einen einstufigen Prozess handeln, wobei die Polyamine, Polyisocyanate und Kettenverlängerer gleichzeitig miteinander zur Reaktion gebracht werden, was bspw. in einer Batch-Reaktion geschehen kann, oder es kann sich um einen zweistufigen Prozess handeln, in dem bspw. zunächst ein Prepolymer gebildet wird, welches im Anschluss mit Kettenverlängerern zur Reaktion gebracht wird.

Die Polyharnstoffe können auch noch weitere Struktureinheiten enthalten, insbesondere kann es sich hierbei um Allophanate, Biuret, Uretdion oder Cyanurate handeln. Die vorgenannten Gruppen sind allerdings nur Beispiele, wobei die erfindungsgemäßen Polyharnstoffe auch weitere Struktureinheiten enthalten können. Auch der Grad der Verzweigung ist für die vorliegende Erfindung unkritisch, so dass sowohl lineare als auch hochverzweigte Polymere eingesetzt werden können.

In einer bevorzugten Ausführungsform der Erfindung beträgt das molare Verhältnis der im Polymer enthaltenen Isocyanat-Komponente zu der Summe Polyamin-Komponente 0,01 bis 50, bevorzugt 0,5 bis 3,0.

Bei der Isocyanat-Komponente handelt es sich bevorzugt um eine aliphatische, cycloaliphatische, araliphatische und/oder aromatische Verbindung, bevorzugt um ein Diisocyanat oder Triisocyanat, wobei es sich auch um Mischungen dieser Verbindungen handeln kann. Hierbei ist es als bevorzugt anzusehen, dass es sich um Hexamethylendiisocyanat-1,6 (HDI), HDI Uretdion, HDI Isocyanurat, HDI Biuret, HDI Allophanat, 1-Isocyanato-3,3,5-trimethyl-5-isocyanatomethylcyclohexan (IPDI), 2,4- und/oder 2,6-Toluylendiisocyanat (TDI) und/oder 4,4'-, 2,4'- und/oder 2,2'-Diphenylmethandiisocyanat (MDI), Polymeres MDI, Carbodiimid-modifiziertes 4,4'-MDI, m-Xylendiisocyanat (MXDI), m- oder p-Tetramethylxylendiisocyanat (m-TMXDI, p-TMXDI), 4,4'-Dicyclohexylmethandiisocyanat (H12MDI), Naphthalin-1,5-Diisocyanat, Cyclohexan-1,4-diisocyanat, hydriertes Xylylen-diisocyanat (H6XDI), 1-Methyl-2,4-diisocyanato-cyclohexan, Tetramethoxybutan-1,4-diisocyanat, Butan-1,4-diisocyanat, 1,6-Diisocyanato-2,2,4-trimethylhexan, 1,6-Diisocyanato-2,4,4-trimethylhexan, 1-Isocyanato-1-methyl-4(3)-isocyanatomethylcyclohexan (IMCI) sowie 1,12-Dodecandiisocyanat (C12DI) handelt. Weiterhin kann es sich um 4-Dichlorophenyl diisocyanat, Dicyclohexylmethan-4,4'-diisocyanat, m-Phenylendiisocyanat, p-Phenylendiisocyanat, 4-Chloro-1,3-phenylendiisocyanat, 1,6-Hexamethylendiisocyanat, 1,10-Decamethylenediisocyanat, Lysinalkylesterdiisocyanat, 3,3'-Dimethyl-4,4'-diphenylmethandiisocyanat, Xylylendiisocyanat, Tetramethylxylylendiisocyanat, 1,5-Tetrahydronaphthalendiisocyanat, Triisocyanatotoluol, Methylenbis(cyclohexyl)-2,4'-diisocyanat und 4-Methylcyclohexan-1,3-diisocyanat handeln. Insbesondere sind Polyisocyanate mit zwei oder drei Isocyanatgruppen pro Molekül geeignet. Es kann sich aber auch um Mischungen von Polyisocyanaten handeln, wobei die durchschnittliche NCO-Funktionalität der Isocyanatkomponente in der Mischung insbesondere bei 2,1 bis 2,3, 2,2 bis 2,4, 2,6 bis 2,8 oder 2,8 bis 3,0 liegen kann. Derivatisierte Polyisocyanate können ebenfalls verwendet werden, beispielsweise sulfonierte Isocyanate, blockierte Isocyanate, Isocyanurate und Biuret-Isocyanate.

Die Polyamine enthalten bevorzugt zwischen zwei und 10, besonders bevorzugt zwischen zwei und drei Aminogruppen und besitzen ein gewichtsmittleres Molekulargewicht zwischen 32 und 30000, besonders bevorzugt zwischen 90 und 18000 g/mol.

Als erfindungsgemäß einsetzbare Polyamin-Komponente eignen sich insbesondere Hydrazin, Hydrazinhydrat und substituierte Hydrazine, wie N-Methylhydrazin, N,N'-Dimethylhydrazin, Säurehydrazide der Adipinsäure, Methyladipinsäure, Sebacinsäure, Hydracrylsäure, Terephthalsäure, Isophthalsäure, Semicarbazidoalkylen-hydrazide, wie 13-Semicarbazidopropionsäurehydrazid, Semicarbazidoalkylen-carbazinester, wie z. B. 2-Semicarbazidoethyl-carbazinester und/ oder Aminosemicarbazid-Verbindungen, wie 13-Aminoethylsemicarbazidocarbonat. Weiterhin eignen sich zur Herstellung der Polyharnstoffe Polyamine basierend auf Polyestern, Polyolefinen, Polyacetalen, Polythioethern, Polyethercarbonaten, Polyethyleneterephthalaten, Polyesteramiden, Polycaprolactamen, Polycarbonaten, Polycaprolactonen und Polyacrylaten, welche mindestens zwei Amingruppen aufweisen. Polyamine, z.B. solche, die unter dem Handelsnamen Jeffamine® (es handelt sich um Polyetherpolyamine) vertrieben werden, sind auch geeignet.

Als Polyamin-Komponente kommen auch die als sogenannte Kettenverlänger bekannten Spezies in Frage, welche bei der Herstellung von Polyharnstoffen mit überschüssigen Isocyanatgruppen reagieren, normalerweise ein Molekulargewicht (Mn) von unter 400 aufweisen und häufig in Form von, Aminopolyolen oder aliphatischen, cycloaliphatischen oder araliphatischen Polyaminen vorliegen.

Geeignete Kettenverlängerer sind beispielsweise:
- Aliphatische Diamine, aromatische Diamine und alicyclische Diamine, insbesondere Methylenediamin, Ethylendiamin, 1,2-und 1,3-Diaminopropan, 1,4-Diaminobutan, Cadaverin (1,5-Diaminopentan), 1,6-Hexamethylendiamin, Isophorondiamin, Piperazin, 1,4-Cyclohexyldimethylamin, 4,4'-Diaminodicyclohexylmethan, Aminoethylethanolamin, 2,2,4-Trimethylhexamethylendiamin, 2,4,4-Trimethylhexamethylendiamin, Octamethylendiamin, m- or p-Phenylendiamin, 1,3- oder 1,4-Xylylendiamin, hydriertes Xylylendiamin, Bis(4-aminocyclohexyl)methan, 4,4'-Methylen-bis-(ortho-chtoroanilin), Di-(methylthio)-toluoldiamin, Diethyltoluoldiamin, N,N'-Dibutylamindiphenylmethan, Bis-(4-amino-3-methylcyclohexyl)methan, Isomerengemische von 2,2,4- und 2,4,4-Trimethyl-hexamethylendiamin, 2-Methyl-pentamethylendiamin, Diethylentriamin, und 4,4- Diaminodicyclohexylmethan sowie
- Ethanolamin, Hydrazinethanol, 2-[(2-Aminoethyl)amino]ethanol.

Schließlich soll erwähnt sein, dass die Polyamin-Komponente Doppelbindungen enthalten kann, welche z.B. aus langkettigen, aliphatischen Carbonsäuren oder Fettalkoholen resultieren können. Eine Funktionalisierung mit olefinischen Doppelbindungen ist z. B. auch durch den Einbau vinylischer und/oder allylischer Gruppen möglich, welche ggf. alkyl-, aryl- und /oder aralkyl-substituiert sind, sowie ungesättigten Säuren wie Maleinsäureanhydrid, Acrylsäure oder Methacrylsäure sowie deren jeweiligen Estern stammen.

Bevorzugt im Sinne der Erfindung ist es, dass es sich bei der Polyamin-Komponente um Polypropylendiamin, Polypropylentriamin, Polypropylenpolyamin, Poly-THF-diamin handelt. Weiterhin kann es sich auch um Mischungen der genannten Verbindungen handeln.

Hinsichtlich der erfindungsgemäßen Eigenschaftenen der Kleb- und Dichtstoffe ist es weiterhin besonders vorteilhaft, wenn die Polyharnstoffe 2,4- und/oder 2,6-Toluylendiisocyanat (TDI) und/oder 4,4'-, 2,4'- und/oder 2,2'-Diphenylmethandiisocyanat (MDI) und oder 1-Isocyanato-3,3,5-trimethyl-5-isocyanatomethylcyclohexan (IPDI) enthalten, insbesondere Isomerengemische des TDI, wobei ein 2,4-Isomerenanteil von über 40% besonders bevorzugt ist.

Die Polyharnstoffe der vorliegenden Erfindung können auch Vernetzer-Komponenten, Kettenstopper-Komponenten und weitere reaktive Komponenten enthalten. Einige Vernetzer wurden bereits unter den Kettenverlängerern mit mindestens drei gegenüber NCO reaktiven Wasserstoffen aufgeführt. Insbesondere kann es sich um Tetra(2-hydroxypropyl)ethylenediamine und Polymere mit mindestens drei reaktiven Wasserstoffen handeln (z.B. Polyetheramine mit mindestens drei Amingruppen). Als Kettenstopper kommen insbesondere Verbindungen mit reaktiven Wasserstoffen in Frage, wie Monoamine, Monothiole und Monocarbonsäuren.

Für die Polyharnstoffe können als latente Härter Oxazolidine, insbesondere Oxazolidine aus Diethanolamin und Isobutylaldehyd oder Pivalaldehyd und/oder Aldemine aus Isophorondiamin, z.B. Incozol HP und Imine z.B. Vestamin A139, niedermolekularen aliphatischen Diaminen z.B. Hexandiamin und/oder Polyetherpolyamine wie z.B. Jeffamine^{®} und Isobutyraldehyd oder Pivalaldehyd und/oder ein Polyamin wie z.B. Hexamethylendiamin oder ein Jeffamin^{®} blockiert mit einem Hydroxypivalaldehydester eingesetzt werden.

In einer bevorzugten Ausführungsform enthält der erfindungsgemäße Kleb- oder Dichtstoff Polyharnstoffe, welche freie Isocyanat-Gruppen aufweisen. Insbesondere handelt es sich hierbei um isocyanat-terminierte Prepolymere. Die Isocyanat-Gruppen können mit Wasser reagieren (einschließlich Feuchtigkeit aus der Atmosphäre), wobei AminGruppen gebildet werden, welche mit den Isocyanat-Gruppen der anderen Polyurethan- oder Polyharnstoff-Moleküle reagieren und hierbei Harnstoff-Verknüpfungen ausbilden, wodurch der Kleb- oder Dichtstoff aushärtet.

In einer weiteren Ausführungsform werden Polyharnstoff- Kleb- und Dichtstoffe als Zweikomponenten-System ausgeführt. Die erste Komponente kann ein Polyisocyanat und/oder NCO-Prepolymer und die zweite Komponente ein Polyamin und/oder einen Kettenverlängerer enthalten. Nach dem Vermischen der beiden Komponenten reagieren diese beiden Bestandteile miteinander, wodurch der Kleb- oder Dichtstoff aushärtet.

In einer weiteren erfindungsgemäßen Ausführungsform werden Polyharnstoff-Prepolymere mit mindestens einer geeigneten funktionalisierten polymerisierbaren Verbindung enthaltend Doppelbindung umgesetzt, wie z.B. Hydroxyethylmethacrylat, Hydroxyethylacrylat, Hydroxypropylmethacrylat, Hydroxypropylacrylat, 4-Hydroxybutylvinylether und Isoprenol.

Unter den erfindungsgemäß einsetzbaren Acrylaten sind Verbindungen zu verstehen, welche mindestens ein Monomer aus der Reihe der Acrylsäureester und Methacrylsäureester enthalten, wobei bevorzugt mindestens 70 Gew.-% des Polymers aus mindestens einer Verbindung der Reihe der Acrylsäureester, Methacrylsäureester und Styrole besteht.

Bei den Monomeren der Acrylat-Komponente handelt es sich bevorzugt um mindestens eine Verbindung aus der Reihe Ethyldiglycolacrylat, 4-tert. Butylcyclohexylacrylat, Dihydrocyclopentadienylacrylat, Lauryl(meth)acrylat, Phenoxyethyl(meth)acrylat, Isobornyl(meth)acrylat, Dimethylaminoethyl(meth)acrylat, Cyanoacrylate, Citraconat, Itaconat und deren Derivate, (Meth)acrylsäure, Methyl(meth)acrylat, Ethyl(meth)acrylat, n-Propyl(meth)acrylat, Isopropyl(meth)acrylat, n-Butyl(meth)acrylat, Isobutyl(meth)acrylat, tert-Butyl(meth)acrylat, n-Pentyl(meth)acrylat, n-Hexyl(meth)acrylat, Cyclohexyl(meth)acrylat, n-Heptyl(meth)acrylat, n-Octyl(meth)acrylat, 2-Propylheptyl(meth)acrylat, 2-Ethylhexyl(meth)acrylat, Nonyl(meth)acrylat, Decyl(meth)acrylat, iso Decyl(meth)acrylat, Dodecyl(meth)acrylat, Phenyl(meth)acrylat, Toluyl(meth)acrylat, Benzyl(meth)acrylat, 2-Methoxyethyl(meth)acrylat, 3-Methoxybutyl(meth)acrylat, 2-Hydroxyethyl(meth)acrylat, 2-Hydroxypropyl(meth)acrylat, Stearyl(meth)acrylat, Glycidyl(meth)acrylat, 2-Aminoethyl(meth)acrylate, γ-(Methacryloyloxypropyl)trimethoxysilan, Ethyleneoxid Addukte von (Meth)acrylsäure, Trifluoromethylmethyl(meth)acrylat, 2-Trifluoromethylethyl(meth)acrylat, 2-Perfluoroethylethyl(meth)acrylat, 2-Perfluoroethyl-2-perfluorobutylethyl(meth)acrylat, 2-Perfluoroethyl(meth)acrylat, Perfluoromethyl(meth)acrylat, Diperfluoromethylmethyl(meth)acrylat, 2-Perfluoromethyl-2-perfluoroethylmethyl(meth)acrylat, 2-Perfluorohexylethyl(meth)acrylat, 2-Perfluorodecylethyl(meth)acrylat und 2-Perfluorohexadecylethyl(meth)acrylat.

In einer besonderen Ausführungsform handelt es sich um zwei oder mehrere Monomere aus der Reihe n-Butyl(meth)acrylat, 2-Hydroxyethyl(meth)acrylat, Acrylsäure, Methacrylsäure und Methylmethacrylat.

In einer weiteren Ausführungsform werden Copolymere aus mindestens zwei aller vorgenannten Monomere eingesetzt, wobei das Verhältnis in der Form gewählt wird, dass die erhaltenen Copolymere die gewünschten anwendungstechnischen Eigenschaften für Kleb- und Dichtstoffe aufweisen. Dem Fachmann sind geeignete Copolymere mit den gewünschten anwendungstechnischen Eigenschaften bekannt. Insbesondere sind Copolymere aus n-Butylacrylat und Methylmethacrylat bevorzugt, welche in einem molaren Verhältnis eingesetzt werden in denen das erhaltene Copolymer eine Glasübergangstemperatur besitzt, welche zwischen denen der entsprechenden Homopolymere liegt. Insgesamt kann es sich bei den Acrylaten der vorliegenden Erfindung sowohl um Copolymer als auch um Homopolymere handeln.

Die Acrylsäure-Polymere können weiterhin auch andere ethylenisch ungesättigte Monomere enthalten, z.B. Isoprenol oder Hydroxybutylvinylether. Als Beispiele seien hier mono- und polyungesättigte Kohlenwasserstoffmonomere, Vinylester (bspw. Vinylester von C₁- bis C₆-gesättigten Monocarbonsäuren), Vinylether, monoethylenisch ungesättigte Mono- und Polycarbonsäuren und Alkylester dieser Mono- und Polycarbonsäuren (bspw. Acrylsäureester und Methacrylsäureester wie etwa C₁- bis C₁₂-Alkyl und insbesondere C₁- bis C₄-Alkylester), Aminomonomere und Nitrile, Vinyl- und Alkylvinylidene und Amide von ungesättigten Carbonsäuren genannt. Weiterhin kommen ungesättigte Kohlenwasserstoff-Monomere umfassend Styrol-Verbindungen (bspw. Styrol, carboxyliertes Styrol und alpha-Methylstyrol), Ethylen, Propylen, Butylen und konjugierte Diene (Butadien, Isopren und Copolymere von Butadien und Isopren) in Frage. Bezüglich der Vinyl- und Halogenvinylidenmonomere seien Vinylchlorid, Vinylidenchlorid, Vinylfluorid und Vinylidenfluorid genannt. Beispiele für die Vinylester umfassen aliphatische Vinylester, wie etwa Vinylformat, Vinylacetat, Vinylpropionat, Vinylbutyrat, Vinylisobutyrat, Vinylvaleriat, Vinylcaproat und Allylester der gesättigten Monocarbonsäuren wie Allylacetat, Allylpropionat und Allyllactat. Hinsichtlich der Vinylether seien Methylvinylether, Ethylvinylether und N-Butylvinylether genannt. Typische Vinylketone umfassen Methylvinylketone, Ethylvinylketone und Isobutylvinylketone. Beispiele für die Dialkylester der monoethylenisch ungesättigten Dicarbonsäuren sind Dimethylmaleat, Diethylmaleat, Dibutylmaleat, Dioctylmaleat, Diisooctylmaleat, Dinonylmaleat, Diisodecylmaleat, Ditridecylmaleat, Dimethylfumarat, Diethylfumarat, Dipropylfumarat, Dibutylfumarat, Dioctylfumarat, Diisooctylfumarat, Didecylfumarat, Dimethylitaconat, Diethylitaconat, Dibutylitaconat und Dioctylitaconat. Insbesondere handelt es sich bei den monoethylenisch ungesättigten Monocarbonsäuren um Acrylsäure, Methacrylsäure, Ethacrylsäure und Crotonsäure. Bei den monoethylenisch ungesättigten Dicarbonsäuren seien Maleinsäure, Fumarsäure, Itaconsäure und Citronensäure genannt. Als monoethylenisch ungesättigte Tricarbonsäuren können im Hinblick auf die vorliegende Erfindung bspw. Aconitsäure und deren halogensubstituierte Derivate eingesetzt werden. Des Weiteren können die Anhydride und Ester der vorgenannten Säuren (bspw. Maleinsäureanhydrid und Citronensäureanhydrid) eingesetzt werden. Beispiele für Nitrile von ethylenisch ungesättigten Mono-, Di- und Tricarbonsäuren umfassen Acrylonitril, α-Chloracrylonitril und Methacrylonitril. Bei den Amiden der Carbonsäuren kann es sich um Acrylamide, Methacrylamide und andere α-substituierte Acrylamide und N-substituierte Amide bspw. N-Methylolacrylamid, N-Methylolmethylacrylamid, alkylierte N-Methylolacrylamide und N-Methylolmethacrylamide (bspw. N-Methoxymethylacrylamid und N-Methoxymethylmethacrylamid) handeln. Als Aminomonomere können substituierte und unsubstituierte Aminoalkylacrylate, Hydrochloridsalze der Aminomonomere und Methacrylate wie etwa β-Aminoethylacrylat, β-Aminoethylmethacrylat, Dimethylaminomethylacrylat, β-Methylaminoethylacrylat und Dimethylaminomethylmethacrylat eingesetzt werden. Im Rahmen der vorliegenden Erfindung seien hinsichtlich der kationischen Monomere α- und β-ethylenisch ungesättigte Verbindungen genannt, welche sich zur Polymerisation eignen und primäre, sekundäre oder tertiäre Aminogruppen enthalten, bspw. Dimethylaminoethylmethacrylat, Dimethylaminoneopentylacrylat, Dimethylaminopropylmethacrylat und tert.-Butylaminoethylmethacrylat oder organische und anorganische Salze dieser Verbindungen und/oder Alkylammonium-Verbindungen wie etwa Trimethylammoniumethylmethacrylatchlorid, Diallyldimethylammoniumchlorid, β-Acetamidodiethylaminoethylacrylatchlorid und Methaacrylamidopropyltrimethylammoniumchlorid. Diese kationischen Monomere können alleine oder in Kombination mit den vorgenannten weiteren Monomeren eingesetzt werden. Als Beispiele für hydroxyhaltige Monomere seien noch die β-Hydroxyethl(meth)acrylate, β-Hydroxypropyl(meth)-acrylate, γ-Hydroxypropyl(meth)acrylate und genannt.

Unter den erfindungsgemäß verwendbaren Polysulfiden sind organische Polymere zu verstehen, welche Sulfid-Bindungen im Polymer aufweisen. Bspw. kann es sich hierbei um ein Produkt der Reaktion eines organischen Dihalogenids mit Natriumdisulfid handeln. Als Beispiele für die organischen Dihalogenide seien aliphatische Dihalogenide (bspw. bis-Chlorethylformal) und Vinylhalogenide genannt. So führt bspw. die Reaktion von bis-Chlorethylformal mit einer Natriumdisulfit-Lösung zu einem Polymer der folgenden Struktur:

-[CH₂CH₂OCH₂OCH₂CH₂Sₓ]ₙ-

worin "n" die Anzahl der Monomere in dem Polymer und "x" die Anzahl der aufeinander folgenden Sulfid-Bindungen in dem Monomer darstellt (x kann in den Monomeren des gleichen Moleküls variieren). Derartige hochmolekulare Polymere können dann zu kürzerkettigen Polymeren mit terminalen Thiolgruppen umgesetzt werden (bspw. durch reduktive Umsetzung mit NaSH und Na₂SO₂ und nachfolgendes Ansäuem). Auf diese Weise erhält man flüssige überbrückte Polysulfide mit terminalen Thiol-Endgruppen, welche in speziellen Ausführungsformen ein Molekulargewicht im Bereich von 1000 bis 8000 aufweisen. Die flüssigen Polymere können anschließend zu elastomeren Feststoffen gehärtet werden, bspw. durch die Oxidation der Thiol-Endgruppen zu Disulfit-Brücken unter Verwendung eines Oxidationsreagenzes wie etwa Bleioxid, Mangandioxid, Parachinondioxim und Zinkperoxid. Im Rahmen der vorliegenden Erfindung umfassen die Polysulfid-Kleb- und -Dichtstoffe alle Polysulfid-Polymere, welche durch Härtung in einen Feststoff überführt werden können. In speziellen Ausführungsformen umfassen die Polysulfid-Kleb- und -Dichtstoffe 30 bis 90 Gew.-% mindestens eines flüssigen Polysulfid-Polymers, 2 bis 50 Gew.-% eines Füllstoffs, 2 bis 10 Gew.-% eines Cyclohexanpolycarbonsäurederivats, 1 bis 3 Gew.-% eines Wasserfängers und zwischen 6 und 15 Gew.-% weitere Inhaltsstoffe wie etwa Adhesionspromotoren, Lösungsmittel und Härter. Ein Beispiel für die Herstellung von Polysulfid-Kleb- und Dichtstoffen wird in der US 3,431,239 offenbart, wobei diese Methode durch Verweis in die vorliegende Anmeldung aufgenommen wird. Polysulfid-Kleb- und Dichtstoffe können als ein- oder zweikomponentige Systeme eingesetzt werden.

Neben den Komponenten (A) und (B) kann die erfindungsgemäße Zusammensetzung zusätzliche weitere Komponenten enthalten. Dies können unter anderem die folgenden Hilfs- und Zusatzstoffe sein:
- Haftvermittler bspw. Epoxysilane, Anhydridosilane, Addukte von Silanen mit primären Aminosilanen, Ureidosilane, Aminosilane, Diaminosilane, sowie deren Analoga als Monomer oder Oligomer und Harnstoffsilane; z.B. Dynasylan AMEO, Dynasylan AMMO, Dynasylan DAMO-T, Dynasylan 1146, Dynasylan 1189, Silquest A-Link 15, Epoxidharze, Alkyltitanate, Titanchelate, aromatische Polyisocyanate, Phenolharze; die beispielsweise der allgemeinen Formel: 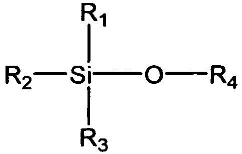 worin
   R₁, R₂ und R₃ unabhängig voneinander Halogen, Amin, Wasserstoff, Alkoxy-, Acyloxy-, Alkyl-, Aryl-, Aralkyloxy-, Alkylaryl-, Aralkylgruppen sowie
   Alkylgruppe mit olefinischen Gruppen, Halogeniden, Amino-, Carbonyl-, Epoxy - und Glycidoxy-, Ester-, Hydroxyimino-, Mercapto- und Sulfido-, Isocyanato-, Anhydrido-, Acryloxy-, Metharyloxy- und Vinylgruppen sowie
   Arylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido- , Acryloxy-, Metharyloxy- und Vinylgruppen sowie
   Alkylarylgruppe mit olefinischen Gruppen, Halogeniden, Amino-, Carbonyl-, Epoxy - und Glycidoxy-, Ester-, Hydroxyimino-, Mercapto- und Sulfido-, Isocyanato-, Anhydrido-, Acryloxy-, Metharyloxy- und Vinylgruppen sowie
   Aralkylgruppe mit olefinischen Gruppen, Halogeniden, Amino-, Carbonyl-, Epoxy - und Glycidoxy-, Ester-, Hydroxyimino-, Mercapto- und Sulfido-, Isocyanato-, Anhydrido-, Acryloxy-, Metharyloxy-, und Vinylgruppen,
   R₄ Alkyl und Aryl
   entsprechen.
- Wasserfänger für wasserfreie Systeme wie sie bei Kleb- und Dichtstoffen auf Basis von Polyurethanen, Polysulfiden und/oder Polyharnstoffen vorliegen, z. B. Vinyltriethoxysilan, Vinyltrimethoxysilan, α-funktionelle Silane wie N-(Silylmethyl)-O-methyl-carbamate, insbesondere N-(Methyldimethoxy-silylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsieb;
- Katalysatoren bspw. Metallkatalysatoren in Form von Organozinnverbindungen wie Dibutylzinndilaurat und Dibutylzinndiacetylacetonat, Bismut-organische Verbindungen oder Bismut-Komplexe; aminogruppenhaltige Verbindungen, bspw. 1,4-Diazabicyclo[2.2.2]-octan und 2,2'-Dimorpholinodiethylether, 1,8-Diazabicyclo[5.4.0]undec-7-ene, 1,5-Diazabicyclo[4.3.0]non-5-ene, sowie Aminosilane. Als Metallkatalysatoren kommen weiterhin Titan-, Zirkon-, Bismut-, Zink - und Lithiumkatalysatoren sowie Metallcarboxylate in Frage, wobei auch Kombinationen verschiedener Metallkatalysatoren eingesetzt werden können;
- Licht- und Alterungsschutzmittel, welche insbesondere als Stabilisatoren gegen Wärme, Licht und UV-Strahlung wirken, beispielsweise phenolische Antioxidanzien welche als Radikalfänger fungieren, wie 2,6-Di-tert-butyl-p-cresol, 2,6-Di-tert-butylphenol, 2,4-Dimethyl-6-tert-butylphenol, 2,2'-Methylene-bis(4-methyl-6-tert-butylphenol), 4,4'-Butyliden-bis(3-methyl-6-tert-butylphenol), 4,4'-Thio-bis(3-methyl-6-tert-butylphenol), 5-Tetrakis[methylene-3-(3,5-di-tert-butyl-4-hydroxyphenyl)propionat]methane und 1,1,3-Tris(2-methyl-4-hydroxy-5-tert-butylphenyl)butane und Antioxidanzien auf Basis von Aminen (beispielsweise Phenyl-β-naphthylamin, α-Naphthylamin, N,N'-Di-sec-butyl-p-phenylendiamin, Phenothiazin und N,N'-Diphenyl-p-phenylendiamine)
- Flammschutzmittel, z.B. Al(OH)₃, Huntit, bromierte Alkyl- und Arylverbindungen;
- Biozide, wie bspw. Algizide, Fungizide oder das Pilzwachstum hemmende Substanzen, z.B. Ag, Ag+, CH₂O- abspaltende Verbindungen;
- Füllstoffe, z. B. gemahlene oder gefällte Calciumcarbonate, welche ggf. mit Fettsäuren bzw. Fettsäurengemischen beschichtet sind, z.B. Stearate, insbesondere feinteiliges beschichtetes Calciumcarbonat, Ruße, insbesondere industriell hergestellte Ruße, Kaoline, Aluminiumoxide, Kieselsäuren, insbesondere hochdisperse Kieselsäure aus Pyrolyseprozessen, PVC-Pulver oder Hohlkugeln. Bevorzugte Füllstoffe sind Ruß, Calciumcarbonate, wie bspw. gefällte oder natürliche Kreidetypen wie Omya 5 GU, Omyalite 95 T, Omyacarb 90 T, Omyacarb 2 T-AV^{®} der Fa. Omya, Ultra P-Flex^{®} der Fa. Specialty Minerals Inc, Socal^{®} U1S2, Socal^{®}312, Winnofil^{®} 312 der Fa. Solvay, Hakuenka^{®} der Fa. Shiraishi, hochdisperse Kieselsäuren aus Pyrolyseprozessen sowie Kombinationen aus diesen Füllstoffen. Ebenfalls geeignet sind Mineralien wie Kieselerde, Talk, Calciumsulfat (Gips) in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotid, die Gruppe der Soro-, Cyclo-, Ino-, Phyllo- und Hectosilicate, die Gruppe der schwerlöslichen Sulfate wie Gips, Anhydrit oder Schwerspat (BaSO₄) sowie Calciummineralien wie Calcit, pulverförmige Metalle (beispielsweise Aluminium, Zink oder Eisen) und Bariumsulfat;
- Rheologie-Modifizierer, wie Verdickungsmittel, z. B. Harnstoffverbindungen sowie Monoamine , z.B. n-Butylamin, Methoxybutylamin und Polyamidwachse, Bentonite, Silicone, Polysiloxane, hydriertes Rizinusöl, Metallseifen, wie Calciumstearat, Aluminumstearat, Bariumstearat, gefällte Kieselsäure, pyrogene Kieselsäure sowie Poly(oxy-1,2-ethandiyl)-α-hydro-Ω-hydroxy-polymer mit Oxy-1,2-ethandiyl-α - hydro-Ω-hydroxy-nonyl-phenoxyglycidylether Oligomeren und 5-Isocyanato-1-(isocyanatomethyl)-1,3,3-trimethylcyclohexan oder Hydroxyethylcellulose oder Polyacrylsäure-Polymere und Copolymere;
- Oberflächenaktive Substanzen wie bspw. Netzmittel, Verlaufsmittel, Entlüftungsmittel, Entschäumer und Dispergiermittel;
- Fasern, bspw. aus Kohlenstoff, Polyethylen oder Polypropylen, SiO₂, Cellulose;
- Pigmente, bspw. Titandioxid;
- Lösemittel wie etwa Wasser, Solvent Naphta, Methylester, aromatische Kohlenwasserstoffe wie Polyalkylbenzole,Toluol und Xylol, Lösungsmittel auf Basis von Estern wie Ethylacetat, Butylacetat, Allylacetat und Celluloseacetat und Lösungsmittel auf Basis von Ketonen wie Methylethylketon, Methylisobutylketon und Diisobutylketon sowie Aceton und Mischungen aus mindestens zwei der vorgenannten Lösungsmittel
sowie weitere in Kleb- und Dichtstoffen eingesetzte Substanzen.

Als weitere Komponenten können die erfindungsgemäßen Kleb- oder Dichtstoffe außer den erfindungsgemäß zu verwendenden Cyclohexanpolycarbonsäure-Derivaten zusätzlich einen oder mehrere weitere handelsübliche Weichmacher enthalten, beispielsweise Glycerintriacetat, Phthalsäure-C₄-bis C₁₃-dialkylester, Adipinsäure-C₄-bis C₁₃-dialkylester, Sebacinsäure-C₄-bis C₁₃-dialkylester, Pyromellithsäure-C₄- bis C₁₃-trialkylester, Benzoesäureester, Zitronensäureester, C₁₀- bis C₂₁-Alkansulfonsäurephenylester und/oder polymere Weichmacher auf Basis von Diol-Estern aliphatischer Dicarbonsäuren, die Adipinsäure, Glutarsäure oder Sebacinsäure. Im Falle des Zusatzes eines solchen zusätzlichen Weichmachers beträgt der Anteil dieser zusätzlichen Weichmacher bezogen auf die gesamte Menge an Weichmacher in den erfindungsgemäßen Kleb- oder Dichtstoffen im Allgemeinen nicht mehr als 30 Gew.-%, vorzugsweise nicht mehr als 10 Gew.-%. Im Allgemeinen werden die erfindungsgemäß zu verwendenden Cyclohexanpolycarbonsäureester, insbesondere die Cyclohexan-1,2-dicarbonsäure-C₄-bis-C₁₃-dialkylester, besonders bevorzugt der Cyclohexan-1,2-dicarbonsäurediisononylester, jedoch ohne Zusatz eines solchen zusätzlichen Weichmachers eingesetzt.

Der erfindungsgemäße Kleb- oder Dichtstoff enthält in einer Ausführungsform 1 bis 80 Gew.-% Füllstoffe, 0 bis 50 Gew.-% Wasser und/oder Lösemittel und 0 bis 20 Gew.-% Rheologiemodifizierer. Als bevorzugt ist eine Menge von 25 bis 40 Gew.-% Komponente (A), 5 bis 40 Gew.-% Komponente (B), 30 bis 55 Gew.-% Füllstoffe, 0 bis 10 Gew.-% Wasser und 1 bis 10 Gew.-% Rheologiemodifizierer anzusehen.

Ein weiterer Gegenstand der vorliegenden Erfindung ist die Verwendung des Kleb - oder Dichtstoffes als Ein- oder Zwei-Komponenten-System zur Herstellung von stoffschlüssigen Verbindungen zwischen Fügeteilen. Die erfindungsgemäße Zusammensetzung verfügt im ausgehärteten Zustand über eine hohe mechanische Festigkeit bei einer hohen Dehnbarkeit sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche eine schnelle Aushärtung erfordern und hohe Anforderungen an die Dehnbarkeit stellen bei gleichzeitig hohen Anforderungen an die Haftungseigenschaften und die Festigkeiten.

Geeignete Anwendungen sind bspw. die stoffschlüssigen Verbindungen zwischen Fügeteilen aus Beton, Mörtel, Glas, Metall, Keramik, Kunststoff und/oder Holz. In einer besonderen Ausführungsform handelt es sich bei den Fügeteilen zum einen um eine Oberfläche und zum anderen um einen Teppichbelag, einen PVC-Belag, ein Laminat, einen Gummibelag, einen Korkbelag, einen Linoleumbelag, einen Holzbelag, z.B. Parkett, Dielen, Schiffsboden oder Fliesen. Insbesondere kann die erfindungsgemäße Zusammensetzung für das verfugen von Natursteinen verwendet werden. Weiterhin können die erfindungsgemäßen Kleb- und Dichtstoffe für die Fertigung oder Reparatur von industriellen Gütern oder Konsumgütern eingesetzt werden sowie für das Abdichten oder Verkleben von Bauteilen im Hoch- oder Tiefbau sowie insbesondere im Sanitärbereich. Im speziellen kann es sich bei den Fügeteilen um Teile im Auto-, Trailer-, LKW-, Wohnwagen-, Zug-, Flugzeug-, Schiff- und Gleisbau handeln.
Ein Klebstoff für elastische Verklebungen in diesem Bereich wird bevorzugt in Form einer Raupe in einer im Wesentlichen runden oder dreieckigen Querschnittsfläche aufgetragen. Elastische Verklebungen im Fahrzeugbau sind bspw. das Ankleben von Teilen wie Kunststoffabdeckungen, Zierleisten, Flansche, Stossstangen, Führerkabinen oder andere Anbauteile an die lackierte Karosserie eines Transportmittels oder das Einkleben von Scheiben in die Karosserie.

Ein bevorzugter Anwendungsbereich im Hoch- und Tiefbau sind Hochbaufugen, Bodenfugen, Fugen nach dem Wasserhaushaltsgesetz, Anschlussfugen, Dehnfugen oder Dichtfugen im Sanitärbereich. In einer bevorzugten Ausführungsform wird die beschriebene Zusammensetzung als elastischer Kleb- oder Dichtstoff eingesetzt. Als elastischer Klebstoff weist die Zusammensetzung typischerweise eine Bruchdehnung von mindestens 5 % und als elastischer Dichtstoff von mindestens 300 % bei Raumtemperatur auf.

Für eine Anwendung der Zusammensetzung als Dichtstoff für bspw. Fugen im Hoch - oder Tiefbau oder für eine Anwendung als Klebstoff für elastische Verklebungen bspw. im Fahrzeugbau weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Fügeteil aufgetragen. Geeignete Methoden zum Auftragen sind bspw. die Applikation aus handelsüblichen Kartuschen, Schlauchbeuteln oder in Kartuschen eingelegten Schlauchbeuteln, welche manuell oder mittels Druckluft betrieben werden oder aus einem Fass oder Hobbock mittels einer Förderpumpe oder einer Exzenterschneckenpumpe, ggf. mittels eines Applikationsroboters.

Die Fügeteile können bei Bedarf vor dem Applizieren des Kleb- oder Dichtstoffes vorbehandelt werden. Derartige Vorbehandlungen umfassen insbesondere physikalische und/oder chemische Reinigungsverfahren bspw. Schleifen, Sandstrahlen, Bürsten oder dgl. oder Behandeln mit Reinigern oder Lösemitteln oder das Aufbringen eines Haftvermittlers, einer Haftvermittlerlösung oder eines Primers.

Bei der Anwendung als Klebstoff wird die erfindungsgemäße Zusammensetzung entweder auf das eine oder das andere Fügeteil oder auf beide Fügeteile appliziert. Danach werden die zu klebenden Teile gefügt, worauf der Klebstoff aushärtet. Es ist jeweils darauf zu achten, dass das Fügen der Teile innerhalb der sog. Offenzeit erfolgt, um zu gewährleisten, dass die beiden Fügeteile verlässlich miteinander verklebt werden.

Ein weiterer Gegenstand der vorliegenden Erfindung ist ein Verfahren zur Herstellung eines Kleb- oder Dichtstoffes, wobei a) zwischen 10 und 50 Gew.-% der Komponente (A) und die gesamte Komponente (B) und optional weitere Komponenten, insbesondere aus der Reihe Füllstoffe, Thixotropiermittel, Antioxidans und UV-Absorber, Lösungsmittel und Haftvermittler vorgelegt und gemischt werden, b) der Rest der Komponente (A) und optional weitere Komponenten, insbesondere aus der Reihe Füllstoffe, Thixotropiermittel, Antioxidans und UV-Absorber, Lösungsmittel und Haftvermittler zugesetzt und gemischt werden.

Für das erfindungsgemäße Herstellverfahren ist es als bevorzugt anzusehen, dass die eingesetzten Komponenten während des gesamten Prozesses, miteinander gemischt bzw. in Bewegung gehalten werden. Alternativ können die eingesetzten Komponenten auch erst am Ende des Herstellverfahrens miteinander gemischt werden. Als Mischeinrichtungen eignen sich alle dem Fachmann hierfür bekannten Vorrichtungen, insbesondere kann es sich um einen statischen Mischer, Planetenmischer, horizontalen Turbulentmischer (Fa. Drais), Planetendissolver bzw. Dissolver (Fa. PC Laborsysteme), Intensivmischer und/oder Extruder handeln.

Das erfindungsgemäße Verfahren zur Herstellung des Kleb- oder Dichtstoffes kann diskontinuierlich bspw. in einem Planetenmischer durchgeführt werden. Es ist aber auch möglich, das Verfahren kontinuierlich zu betreiben, wobei sich hierfür insbesondere Extruder als geeignet erwiesen haben. Hierbei wird das Bindemittel in den Extruder gegeben und flüssige sowie feste Zuschlagsstoffe zudosiert.

Insgesamt wurde überraschend gefunden, dass die Cyclohexanpolycarbonsäure-Derivate in den erfindungsgemäßen Kleb- oder Dichtstoffen weitgehend witterungsstabil sind. Mit den vorgeschlagenen Kleb- und Dichtstoffen enthaltend Cyclohexanpolycarbonsäure-Derivate werden Zusammensetzungen zur Verfügung gestellt, welche sich durch gute UV-, Temperatur- und Feuchtigkeitsbeständigkeit auszeichnen, ohne die weiteren anwendungstechnischen Eigenschaften negativ zu beeinflussen. Weiterhin besitzen die erfindungsgemäßen Cyclohexanpolycarbonsäure-Derivate eine niedrige Glasübergangstemperatur und sind somit aus anwendungstechnischer Sicht vorteilhaft zu verarbeiten. Ein weiterer Vorteil der vorgeschlagenen Kleb- und Dichtstoffe enthaltend Cyclohexanpolycarbonsäure-Derivate besteht in ihren ausgewogenen mechanischen Eigenschaften. Durch die Bereitstellung der erfindungsgemäßen Kleb- und Dichtstoffe konnte somit die gestellt Aufgabe in vollem Umfang gelöst werden.

Die nachfolgenden Beispiele verdeutlichen die Vorteile der vorliegenden Erfindung.

### Beispiel

### Beispiel 1

Das Bindemittel Acronal S 410 wird auf einen pH Wert von 8 eingestellt. Danach wird der Pigmentverteiler NL vorgelegt, Lutensol AO 89 zugegeben und miteinander vermischt. Im Anschluss werden der jeweilige Weichmacher, Kronos 2056 und Omyacarb 5 GU zugefügt und gemischt. Der Dichtstoff wird in Aluminium- oder Kunststoffkartuschen abgefüllt. Die jeweiligen Formulierungen sind in der Tabelle wiedergegeben, wobei die Zahlenangaben in den Spalten zwei bis vier Gewichtsteile sind.

### Beispiel 1 Formulierungen

| | Jayflex DIUP | Hexamoll DINCH | Mesamoll | Jayflex DIDP | Gew.-% |
|---|---|---|---|---|---|
| Acronal S 410 pH 8 | 256,00 | 256,00 | 256,00 | 256,00 | 32,00 |
| Pigmentverteiler NL | 4,80 | 4,80 | 4,80 | 4,80 | 0,60 |
| Lutensol AO 89 | 2,40 | 2,40 | 2,40 | 2,40 | 0,30 |
| Weichmacher | 80,00 | 80,00 | 80,00 | 80,00 | 10,00 |
| Kronos 2056 | 12,00 | 12,00 | 12,00 | 12,00 | 1,50 |
| Omyacarb 5 GU | 444,80 | 444,80 | 444,80 | 444,80 | 55,60 |
| | | | | | |
| Gesamt | 800,00 | 800,00 | 800,00 | 800,00 | 100,00 |

| | | | | | |
|---|---|---|---|---|---|
| Acronal S 410: Acrylat Dispersion der BASF SE Pigmentverteiler NL: Polyacrylsäure Natriumsalz in Wasser der BASF SE Lutensol AO 89: Fettalkoholethoxylat, in Wasser der BASF SE Jayflex DIUP: Diisoundecylphthalat der Exxon Mobil Corporation Jayflex DIDP: Diisodecylphthalat der Exxon Mobil Corporation Hexamoll DINCH: Diisononylcyclohexan-1,2-dicarboxylat der BASF SE Mesamoll: Alkansulfonsäurephenylester der Lanxess Deutschland GmbH Omyacarb 5 GU: gemahlene Kreide der Omya Inc. Kronos 2056: Titandioxid der KRONOS INTERNATIONAL, Inc. | | | | | |

### Ergebnisse Beispiel 1:

| | Jayflex DIUP | Hexamoll DINCH | Mesamoll | Jayflex DIDP |
|---|---|---|---|---|
| Zugfestigkeit nach 7 Tagen Lagerung bei 20°C: | | | | |
| Dehnung % (DIN 53504) | 98,98 | 107,95 | 69,09 | 96,67 |
| Zugfestigkeit N/mm² (DIN 53504) | 0,73 | 0,68 | 0,54 | 0,73 |
| Kraft-100% N/mm² (DIN 53504) | 0,68 | 0,65 | / | 0,75 |
| Glasübergangstemperatur (°C)* | -44,21 | -69,11 | -43,22 | -51,02 |

| | | | | |
|---|---|---|---|---|
| * Bestimmt mittels dynamischer Differenzkalorimetrie (DSC) im Temperaturbereich von -120°C bis 50°C mit einer Heizrate von 20 K/min und einer N₂-Durchflußrate von 50 ml/min. | | | | |

Wie den Beispielen zu entnehmen ist, kann durch die Zugabe von Hexamoll DINCH die Glasübergangstemperatur gegenüber der Verwendung von herkömmlichen Phthalaten wie z.B. DIUP im Kleb- und Dichtstoff vermindert werden.

## Patentansprüche

1. Kleb- oder Dichtstoff enthaltend
(A) 10 bis 90 Gew.-% mindestens einer Verbindung ausgewählt aus der Gruppe der Polyharnstoffe, Polyacrylate und Polysulfide und
(B) 1 bis 50 Gew.-% mindestens eines Cyclohexanpolycarbonsäure-Derivates, wobei der Kteb- oder Dichtstoff kein C₄- bis C₈-Alkylterephthalat enthält.

2. Kleb- oder Dichtstoff nach Anspruch 1, **dadurch gekennzeichnet, dass** dieser mindestens eine der folgenden weiteren Komponenten enthält
1 bis 80 Gew.-% Füllstoffe
0 bis 50 Gew.-% Wasser und/oder Lösemittel
0 bis 20 Gew.-% Rheologiemodifizierer.

3. Kleb- oder Dichtstoff nach Anspruch 1 oder 2, **dadurch gekennzeichnet, dass** die Komponente (B) mindestens ein Cyclohexanpolycarbonsäure-Derivaten der Formel (I), 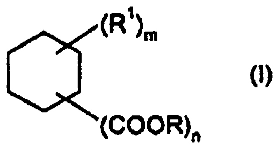 worin
R¹ ein Substituent am gesättigten Cyclohexanring ist und für eine C₁-C₁₀-Akyl - oder C₃-C₈-Cycloalkyl-Gruppe steht,
m für 0, 1, 2, 3 oder 4 steht,
n für 2, 3 oder 4 steht, und
R für eine C₁-C₃₀Alkyl, C₁-C₃₀-Alkoxy, C₃-C₈-Cycloalkyl, C₆-C₃₀-Arylphenyl oder C₁-C₃₀-Alkyl-Cycloalkyl-Gruppe steht, wobei mindestens ein Rest R für C₁-C₃₀-Alkyl, C₁-C₃₀-Alkoxy- oder C₃-C₈-Cycloalkyl-Gruppe steht, enthält.

4. Kleb- oder Dichtstoff nach einem der Ansprüche 1 bis 3, **dadurch gekennzeichnet, dass** die Komponente (B) Cyclohexan-1,2-dicarbonsäuredi(isononyl)ester ist.

5. Kleb- oder Dichtstoff nach einem der Ansprüche 1 bis 4, **dadurch gekennzeichnet, dass** als weitere Komponenten Hilfs- und Zusatzstoffe, Dispergiermittel. Filmbildehilfsmittel, Pigmente, Rheologiehilfsmittel, Wasserfänger, Haftvermittler, Katalysatoren, Licht- und Alterungsschutzmittel, Flammschutzmittel und/oder Biozide enthalten sind.

6. Kleb- oder Dichtstoff nach einem der Ansprüche 1 bis 5, **dadurch gekennzeichnet, dass** es sich um ein Einkomponentensystem handelt.

7. Kleb- oder Dichtstoff nach einem der Ansprüche 1 bis 5, **dadurch gekennzeichnet, dass** es sich um ein Zweikomponentensystem handelt

8. Verfahren zur Herstellung eines Kleb- oder Dichtstoffes nach einem der Ansprüche 1 bis 7, **dadurch gekennzeichnet, dass**
a) zwischen 30 und 50 Gew.-% der Komponente (A) und die gesamte Komponente (B) und optional weitere Komponenten vorgelegt und gemischt werden,
b) der Rest der Komponente (A) und optional weitere Komponenten, zugesetzt und gemischt werden.

9. Verfahren zur Herstellung eines Kleb- oder Dichtstoffes nach Anspruch 8, **dadurch gekennzeichnet, dass** das Verfahren diskontinuierlich durchgeführt wird.

10. Verfahren zur Herstellung eines Kleb- oder Dichtstoffes nach Anspruch 8, **dadurch gekennzeichnet, dass** das Verfahren kontinuierlich durchgeführt wird.

11. Verwendung des Kleb- oder Dichtstoffes nach einem der Ansprüche 1 bis 7, zur Herstellung von stoffschlüssigen Verbindungen zwischen Fügeteilen.

12. Verwendung des Kleb- oder Dichtstoffes nach Anspruch 11, zur Herstellung von stoffschlüssigen Verbindungen zwischen Fügetellen aus Beton, Mörtel, Glas, Metall, Keramik, Kunststoff und/oder Holz.

13. Verwendung des Kleb- oder Dichtstoffes nach einem der Ansprüche 11 oder 12, **dadurch gekennzeichnet, dass** es sich bei den Fügeteilen zum einen um eine Oberfläche und zum anderen um einen Teppich-Belag, einen PVC-Belag, ein Laminat, einen Gummi-Belag, einen Kork-Belag, einen Linoleum-Belag, einen Holz-Belag oder Fließen handelt.

14. Verwendung des Kleb- oder Dichtstoffes nach einem der Ansprüche 11 oder 12, **dadurch gekennzeichnet, dass** es sich bei der stoffschlüssigen Verbindung um eine Hochbaufuge, eine Dehnfuge, eine Bodenfuge, Fassadenfuge, Gebäudetrennfugen, Anschlussfugen, Verglasung, Fensterverglasung, Structural Glazing, Dachverglasung, Fensterversiegelung oder eine Dichtfuge im Sanitärbereich handelt.

15. Verwendung des Kleb- oder Dichtstoffes nach einem der Ansprüche 11 oder 12, **dadurch gekennzeichnet, dass** es sich bei den Fügeteilen um Teile im Elektro-, Maschinen-, Auto-, LKW-, Wohnwagen-, Zug-, Trailer-, Flugzeug-, Schiff-, und Gleisbau handelt.

## Claims

1. Adhesive or sealant comprising
(A) 10% to 90% by weight of at least one compound selected from the group consisting of polyureas, polyacrylates and polysulphides and
(B) 1% to 50% by weight of at least one cyclohexanepolycarboxylic acid derivative, the adhesive or sealant containing no C₄ to C₈ alkyl terephthalate.

2. Adhesive or sealant according to Claim 1, **characterized in that** it comprises at least one of the following further components:
1% to 80% by weight of fillers
0% to 50% by weight of water and/or solvent
0% to 20% by weight of rheology modifiers.

3. Adhesive or sealant according to Claim 1 or 2, **characterized in that** component (B) comprises at least one cyclohexanepolycarboxylic acid derivative of the formula (I), 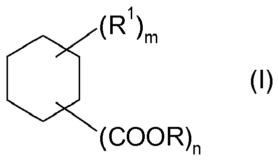 in which
R¹ is a substituent on the saturated cyclohexane ring and is a C₁-C₁₀ alkyl or C₃-C₈ cycloalkyl,
m is 0, 1, 2, 3 or 4,
n is 2, 3 or 4, and
R is a C₁-C₃₀ alkyl, C₁-C₃₀ alkoxy, C₃-C₈ cycloalkyl, C₆-C₃₀ arylphenyl or C₁-C₃₀ alkyl-cycloalkyl group, with at least one radical R being C₁-C₃₀ alkyl, C₁-C₃₀ alkoxy or C₃-C₈ cycloalkyl group.

4. Adhesive or sealant according to any of Claims 1 to 3, **characterized in that** component (B) is cyclohexane-1,2-dicarboxylic acid di(isononyl) ester.

5. Adhesive or sealant according to any of Claims 1 to 4, **characterized in that** further components included are auxiliaries and additives, dispersants, film-forming assistants, pigments, rheological assistants, water scavengers, adhesion promoters, catalysts, light stabilizers, ageing inhibitors, flame retardants and/or biocides.

6. Adhesive or sealant according to any of Claims 1 to 5, **characterized in that** it is a one-component system.

7. Adhesive or sealant according to any of Claims 1 to 5, **characterized in that** it is a two-component system.

8. Process for preparing an adhesive or sealant according to any of Claims 1 to 7, **characterized in that**
a) between 30% and 50% by weight of component (A) and
all of component (B) and optionally further components
are introduced and mixed,
b) the remainder of component (A) and optionally further components
are added and mixed.

9. Process for preparing an adhesive or sealant according to Claim 8, **characterized in that** the process is carried out discontinuously.

10. Process for preparing an adhesive or sealant according to Claim 8, **characterized in that** the process is carried out continuously

11. Use of the adhesive or sealant according to any of Claims 1 to 7 for producing material bonds between parts to be joined.

12. Use of the adhesive or sealant according to Claim 11 for producing material bonds between parts to be joined that are made of concrete, mortar, glass, metal, ceramic, plastic and/or wood.

13. Use of the adhesive or sealant according to either of Claims 11 and 12, **characterized in that** the parts to be joined are firstly a surface and secondly a covering in the form of a carpet, PVC, a laminate, rubber, cork, linoleum, wood or tiles.

14. Use of the adhesive or sealant according to either of Claims 11 and 12, **characterized in that** the material bond is a construction joint, an expansion joint, a flooring joint, a facade joint, building partition joints, flashing joints, glazing, window glazing, structural glazing, roof glazing, window sealing or a sealed joint in the sanitary sector.

15. Use of the adhesive or sealant according to either of Claims 11 and 12, **characterized in that** the parts to be joined are parts in electrical, mechanical, automotive, lorry, caravan, train, trailer, aircraft, watercraft and railway construction.

## Revendications

1. Matière adhésive ou d'étanchéité, contenant
(A) 10 à 90 % en poids d'au moins un composé choisi dans le groupe des polyurées, polyacrylates et polysulfures et
(B) 1 à 50 % en poids d'au moins un dérivé d'acide cyclohexanepolycarboxylique,
la matière adhésive ou d'étanchéité ne contenant pas de téréphtalate d'alkyle en C₄-C₈.

2. Matière adhésive ou d'étanchéité selon la revendication 1, **caractérisée en ce qu'**elle contient au moins l'un des autres composants suivants
1 à 80 % en poids de charges
0 à 50 % en poids d'eau et/ou de solvant
0 à 20 % en poids de modificateur de rhéologie.

3. Matière adhésive ou d'étanchéité selon la revendication 1 ou 2, **caractérisée en ce que** le composant (B) contient au moins un dérivé d'acide cyclohexanepolycarboxylique de formule (I), 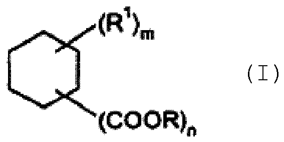 dans laquelle
R¹ est un substituant sur le cycle cyclohexane et représente un groupe alkyle en C₁-C₁₀ ou cycloalkyle en C₃-C₈,
m représente 0, 1, 2, 3 ou 4,
n représente 2, 3 ou 4, et
R représente un groupe alkyle en C₁-C₃₀, alcoxy en C₁-C₃₀, cycloalkyle en C₃-C₈, aryl(C₆-C₃₀)phényle ou alkyl(C₁-C₃₀)-cycloalkyle, au moins un radical R représentant un groupe alkyle en C₁-C₃₀, alcoxy en C₁-C₃₀ ou cycloalkyle en C₃-C₈.

4. Matière adhésive ou d'étanchéité selon l'une quelconque des revendications 1 à 3, **caractérisée en ce que** le composant (B) est le cyclohexane-1,2-dicarboxylate de di(isononyle).

5. Matière adhésive ou d'étanchéité selon l'une quelconque des revendications 1 à 4, **caractérisée en ce que** des adjuvants et additifs, des dispersants, des adjuvants filmogènes, des pigments, des adjuvants de rhéologie, des agents déshydratants, des promoteurs d'adhérence, des catalyseurs, des photoprotecteurs et agents antivieillissement, des agents ignifuges et/ou des biocides sont contenus comme autres composants.

6. Matière adhésive ou d'étanchéité selon l'une quelconque des revendications 1 à 5, **caractérisée en ce qu'**il s'agit d'un système monocomposant.

7. Matière adhésive ou d'étanchéité selon l'une quelconque des revendications 1 à 5, **caractérisée en ce qu'**il s'agit d'un système bicomposant.

8. Procédé pour la préparation d'une matière adhésive ou d'étanchéité selon l'une quelconque des revendications 1 à 7, **caractérisé en ce que**
a) on dispose au préalable et mélange entre 30 et 50 % en poids du composant (A) et la totalité du composant (B) et d'autres composants en option,
b) on ajoute et mélange le reste du composant (A) et d'autres composants en option.

9. Procédé pour la préparation d'une matière adhésive ou d'étanchéité selon la revendication 8, **caractérisé en ce que** le procédé est effectué en mode discontinu.

10. Procédé pour la préparation d'une matière adhésive ou d'étanchéité selon la revendication 8, **caractérisé en ce que** le procédé est effectué en continu.

11. Utilisation de la matière adhésive ou d'étanchéité selon l'une quelconque des revendications 1 à 7, pour la production d'assemblages réalisés par adhérence entre des pièces à joindre.

12. Utilisation de la matière adhésive ou d'étanchéité selon la revendication 11, pour la production d'assemblages réalisés par adhérence entre des pièces à joindre en béton, mortier, verre, métal, céramique, matière plastique et/ou bois.

13. Utilisation de la matière adhésive ou d'étanchéité selon la revendication 11 ou 12, **caractérisée en ce que** les pièces à joindre consistent d'une part en une surface et d'autre part en une moquette, un revêtement en PVC, un stratifié, un revêtement en caoutchouc, un revêtement en liège, un revêtement en linoléum, un revêtement en bois, ou des carreaux.

14. Utilisation de la matière adhésive ou d'étanchéité selon la revendication 11 ou 12, **caractérisée en ce que** l'assemblage par adhérence consiste en un joint de bâtiment, un joint de dilatation, un joint de sol, un joint de façade, des joints de séparation de bâtiment, des joints de raccordement, un vitrage, un vitrage de fenêtre, un structural glazing, un vitrage en toiture, un scellement de fenêtre ou un joint d'étanchéité dans le domaine sanitaire.

15. Utilisation de la matière adhésive ou d'étanchéité selon la revendication 11 ou 12, **caractérisée en ce que** les pièces à joindre consistent en des pièces dans la construction électrique, de machines, d'automobiles, de camions, d'autocaravanes, de trains, de remorques, d'aéronefs, de bateaux et de voies ferrées.
